# EUROPEAN PATENT APPLICATION

(11) **EP 4 491 320 A1**
(43) Date of publication of application: **15.01.2025**
(21) Application number: 22930857.2
(22) Date of filing: 10.03.2022
(51) Int. Cl.: B23K 26/364, B23K 26/064, B23K 26/067, B23K 26/082

(54) **PROCESSING APPARATUS**

(71) Applicant: NIKON CORPORATION, Tokyo 140-8601 (JP)
(72) Inventor: KAWABE, Yoshio, Tokyo 140-8601 (JP); OZAWA, Toshihiko, Tokyo 140-8601 (JP); NOMURA, Tatsushi, Tokyo 140-8601 (JP)
(74) Representative: Hoffmann Eitle
(86) International application number: PCT/JP2022/010658
(87) International publication number: WO 2023/170876

(57) **Abstract**

A processing apparatus is a processing apparatus that performs a riblet processing on a surface of an object by using light from a light source, and that includes: an interference optical system that forms an interference fringe on the surface of the object by irradiating the object with processing lights, which are generated by dividing the light from the light source, from different incident directions, respectively; a movement apparatus that moves the processing lights, which propagate from a terminal optical element of the interference optical system toward the object, relative to the terminal optical element in a direction intersecting an optical axis of the interference optical system; and an optical characteristic change apparatus that changes a characteristic of at least one processing light of the processing lights in accordance with a movement of the processing lights.

## Description

### Technical Field

The present invention relates to a processing apparatus that processes an object, for example.

### Background Art

A Patent Literature 1 discloses a processing apparatus that is configured to process an object so that a riblet is formed on a surface of the object such as an airframe of an airplane. This type of processing apparatus is required to properly process the object.

### Citation List

### Patent Literature

Patent Literature 1: US6,545,248B

### Summary of Invention

A first aspect provides a processing apparatus that performs a riblet processing on a surface of an object by using light from a light source, wherein the processing apparatus includes: an interference optical system that forms an interference fringe on the surface of the object by irradiating the object with a plurality of processing lights, which are generated by dividing the light from the light source, from different incident directions, respectively; a movement apparatus that moves the plurality of processing lights, which propagate from a terminal optical element of the interference optical system toward the object, relative to the terminal optical element in a direction intersecting an optical axis of the interference optical system; and an optical characteristic change apparatus that changes a characteristic of at least one processing light of the plurality of processing lights in accordance with a movement of the plurality of processing lights.

A second aspect provides a processing apparatus that performs a riblet processing on a surface of an object by using light from a light source, wherein the processing apparatus includes: an interference optical system that forms an interference fringe in an irradiated area by irradiating the irradiated area on the surface of the object with a plurality of processing lights, which are generated by dividing the light from the light source; a movement apparatus that moves the irradiated area in a direction intersecting an optical axis of the interference optical system; and an optical characteristic change apparatus that changes a characteristic of at least one processing light of the plurality of processing lights in accordance with a movement of the irradiated area.

A third aspect provides a processing apparatus that performs a riblet processing on a surface of an object by using light from a light source, wherein the processing apparatus includes: an interference optical system that forms an interference fringe in an overlapped area by irradiating the overlapped area on the surface of the object with first processing light and second processing light of a plurality of processing lights, which are generated by dividing the light from the light source; a movement apparatus that moves the overlapped area in a direction intersecting an optical axis of the interference optical system; and an optical characteristic change apparatus that changes a characteristic of at least one processing light of the plurality of processing lights, the movement apparatus moves the overlapped area from a first area to a second area on the surface of the object, the first processing light with which the first area is irradiated has a first characteristic, the first processing light with which the second area is irradiated has a second characteristic that is different from the first characteristic, a change of the first processing light from the first characteristic to the second characteristic is performed by the optical characteristic change apparatus.

A fourth aspect provides a processing apparatus that performs a riblet processing on a surface of an object by using light from a light source, wherein the processing apparatus includes: an interference optical system that forms an interference fringe in an irradiated area by irradiating the irradiated area on the surface of the object with a plurality of processing lights, which are generated by dividing the light from the light source; and an interference fringe movement apparatus that moves a bright part and a dark part of the interference fringe in the irradiated area by changing a phase of at least one processing light of the plurality of processing lights.

A fifth aspect provides a processing apparatus that performs a riblet processing on a surface of an object by using light from a light source, wherein the processing apparatus includes: an interference optical system that forms an interference fringe in an irradiated area by irradiating the irradiated area on the surface of the object with a plurality of processing lights, which are generated by dividing the light from the light source; and an optical characteristic change apparatus that changes a phase of at least one processing light of the plurality of processing lights, a bright part and a dark part of the interference fringe are moved in the irradiated area by using the optical characteristic change apparatus to change the phase of at least one processing light of the plurality of processing lights.

### Brief Description of Drawings

[FIG. 1] FIG. 1 is a cross-sectional view that illustrates an entire configuration of a processing system in a first example embodiment.
[FIG. 2] FIG. 2 is a system configuration diagram that illustrates a system configuration of the processing system in the first example embodiment.
[FIG. 3] FIG. 3A is a perspective view that illustrates a riblet structure, FIG. 3B is a cross-sectional view that illustrates the riblet structure (a III-III' cross-sectional view in FIG. 3A), and FIG. 3C is a top view that illustrates the riblet structure.
[FIG. 4] FIG. 4 is a plan view that illustrates one example of an interference fringe.
[FIG. 5] Each of FIG. 5A and FIG. 5B is a plan view that illustrates a movement of an interference area.
[FIG. 6] FIG. 6 is a cross-sectional view that illustrates a configuration of a processing optical system in the first example embodiment.
[FIG. 7] FIG. 7 is a cross-sectional view that illustrates a configuration of an ultrasonic light modulator.
[FIG. 8] FIG. 8 illustrates a pattern of an ultrasonic standing wave generated in an ultrasonic propagation path of an acousto-optical medium and a pattern of the interference fringe IS formed on a workpiece when the ultrasonic standing wave is generated, and illustrates intensities of two processing lights.
[FIG. 9] FIG. 9 illustrates a method of forming the riblet structure by forming the interference fringe twice.
[FIG. 10] FIG. 10 is a cross-sectional view that illustrates a configuration of a modified example of the ultrasonic light modulator.
[FIG. 11] FIG. 11 is a cross-sectional view that illustrates a configuration of a processing optical system in a second example embodiment.
[FIG. 12] FIG. 12 is a cross-sectional view that illustrates the processing optical system in the second example embodiment that moves the interference area on the workpiece along a pitch direction of the interference fringe.
[FIG. 13] FIG. 13 is a cross-sectional view that illustrates the processing optical system in the second example embodiment that moves the interference area on the workpiece along the pitch direction of the interference fringe.
[FIG. 14] FIG. 14 illustrates, together with a brightness and darkness of the interference fringe formed in the interference area, the interference area that moves among three workpiece areas distributed on a surface of the workpiece W in sequence.
[FIG. 15] FIG. 15 is a graph that illustrates a relationship between a distance from an optical axis of a fsinθ lens to a center of the interference area and a difference in phase between two processing lights.
[FIG. 16] FIG. 16 is a graph that illustrates the relationship between the distance from the optical axis of the fsinθ lens to the center of the interference area and the difference in phase between the two processing lights.
[FIG. 17] FIG. 17 is a perspective view that illustrates a configuration of a processing optical system in a third example embodiment.
[FIG. 18] Each of FIG. 18A and FIG. 18B a cross-sectional view that illustrates the processing optical system in the third example embodiment that moves the interference area on the workpiece along an extending direction of the interference fringe.
[FIG. 19] FIG. 19 is a cross-sectional view that illustrates a configuration of a processing optical system in a fourth example embodiment.
[FIG. 20] FIG. 20 is a cross-sectional view that illustrates the processing optical system in the fourth example embodiment that moves the interference area on the workpiece along the pitch direction of the interference fringe.
[FIG. 21] FIG. 21 is a cross-sectional view that illustrates the processing optical system in the fourth example embodiment that moves the interference area on the workpiece along the pitch direction of the interference fringe.
[FIG. 22] FIG. 22 is a cross-sectional view that illustrates a configuration of a processing optical system in a fifth example embodiment.
[FIG. 23] FIG. 23 is a cross-sectional view that illustrates a configuration of a processing optical system in a sixth example embodiment.
[FIG. 24] FIG. 24 is a cross-sectional view that illustrates a configuration of a processing optical system in a seventh example embodiment.
[FIG. 25] FIG. 25 is a cross-sectional view that illustrates a configuration of a processing optical system in an eighth example embodiment.
[FIG. 26] FIG. 26 is a cross-sectional view that schematically illustrates one example of a configuration of a mask included in the processing optical system in the eighth example embodiment.
[FIG. 27] FIG. 27 is a cross-sectional view that schematically illustrates another example of a configuration of a mask included in the processing optical system in the eighth example embodiment.
[FIG. 28] FIG. 28 illustrates an intensity of interference light and a groove structure formed by the interference light in a case where the mask illustrated in FIG. 26 is used.
[FIG. 29] FIG. 29 illustrates the intensity of the interference light and the groove structure formed by the interference light in a case where the mask illustrated in FIG. 27 is used.
[FIG. 30] FIG. 30 is a cross-sectional view that illustrates another example of the configuration of the processing optical system in the eighth example embodiment.
[FIG. 31] FIG. 31 is a cross-sectional view that illustrates a configuration of a processing optical system in a ninth example embodiment.
[FIG. 32] FIG. 32 is a cross-sectional view that illustrates the configuration of the processing optical system in the ninth example embodiment.
[FIG. 33] FIG. 33 is a cross-sectional view that illustrates a configuration of a wedge-shaped prism included in the processing optical system in the ninth example embodiment.
[FIG. 34] FIG. 34 is a cross-sectional view that illustrates another example of the configuration of the processing optical system in the ninth example embodiment.
[FIG. 35] FIG. 35 is a cross-sectional view that illustrates another example of the configuration of the processing optical system in the ninth example embodiment.
[FIG. 36] FIG. 36 is a cross-sectional view that illustrates another example of the configuration of the processing optical system in the ninth example embodiment.
[FIG. 37] Each of FIG. 37A to FIG. 37E is a cross-sectional view that illustrates the moving interference area.

### Example Embodiments

Next, with reference to drawings, an example embodiment of a processing apparatus will be described. **In** the below described description, the example embodiment of the processing apparatus will be described by using a processing system SYS that is configured to process a workpiece W that is one example of an object. However, the present invention is not limited to the below described embodiment.

Moreover, in the below described description, a positional relationship of various components that constitute the processing system SYS will be described by using an XYZ rectangular coordinate system that is defined by an X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. In this case, a counterclockwise rotational direction around the X-axis is a +θX direction, a clockwise rotational direction around the X-axis is a -θX direction, a counterclockwise rotational direction around the Y-axis is a +θY direction, a clockwise rotational direction around the Y-axis is a -θY direction, a counterclockwise rotational direction around the Z-axis is a +θZ direction, and a clockwise rotational direction around the Z-axis is a - θZ direction. Here, the Z-axis direction may be a gravity direction. An XY plane may be a horizontal direction.

### (1) Processing System SYS in First Example Embodiment

Firstly, the processing system SYS in a first example embodiment will be described. In the below-described description, the processing system SYS in the first example embodiment is referred to as the "processing system SYSa".

### (1-1) Configuration of Processing System SYSa

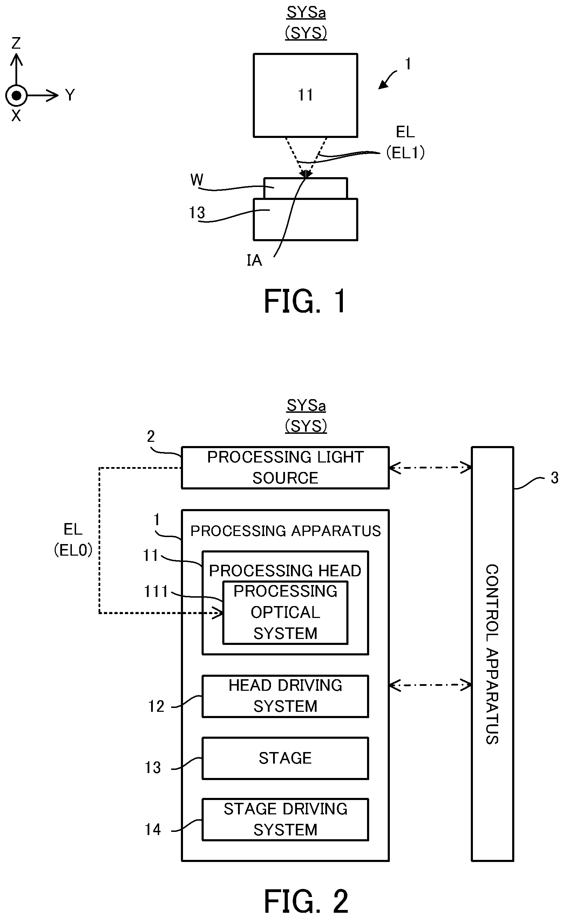

Firstly, with reference to FIG. 1 and FIG. 2, a configuration of the processing system SYSa in the first example embodiment will be described. FIG. 1 is a cross-sectional view that schematically illustrates the configuration of the processing system SYSa in the first example embodiment. FIG. 2 is a system configuration diagram that illustrates a system configuration of the processing system SYSa in the first example embodiment.

As illustrated in FIG. 1 and FIG. 2, the processing system SYSa includes a processing apparatus 1, a processing light source 2 (not illustrated in FIG. 1), and a control apparatus 3 (not illustrated in FIG. 1).

The processing apparatus 1 is configured to process the workpiece W, which is a processing target object (it may be referred to as a base member), under the control of the control apparatus 3. The workpiece W may be a metal, may be an alloy (for example, a duralumin and the like), may be a semiconductor (for example, a silicon), may be a resin, may be a composite material such as a CFRP (Carbon Fiber Reinforced Plastic), a painting material (as one example, a painting layer that coats a base material), may be a glass or may be an object that is made from any other material, for example.

A surface of the workpiece W may be coated with a coat of material that is different from the workpiece W. **In** this case, a surface of the coat coating the surface of the workpiece W may be a surface that is to be processed by the processing apparatus 1. Even in this case, the processing apparatus 1 may be considered to process the workpiece W (namely, process the workpiece W coated with the coat).

The processing apparatus 1 irradiates the workpiece W with processing light EL in order to process the workpiece W. The processing light EL may be any type of light, as long as the workpiece W is processed by irradiating the workpiece W with it. **In** the first example embodiment, an example in which the processing light EL is laser light will be described, however, the processing light EL may be light that is different from the laser light. Furthermore, a wavelength of the processing light EL may be any wavelength, as long as the workpiece W is processed by irradiating the workpiece W with it. For example, the processing light EL may be visible light, or may be invisible light (for example, at least one of infrared light, ultraviolet light, extreme ultraviolet light, and the like). The processing light EL may include pulsed light (for example, pulsed light an ON time of which is equal to or shorter than pico-seconds). Alternatively, the processing light EL may not include the pulsed light. **In** other words, the processing light EL may be continuous light.

The processing light EL is transmitted from the processing light source 2, which generates the processing light EL, to the processing apparatus 1 through a non-illustrated light transmitting member (for example, at least one of an optical fiber, a lens, a mirror, and a diffraction optical element). This light transmitting member may be referred to as a light transmitting optical system. The processing apparatus 1 irradiates the workpiece W with the processing light EL supplied from the processing light source 2. **In** a case where the processing light EL is the laser light as described above, the processing light source 2 may include a laser light source (for example, a semiconductor laser such as a Laser Diode (LD)). The laser light source may include at least one of a fiber laser, a CO₂ laser, a YAG laser, an Excimer laser, and the like. However, in a case where the processing light EL is not the laser light, the processing light source 2 may include any light source (for example, at least one of a LED (Light Emitting Diode), a discharge lamp and the like).

The processing apparatus 1 may perform a subtractive manufacturing for removing a part of the workpiece W by irradiating the workpiece W with the processing light EL. For example, the processing apparatus 1 may performs the subtractive manufacturing for removing a part of the workpiece W by using a principle of a thermal processing. Specifically, when the surface of the workpiece W is irradiated with the processing light EL, an energy of the processing light EL is transmitted to an irradiated part of the workpiece W that is irradiated with the processing light EL and an vicinity part of the workpiece W that is in the vicinity of the irradiated part. When a heat caused by the energy of the processing light EL is transmitted, a material constituting the irradiated part and the vicinity part of the workpiece W is melted due to the heat caused by the energy of the processing light EL. The melted material spatters as liquid drop. Alternatively, the melted material evaporates due to the heat caused by the energy of the processing light EL. As a result, the irradiated part and the vicinity part of the workpiece W are removed. Incidentally, in a case where the thermal processing is performed, the processing light EL may include the pulsed light the ON time of which is equal to or longer than milli-seconds or the continuous light.

On the other hand, the processing apparatus 1 may perform the subtractive manufacturing for removing a part of the workpiece W by using a principle of non-thermal processing (for example, an ablation processing) depending on a characteristic of the processing light EL. Namely, the processing apparatus 1 may perform the non-thermal processing (for example, the ablation processing) on the workpiece W. For example, in a case where the light whose photon density (in other words, fluence) is high is used as the processing light EL, the material constituting the irradiated part and the vicinity part of the workpiece W instantly evaporates and spatters. Namely, the material constituting the irradiated part and the vicinity part of the workpiece W evaporates and spatters within a time sufficiently shorter than a thermal diffusion time of the workpiece W. In this case, the material constituting the irradiated part and the vicinity part of the workpiece W may be released from the workpiece W as at least one of ion, atom, radical, molecule, cluster, and solid piece. Incidentally in a case where the non-thermal processing is performed, the processing light EL may include the pulsed light the ON time of which is equal to or shorter than pico-seconds (alternatively, is equal to or shorter than nano-seconds or femto-seconds, in some case). In a case where the pulsed light the ON time of which is equal to or shorter than pico-seconds (alternatively, is equal to or shorter than nano-seconds or femto-seconds, in some case) is used as the processing light EL, the material constituting the irradiated part and the vicinity part of the workpiece W may sublimate without going through a molten state. Therefore, it is possible to process the workpiece W while reducing an effect of the heat caused by the energy of the processing light EL on the workpiece W as much as possible.

In the first example embodiment, the processing apparatus 1 may form a riblet structure RB on the surface of the workpiece W by performing the subtractive manufacturing. The processing for forming the riblet structure RB may be referred to as a riblet processing. Namely, the processing apparatus 1 may perform the riblet processing on the workpiece W.

The riblet structure RB may include a concave and convex structure by which a resistance (especially, at least one of a frictional resistance and a turbulent frictional resistance) of the surface of the workpiece W to fluid is reducible. Therefore, the riblet structure RB may be formed on the workpiece W having a member that is placed (in other words, located) in the fluid. In other words, the riblet structure RB may be formed on the workpiece W having a member that relatively moves relative to the fluid. Note that the fluid here means any medium (for example, at least one of gas and liquid) that flows relative to the surface of the workpiece W. For example, the medium may be referred to as the fluid in the case where the surface of workpiece W moves relative to the medium although the medium itself is static. Note that a state in which the medium is static may mean a state in which the medium does not move relative to a predetermined reference object (for example, a ground surface).

In a case where the riblet structure RB, which includes the structure by which the resistance (especially, at least one of the frictional resistance and the turbulent frictional resistance) of the surface of the workpiece W to the fluid is reducible, is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W. For example, a turbine blade that may be referred to as a rotor blade is an example of the workpiece W that relatively moves relative to the fluid. In a case where the riblet structure RB is formed on the turbine blade, the resistance that prevents the turbine blade from moving (typically, rotating) is reduced, and thereby an energy saving of an apparatus (for example, a turbine) using the turbine blade is achievable. Namely, it is possible to manufacture the environmentally preferable turbine blade (turbine).

Note that the riblet structure RB may be formed on the workpiece W that is different from the turbine blade. At least one of a turbine vane, which may be referred to as a static blade, a fan, an impeller, a propeller, and a pump is one example of the workpiece W on which the riblet structure RB is formed. The fan is a member (typically, a rotatable body) that is used in a blower or the like and that forms a flow of gas. The impeller is a member that is used in a pump and that is a rotational blade rotatable so as to generate force to pump (alternatively, suck) the fluid by the pump, for example. The propeller is a member (typically a rotatable body) that converts rotational force outputted from a prime mover including at least one of an engine and a motor into driving force for a movable object including at least one of an airplane, a ship, and the like, for example. A body (for example, an airframe or a hull) of the movable object including at least one of the airplane, the ship and so on is another example of the workpiece W on which the riblet structure RB is formed.

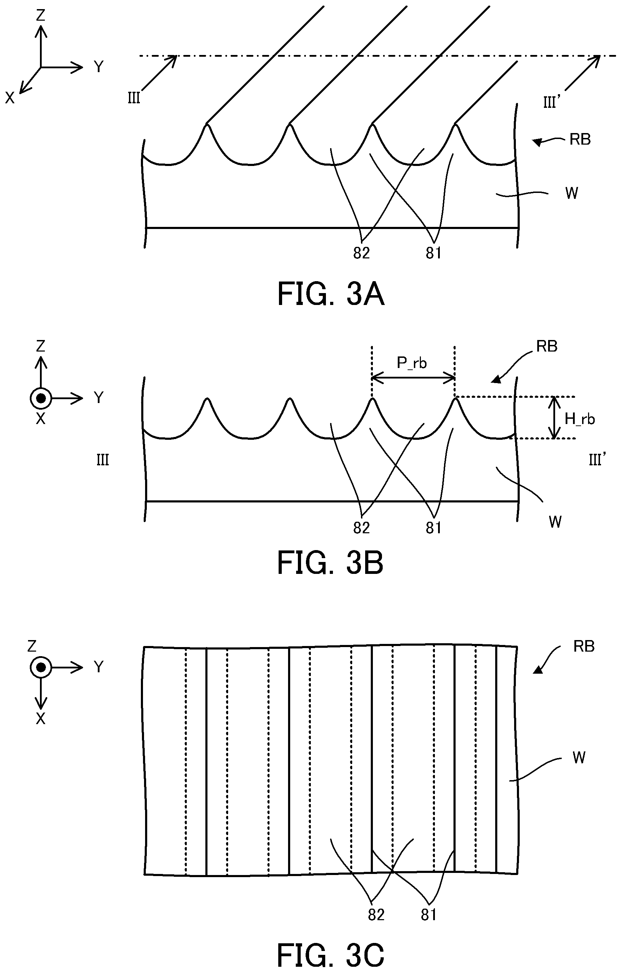

Here, with reference to FIG. 3A to FIG. 3B, the riblet structure RB will be described. FIG. 3A is a perspective view that illustrates the riblet structure RB, FIG. 3B is a cross-sectional view that illustrates the riblet structure RB (a III-III' cross-sectional view in FIG. 3A), and FIG. 3C is a top view that illustrates the riblet structure RB.

As illustrated in FIG. 3A to FIG. 3C, the riblet structure RB may include a structure in which a plurality of convex structures 81, each of which extends along a first direction that is along the surface of the workpiece W, are arranged along a second direction that is along the surface of the workpiece W and that intersects the first direction. Namely, the riblet structure RB may include a structure in which the plurality of convex structures 81, each of which is formed to extend along the first direction, are arranged along the second direction. In an example illustrated in FIG. 3A to FIG. 3C, the riblet structure RB includes a structure in which the plurality of convex structures 81, each of which extends along the X-axis direction, are arranged along the Y-axis direction.

The convex structure 81 is a structure that protrudes along a direction that intersects both of a direction along which the convex structure 81 extends and a direction along which the convex structures 81 are arranged. In the example illustrated in FIG. 3A to FIG. 3C, the convex structure 81 is a structure that protrudes along the Z-axis direction. Note that the convex structure 81 may include a protrusion-shaped structure that projects against the surface of the workpiece W. The convex structure 81 may include a convex-shaped structure that is convex with respect to the surface of the workpiece W. The convex structure 81 may include a mountain-shaped structure that is a peak relative to the surface of the workpiece W.

A groove structure 82, which is depressed relative to the surrounding thereof, is formed between adjacent convex structures 81. Thus, the riblet structure RB may include a structure in which a plurality of groove structures 82, each of which extends along the first direction that is along the surface of the workpiece W, are arranged along the second direction that is along the surface of the workpiece W and that intersects the first direction. Namely, the riblet structure RB may include a structure in which the plurality of groove structures 82, each of which is formed to extend along the first direction, are arranged along the second direction. In the example illustrated in FIG. 3A to FIG. 3C, the riblet structure RB includes a structure in which the plurality of groove structures 82, each of which extends along the X-axis direction, are arranged along the Y-axis direction. Note that the groove structure 82 may be referred to as a groove-shaped structure.

Incidentally, the convex structure 81 may be regarded as a structure that protrudes from the groove structure 82. The convex structure 81 may be regarded as a structure that forms at least one of a protrusion-shaped structure, a convex-shaped structure, and a mountain-shaped structure between two adjacent groove structures 82. The groove structure 82 may be regarded as a structure depressed from the convex structure 81. The groove structure 82 may be regarded as a structure that forms a groove-shaped structure between two adjacent convex structures 81.

A height H_rb of at least one of the plurality of convex structures 81 may be set to be a height determined based on a pitch P_rb of the convex structures 81. For example, the height H_rb of at least one of the plurality of convex structures 81 may be equal to or smaller than the pitch P_rb of the convex structures 81. For example, the height H_rb of at least one of the plurality of convex structures 81 may be equal to or smaller than a half of the pitch P_rb of the convex structures 81. As one example, the pitch P_rb of the convex structures 81 may be larger than 5 micrometers and smaller than 200 micrometers. In this case, the height H_rb of at least one of the plurality of convex structures 81 may be larger than 2.5 micrometers and smaller than 100 micrometers.

Again in FIG. 1 and FIG. 2, in order to process the workpiece W, the processing apparatus 1 includes a processing head 11, a head driving system 12, a stage 13, and a stage driving system 14.

The processing head 11 irradiates the workpiece W with processing light EL from the processing light source 2. In order to irradiate the workpiece W with the processing light EL, the processing head 11 includes a processing optical system 111. The processing head 11 irradiates the workpiece W with the processing light EL through the processing optical system 111.

In the first example embodiment, the processing optical system 111 may form the riblet structure RB on the surface of the workpiece W by forming interference fringe IS on the surface of the workpiece W. Specifically, the processing optical system 111 irradiates the workpiece W with a plurality of processing lights EL (in the example illustrated in FIG. 1, two processing lights EL), which are generated by dividing the processing light EL from the processing light source 2, from different incident directions, respectively. As a result, interference light is generated by an interference between the plurality of processing lights EL. In this case, the processing optical system 111 may be considered to substantially irradiate the workpiece W with the interference light generated by the interference between the plurality of processing lights EL. As a result, the interference fringe IS caused by the interference light is formed on the surface of the workpiece W. Incidentally, in the below-described description, the processing light EL generated by the processing light source 2 is referred to as "processing light EL0" and the processing light EL with which the workpiece W is irradiated by the processing optical system 111 is referred to as "processing light EL1" to distinguish these two lights from each other. The processing light EL1 generated by the processing optical system 111 dividing the processing light EL0 may be referred to as "divided light".

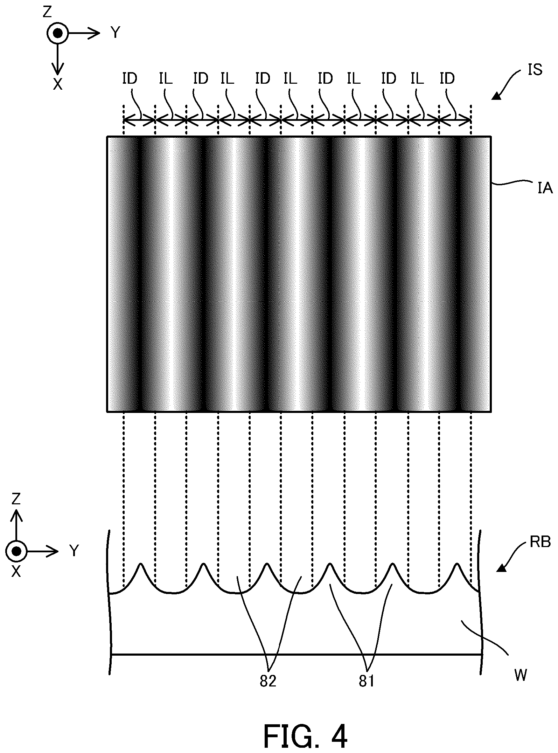

One example of the interference fringe IS is illustrated in FIG. 4. As illustrated in FIG. 4, the interference fringe IS may be fringe (a fringe pattern) including a bright part IL and a dark part ID. The bright part IL may include a part of the interference fringe IS at which a fluence is larger (namely, higher) than a predetermined amount. The bright part IL may include a part that is irradiated with light part, the fluence of which is larger than the predetermined amount, of the interference light forming the interference fringe IS. The dark part ID may include a part of the interference fringe IS at which the fluence is smaller (namely, lower) than the predetermined amount. The dark part ID may include a part that is irradiated with light part, the fluence of which is smaller than the predetermined amount, of the interference light forming the interference fringe IS. Moreover, the fluence in the bright part IL may be larger than the fluence in the dark part ID.

FIG.4 further illustrates a relationship between the interference fringe IS and the riblet structure RB. As illustrated in FIG. 4, the bright part IL may be used mainly to form the above-described groove structure 82. In this case, the processing optical system 111 may form the groove structure 82 included in the riblet structure RB on the surface of the workpiece W by forming the bright part IL included in the interference fringe IS on the surface of the workpiece W to remove a part of the workpiece W. The processing optical system 111 may form the groove structure 82 on the surface of the workpiece W by irradiating the surface of the workpiece W with the light part of the interference light forming the bright part IL to remove a part of the workpiece W. The processing optical system 111 may form the groove structure 82 on the surface of the workpiece W by using the processing light EL1 that reaches the bright part IL (namely, by using the light part of the processing light EL1 that reaches the bright part IL) to remove a part of the workpiece W. In this case, the interference fringe IS may include a fringe in which a plurality of bright parts IL, each of which extends along the direction in which the groove structure 82 extends (in the example illustrated in FIG. 4, the X-axis direction), are arranged along the direction in which the groove structures 82 are arranged (in the example illustrated in FIG. 4, the Y-axis direction). Namely, the interference fringe IS may include a fringe in which a plurality of bright parts IL, each of which extends along the direction in which the groove structure 82 extends (in the example illustrated in FIG. 4, the X-axis direction), are aligned along the direction in which the groove structures 82 are arranged (in the example illustrated in FIG. 4, the Y-axis direction).

As illustrated in FIG. 4, the dark parts ID may be used mainly to form the above-described convex structure 81. In this case, the processing optical system 111 may form the convex structure 81 included in the riblet structure RB on the surface of the workpiece W by forming the dark part ID included in the interference fringe IS to remove a part of the workpiece W (alternatively, not to remove a part of the workpiece W in some cases). The processing optical system 111 may form the convex structure 81 on the surface of the workpiece W by irradiating the surface of the workpiece W with the light part of the interference light forming the dark part ID to remove a part of the workpiece W. The processing optical system 111 may form the convex structure 81 on the surface of the workpiece W by using the processing light EL1 that reaches the dark part ID (namely, by using the light part of the processing light EL1 that reaches the dark part ID) to remove a part of the workpiece W. In this case, the interference fringe IS may include a fringe in which a plurality of dark parts ID, each of which extends along the direction in which the convex structure 81 extends (in the example illustrated in FIG. 4, the X-axis direction), are arranged along the direction in which the convex structures 81 are arranged (in the example illustrated in FIG. 4, the Y-axis direction). Namely, the interference fringe IS may include a fringe in which a plurality of dark parts ID, each of which extends along the direction in which the convex structure 81 extends (in the example illustrated in FIG. 4, the X-axis direction), are aligned along the direction in which the convex structures 81 are arranged (in the example illustrated in FIG. 4, the Y-axis direction).

In the first example embodiment, the processing optical system 111 is configured to move the interference fringe IS on the surface of the workpiece W. Incidentally, an interference area IA may be referred to as an irradiated area because the interference fringe IS is formed in the interference area IA by irradiating the interference area IA with the plurality of processing lights EL1. Moreover, the interference area IA may be referred to as an overlapped area or an overlapped irradiation area because the interference fringe IS is formed in the interference area IA by an overlapped irradiation of the interference area IA with the plurality of processing lights EL1.

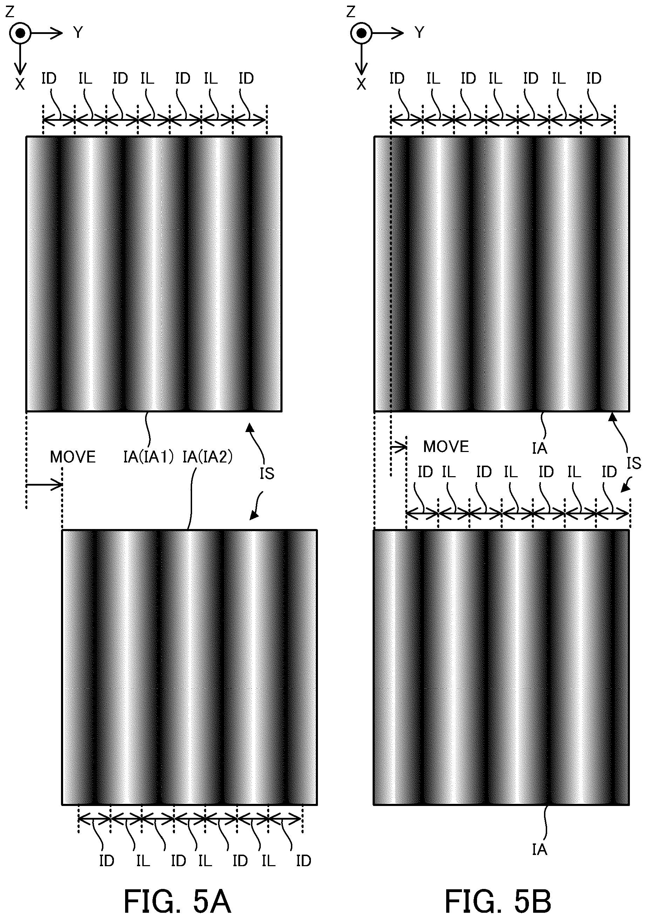

A movement of the interference fringe IS may include a movement of the interference area IA in which the interference fringe IS is formed, as illustrated in FIG. 5A. Namely, the movement of the interference fringe IS may include a change of a position of the interference area IA on the surface of the workpiece W. FIG. 5A illustrates an example in which the processing optical system 111 moves the interference area IA along a pitch direction of the interference fringe IS. However, the processing optical system 111 may move the interference area IA along an extending direction of the interference fringe IS. The pitch direction of the interference fringe IS may mean a direction along which the plurality of bright parts IL included in the interference fringe IS are arranged. The pitch direction of the interference fringe IS may mean a direction along which a plurality of dark parts ID included in the interference fringe IS are arranged. The pitch direction of the interference fringe IS may mean a direction intersecting the extending direction of the interference fringe IS. The extending direction of the interference fringe IS may mean a direction along which each of the plurality of bright parts IL included in the interference fringe IS extends. The extending direction of the interference fringe IS may mean a direction along which each of the plurality of dark parts ID included in the interference fringe IS extends. The extending direction of the interference fringe IS may mean a direction intersecting the pitch direction of the interference fringe IS.

In a case where the interference area IA moves, a phase of a brightness and darkness in the interference area IA1 (see FIG. 5A), which is the interference area IA before it moves, and a phase of the brightness and darkness in the interference area IA2 (see FIG. 5A), which is the interference area IA after it has moved to be located at a position that is different from that of the interference area IA1, may be aligned with each other or may not be aligned with each other. A state in which the phase of the brightness and darkness in the interference area IA1 and the phase of the brightness and darkness in the moved interference area IA2 are aligned with each other may include a state in which a phase of the bright part IL in the interference area IA1 and a phase of the bright part IL in the interference area IA2 are aligned with each other. The state in which the phase of the brightness and darkness in the interference area IA1 and the phase of the brightness and darkness in the interference area IA2 are aligned with each other may include a state in which a phase of the dark part ID in the interference area IA1 and a phase of the dark part ID in the interference area IA2 are aligned with each other. The state in which the phase of the bright part IL in the interference area IA1 and the phase of the bright part IL in the interference area IA2 are aligned with each other may include a state in which a position of the bright part IL of the interference fringe IS that has been virtually expanded is the same as a position of the bright part IL in the interference area IA2 by virtually expanding the interference fringe IS formed in the interference area IA1 to the interference area IA2 at the same pitch in a situation where the interference area IA1 and the interference area IA2 do not overlap with each other. A state in which the phase of the dark part ID in the interference area IA1 and the phase of the dark part ID in the interference area IA2 are aligned with each other may include a state in which a position of the dark part ID of the interference fringe IS that has been virtually expanded is the same as a position of the dark part ID in the interference area IA2 by virtually expanding the interference fringe IS formed in the interference area IA1 to the interference area IA2 at the same pitch in a situation where the interference area IA1 and the interference area IA2 do not overlap with each other. The state in which the phase of the bright part IL in the interference area IA1 and the phase of the bright part IL in the interference area IA2 are aligned with each other may include a state in which an interval between a first bright part IL formed at a position that is closest to the interference area IA2 in the interference area IA1 and a second bright part IL formed at a position that is closest to the interference area IA1 in the interference area IA2 is equal to the integral multiple of each of a pitch of the bright parts IL in the interference area IA1 and a pitch of the bright parts IL in the interference area IA2. The state in which the phase of the dark part ID in the interference area IA1 and the phase of the dark part ID in the interference area IA2 are aligned with each other may include a state in which an interval between a first dark part ID formed at a position that is closest to the interference area IA2 in the interference area IA1 and a second dark part ID formed at a position that is closest to the interference area IA1 in the interference area IA2 is equal to the integral multiple of each of a pitch of the dark parts ID in the interference area IA1 and a pitch of the dark parts ID in the interference area IA2. The state in which the phase of the bright part IL in the interference area IA1 and the phase of the bright part IL in the interference area IA2 are aligned with each other may include a state in which the position of the bright part IL formed in the interference area IA1 is the same as the position of the bright part IL formed in the interference area IA2 in an area in which the interference area IA1 and the interference area IA2 partially overlap with each other in a situation where the interference area IA1 and the interference area IA2 partially overlap with each other. The state in which the phase of the dark part ID in the interference area IA1 and the phase of the dark part ID in the interference area IA2 are aligned with each other may include a state in which the position of the dark part ID formed in the interference area IA1 is the same as the position of the dark part ID formed in the interference area IA2 in an area in which the interference area IA1 and the interference area IA2 partially overlap with each other in a situation where the interference area IA1 and the interference area IA2 partially overlap with each other. Incidentally, FIG. 5A illustrates an example in which the phase of the brightness and darkness in the interference area IA1 and the phase of the brightness and darkness in the interference area IA2 are not aligned with each other.

The movement of the interference fringe IS may include a movement of the bright part IL and the dark part ID, which is included in the interference fringe IS, in the interference area IA, as illustrated in FIG. 5B. Namely, the movement of the interference fringe IS may include a change of the position of each of the bright part IL and the dark part ID on the surface of the workpiece W. The movement of the interference fringe IS may include a change of the position of each of the bright part IL and IL and the dark part ID in the interference area IA.

In a case where the bright part IL and the dark part ID included in the interference fringe IS move in the interference area IA, the phase of the brightness and darkness before it moves and the phase of the brightness and darkness after it has moved may be aligned with each other or may not be aligned with each other, as with a case where the interference area IA itself moves. Namely, the phase of the bright part IL before it moves and the phase of the bright part IL after it has moved may be aligned with each other or may not be aligned with each other. Similarly, the phase of the dark part ID before it moves and the phase of the dark part ID after it has moved may be aligned with each other or may not be aligned with each other. FIG. 5A illustrates an example in which the phase of the brightness and darkness before it moves and the phase of the brightness and darkness after it has moved are not aligned with each other.

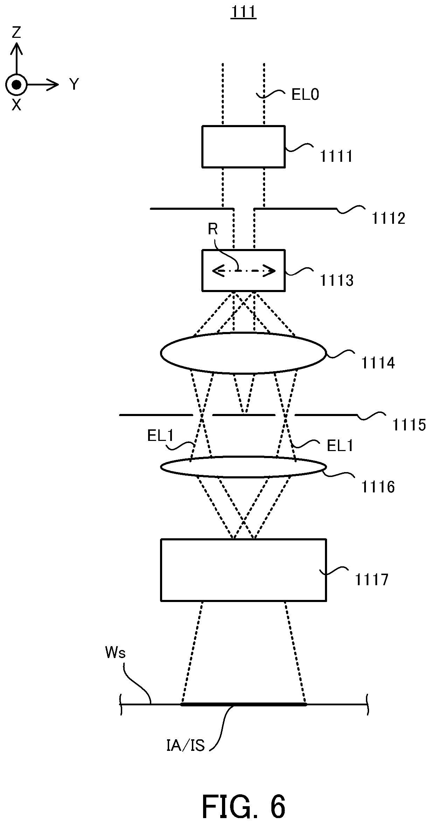

Incidentally, a detailed configuration of the processing optical system 111 that is configured to form the interference fringe IS and is configured to move the interference fringe IS will be described in detail later with reference to FIG. 6 and so on, and is therefore omitted here.

Again in FIG. 1 and FIG. 2, the head driving system 12 moves the processing head 11 along at least one of the X-axis direction, the Y-axis direction, and the Z-axis direction under the control of the control apparatus 3. Note that the head driving system 12 may move the processing head 11 along at least one of the θX direction, the θY direction, and the θZ direction, in addition to or instead of at least one of the X-axis direction, the Y-axis direction, and the Z-axis direction. When the processing head 11 moves, a positional relationship between the stage 13 (furthermore, the workpiece W placed on the stage 13) and the processing head 11 changes. As a result, a positional relationship between the interference area IA (see FIG. 4), in which the processing head 11 forms the interference fringe IS on the workpiece W, and each of the stage 13 and the workpiece W. Namely, the interference area IA moves on the workpiece W. Incidentally, the head driving system 12 may be referred to as a movement apparatus because the head driving system 12 is configured to move the interference area IA on the workpiece W.

The workpiece W is placed on the stage 13. The stage 13 may not hold the workpiece W placed on the stage 13. Namely, the stage 13 may not apply, to the workpiece W placed on the stage 13, a holding force for holding the workpiece W. Alternatively, the stage 13 may hold the workpiece W placed on the stage 13. Namely, the stage 13 may apply, to the workpiece W placed on the stage 13, the holding force for holding the workpiece W. For example, the stage 13 may hold the workpiece W by vacuum-sucking and / or electrostatic-sucking the workpiece W. Alternatively, a jig for holding the workpiece W may hold the workpiece W, and the stage 13 may hold the jig holding the workpiece W.

The stage driving system 14 moves the stage 13 under the control of the control apparatus 3. Specifically, the stage driving system 14 moves the stage 13 relative to the processing head 11. For example, the stage driving system 14 may move the stage 13 along at least one of the X-axis direction, the Y-axis direction, the Z-axis direction, the θX direction, the θY direction, and the θZ direction under the control of the control apparatus 3. Note that moving the stage 13 along at least one of the θX direction, the θY direction, and the θZ direction may be considered to be equivalent to changing a pose of the stage 13 (furthermore, the workpiece W placed on the stage 13) around at least one of the X-axis, the Y-axis, and the Z-axis. Alternatively, moving the stage 13 along at least one of the θX direction, the θY direction, and the θZ direction may be considered to be equivalent to rotating (or rotationally moving) the stage 13 around at least one of the X-axis, the Y-axis, and the Z-axis.

When the stage 13 moves, the positional relationship between the stage 13 (furthermore, the workpiece W placed on the stage 13) and the processing head 11 changes. Furthermore, the processing and each of the stage 13 and the workpiece W. changes, the irradiation position of the processing light EL on the workpiece W changes. As a result, the positional relationship between the interference area IA (see FIG. 4), in which the processing head 11 forms the interference fringe IS on the workpiece W, and each of the stage 13 and the workpiece W. Namely, the interference area IA moves on the workpiece W. Incidentally, the stage driving system 14 may be referred to as a movement apparatus because the stage driving system 14 is configured to move the interference area IA on the workpiece W.

The control apparatus 3 controls the operation of the processing system SYSa. For example, the control apparatus 3 may generate processing control information for processing the workpiece W and control the processing apparatus 1 based on the processing control information so that the workpiece W is processed based on the generated processing control information. Namely, the control apparatus 3 may control the processing of the workpiece W.

The control apparatus 3 may include a calculation apparatus and a storage apparatus, for example. The calculation apparatus may include at least one of a CPU (Central Processing Unit) and a GPU (Graphical Processing Unit), for example. The control apparatus 3 serves as an apparatus for controlling the operation of the processing system SYSa by means of the calculation apparatus executing a computer program. The computer program is a computer program that allows the control apparatus 3 (for example, the calculation apparatus) to perform (namely, to execute) a below-described operation that should be performed by the control apparatus 3. Namely, the computer program is a computer program that allows the control apparatus 3 to function so as to make the processing system SYSa perform the below-described operation. The computer program executed by the calculation apparatus may be recorded in the storage apparatus (namely, a recording medium) of the control apparatus 3, or may be recorded in any recording medium (for example, a hard disk or a semiconductor memory) that is built in the control apparatus 3 or that is attachable to the control apparatus 3. Alternatively, the calculation apparatus may download the computer program that should be executed from an apparatus external to the control apparatus 3 through a network interface.

The control apparatus 3 may not be positioned in the processing system SYSa. For example, the control apparatus 3 may be positioned at the outside of the processing system SYSa as a server or the like. In this case, the control apparatus 3 may be connected to the processing system SYSa through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 3 and the processing system SYSa may be configured to transmit and receive various information through the network. Moreover, the control apparatus 3 may be configured to transmit information such as a command and a control parameter to the processing system SYSa through the network. The processing system SYSa may include a receiving apparatus that receives the information such as the command and the control parameter from the control apparatus 3 through the network. Alternatively, a first control apparatus that performs a part of the processing performed by the control apparatus 3 may be positioned in the processing system SYSa and a second control apparatus that performs another part of the processing performed by the control apparatus 3 may be positioned at the outside of the processing system SYSa.

An arithmetic model that is buildable by machine learning may be implemented in the control apparatus 3 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 3 may control the operation of the processing system SYSa by using the arithmetic model. Namely, the operation for controlling the operation of the processing system SYSa may include an operation for controlling the operation of the processing system SYSa by using the arithmetic model. Note that the arithmetic model that has been built by off-line machine learning using training data may be implemented in the control apparatus 3. Moreover, the arithmetic model implemented in the control apparatus 3 may be updated by online machine learning on the control apparatus 3. Alternatively, the control apparatus 3 may control the operation of the processing system SYSa by using the arithmetic model implemented in an apparatus external to the control apparatus 3 (namely, an apparatus external to the processing system SYSa), in addition to or instead of the arithmetic model implemented on the control apparatus 3.

Note that the recording medium recording therein the computer program that should be executed by the calculation apparatus may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware, and the like). Moreover, each process or function included in the computer program may be realized by a logical process block that is realized in the control apparatus 3 by means of the control apparatus 3 (namely, a computer) executing the computer program, may be realized by a hardware such as a predetermined gate array (a FPGA, an ASIC) of the control apparatus 3, or may be realized in a form in which the logical process block and a partial hardware module that realizes an partial element of the hardware are combined.

### (1-2) Configuration of Processing Optical System 111

Next, with reference to FIG. 6, the configuration of the processing optical system 111 in the first example embodiment with be described. FIG. 6 is a cross-sectional view that illustrates the configuration of the processing optical system 111 in the first example embodiment.

As illustrated in FIG. 6, the processing optical system 111 includes a homogenizer 1111, an aperture 1112, an ultrasonic light modulator 1113, a lens 1114, a zeroth-order light cut mask 1115, a lens 1116, and an enlargement lens 1117.

The processing light EL0 emitted from the processing light source 2 enters the homogenizer 1111. The homogenizer 1111 performs a smoothing of an intensity distribution of the processing light EL0 in a beam cross-section of the processing light EL0 (specifically, a cross-section that intersects (typically, is orthogonal to) a propagating direction of the processing light EL0). At least one of an optical system in which a fly-eye optical system and a condenser optical system is combined, an aspheric optical element, and a diffuser such as a diffraction optical element is one example of the homogenizer 1111, for example. The processing light EL0 on which the smoothing is performed by the homogenizer 1111 is shaped by the aperture 1112 having a predetermined shaped aperture.

The processing light EL0 shaped by the aperture 1112 enters the ultrasonic light modulator 1113. Therefore, the ultrasonic light modulator 1113 is positioned in an optical path of the processing light EL0. Namely, the ultrasonic light modulator 1113 is positioned in a light beam (emitted light beam) of the processing light EL0 emitted from the processing light source 2. The ultrasonic light modulator 1113 has an ultrasonic propagation path R that propagates ultrasonic wave in a direction orthogonal to an optical axis of the ultrasonic light modulator 1113 (in the example illustrated in FIG. 6, an optical path along the Z-axis). The ultrasonic light modulator 1113 has the ultrasonic propagation path R that propagates the ultrasonic wave in a direction that intersects the optical path of the processing light EL0 entering the ultrasonic light modulator 1113. The ultrasonic light modulator 1113 generates a planar standing wave of the ultrasonic wave (in the below-described description, it is referred to as an "ultrasonic standing wave") in the ultrasonic propagation path R, thereby adding a sinusoidal refractive index distribution to the ultrasonic propagation path R. The ultrasonic light modulator 1113 serves as a phase-type diffraction grating with respect to the processing light EL0 entering the ultrasonic light modulator 1113. Specifically, the ultrasonic light modulator 1113 divides the processing light EL0 into diffracted lights of various orders. In this case, the ultrasonic light modulator 1113 may be referred to as a light dividing apparatus or a dividing optical system.

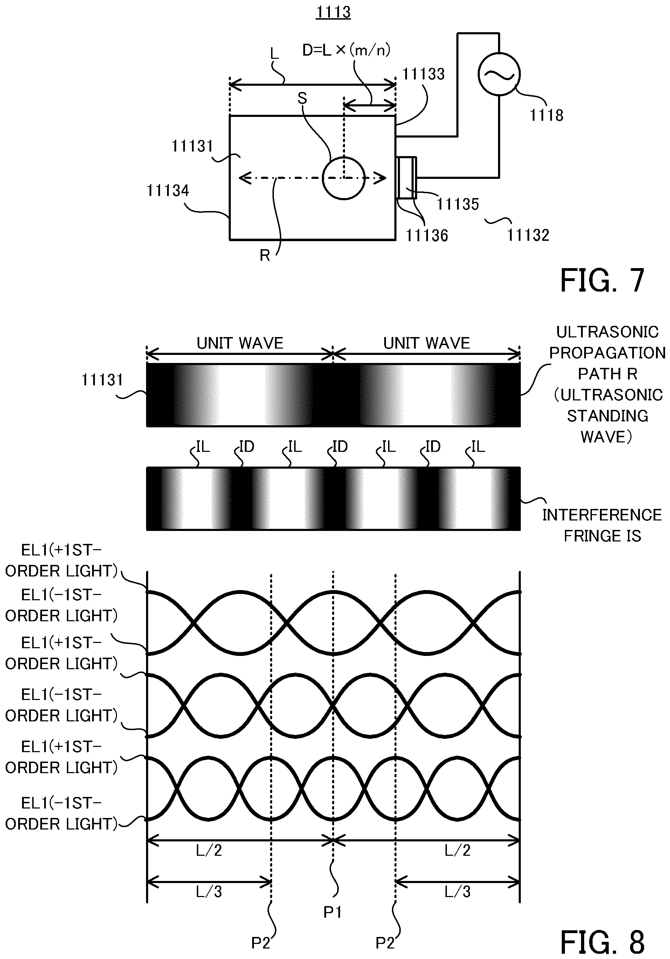

Here, with reference to FIG. 7, a configuration of the ultrasonic light modulator 1113 will be described. FIG. 7 is a cross-sectional view that illustrates the configuration of the ultrasonic light modulator 1113.

As illustrated in FIG. 7, the ultrasonic light modulator 1113 includes an acousto-optical medium 11131. The acousto-optical medium 11131 may be a member including at least one of tellurium dioxide, quartz, quartz glass, tellurite glass, heavy flint glass, and flint glass, for example.

As illustrated in FIG. 7, the ultrasonic light modulator 1113 further includes a transducer 11132. The transducer 11132 is bonded to a first side surface 11133 of the acousto-optical medium 11131. In this case, the first side surface 11133 of the acousto-optical medium 11131 is polished with sufficient precision. Moreover, a second side surface 11134 of the acousto-optical medium 11131 opposite to the first side surface 11133 (namely, a side surface on which the transducer 11132 is not positioned) is also polished with sufficient precision.

The transducer 11132 is an ultrasonic transducer, for example. Specifically, the transducer 11132 includes a piezoelectric element 11135 and a pair of electrodes 11136 individually formed on upper and lower surfaces of the piezoelectric element 11135. The transducer 11132 is bonded to the first side surface 11133 of the acousto-optical medium 11131 through one electrode 11136.

A high frequency AC (alternate current) voltage is applied between the pair of electrodes 11136 of the transducer 11132 by a high frequency AC electric power source 1118 under the control of the control apparatus 3. The AC voltage applied by the high frequency AC electric power source 1118 is used as a driving signal for vibrating the acousto-optical medium 11131. A frequency of the AC voltage may be several tens of MHz to 100 MHz. When the high frequency AC voltage is applied between the pair of electrodes 11136, the piezoelectric element 11135 vibrates in a thickness direction. As a result, a planar ultrasonic wave propagates from the first side surface 11133 of the acousto-optical medium 11131, to which the transducer 11132 is bonded, to the second side surface 11134 of the acousto-optical medium 11131, which is opposite to the first side surface 11133. The planar ultrasonic wave is reflected by the second side surface 11134. Namely, the ultrasonic propagation path R is formed in the acousto-optical medium 11131. Therefore, in a case where the frequency of the AC voltage applied between the two electrodes 11136 is set to a specific frequency, the planar ultrasonic wave becomes the ultrasonic standing wave. Namely, the ultrasonic light modulator 1113 generates the ultrasonic standing wave. In this case, the refractive index inside the acousto-optical medium 11131 is distributed in a sinusoidal manner along a propagating direction of the planar ultrasonic wav e. Therefore, the ultrasonic light modulator 1113, to which the AC voltage is applied, can serve as the phase-type diffraction grating that has a phase grating parallel to the first side surface 11133 and the second side surface 11134. In this case, the ultrasonic light modulator 1113 may be considered to be configured to serve as an acousto-optics element (AOM: Acousto-Optics Modulator). The high frequency AC electric power source 1118 that generates the ultrasonic standing wave by applying the AC voltage to the ultrasonic light modulator 1113 may be referred to as a sonic standing wave generation member.

Again in FIG. 6, the diffracted light of each order emitted from the ultrasonic light modulator 1113 passes through the lens 1114 and then forms a pupil conjugate plane. A zeroth-order light cut mask 1115 is positioned on or near the pupil conjugate plane. The zeroth-order light cut mask 1115 has a function of cutting zeroth-order diffracted light and higher diffracted light of second-order or more, and allows ±first-order diffracted lights to pass therethrough. The ±first-order diffracted lights that has passed through the zeroth-order light cut mask 1115 passes through the lens 1116, and the forms a work conjugate plane. When the work conjugate plane is enlarged and projected on the workpiece W through the enlargement lens 1117 that is an imaging optical system having an enlargement magnification, a stripe-shaped interference fringe IS with a uniform fringe pitch is formed on the workpiece W because the ±first-order diffracted lights are coherent lights. Thus, in the first example embodiment, the workpiece W is irradiated with the ±first-order diffracted lights passing through the zeroth-order light cut mask 1115, the lens 1116, and the enlargement lens 1117 as the plurality of processing lights EL1 (here, two processing lights EL1) forming the interference fringe IS. Incidentally, each of the lens 1116 and the enlargement lens 1117 may be considered to serve as an interference optical system that forms the interference fringe IS on the workpiece W by allowing the ±first-order diffracted lights to interfere with each other. Here, the ultrasonic light modulator 1113 and the workpiece conjugate surface are optically conjugate to each other with respect to the lenses 1114 and 1116, and the ultrasonic light modulator 1113 and the surface of the workpiece W are optically conjugate to each other with respect to the lens 1114, the lens 1116 and the enlargement lens 1117. Incidentally, each of the lens 1114, the lens 1116, and the enlargement lens 1117 may be a dioptric optical system, may be reflective optical system, or may be a reflective-dioptric optical system. Moreover, the processing optical system 111 may include a diffraction optical element.

In the first example embodiment, the processing optical system 111 moves the interference fringe IS by controlling (for example, changing) the ultrasonic standing wave generated in the ultrasonic propagation path R under the control of the control apparatus 3. Especially, the processing optical system 111 mainly moves the bright part IL and the dark part ID included in the interference fringe IS in the interference area IA by controlling the ultrasonic standing wave generated in the ultrasonic propagation path R under the control of the control apparatus 3. Namely, in the first example embodiment, the processing optical system 111 moves the interference fringe IS in the manner illustrated in above-described FIG. 5B. Incidentally, in the first example embodiment, the processing optical system 111 may further move or may not move the interference area IA itself in which the interference fringe IS is formed on the surface of the workpiece W, in addition to moving the bright part IL and the dark part ID included in the interference fringe IS in the interference area IA. Namely, the processing optical system 111 may further mainly move or may not move the interference fringe IS in the manner illustrated in the above-described FIG. 5A.

Next, with reference to FIG. 8, a method of moving the interference fringe IS by controlling the ultrasonic standing wave will be described. A figure in a first row of FIG. 8 (in the below-described description, it is referred to as "") is a schematic diagram that schematically illustrates a pattern of the ultrasonic standing wave generated in the ultrasonic propagation path R of the acousto-optical medium 11131. Furthermore, a figured in a second row of FIG. 8 (in the below-described description, it is referred to as "FIG. 8-1") is a schematic diagram that schematically illustrates a pattern of the interference fringe IS (specifically, an arrangement pattern of the bright part IL and the dark part ID) formed on the surface of the workpiece W in a case where the ultrasonic standing wave illustrated in FIG. 8-1 is generated. However, an actual pattern of the interference fringe IS reflects at least a part of the pattern of the ultrasonic propagation path R through which the effective light beam passes. Namely, the actual pattern of the interference fringe IS does not reflect at least other part of the pattern of the ultrasonic propagation path R through which the effective light beam does not pass. Moreover, Figure 8-1 illustrates an example in which the number of unit wave included in the ultrasonic standing wave generated in the ultrasonic propagation path R is "2", which is smaller than an actual number, for the purpose of simple description. Note that the unit wave may mean a single wave with a phase change of 2π.

In a case where the number of unit wave included in the ultrasonic standing wave is "2" as illustrated in FIG. 8-1, the number of stripes (specifically, the number of bright parts IL or dark parts ID) included in the interference fringe IS formed by the interference of the two processing lights EL1 (namely, the ±first-order lights) is 4 as illustrated in FIG. 8-2. Namely, the number of stripes included in the interference fringe IS is twice the number of unit waves included in the ultrasonic standing wave that is generated to form the interference fringe IS. Therefore, when the number of unit wave included in the ultrasonic standing wave changes, the number of stripes included in the interference fringe IS also changes. For example, a figure in a third row of FIG. 8 (in the below-described description, it is referred to as "FIG. 8-3") illustrates the intensities of the two processing lights EL1 (namely, the ±first-order lights) generated in a case where the number of unit waves included in the ultrasonic standing wave is "2". In this case, the number of stripes included in the interference fringe IS is "4" as illustrated in FIG. 8-2. For example, a figure in a fourth row of FIG. 8 (in the below-described description, it is referred to as "FIG. 8-4") illustrates the intensities of the two processing lights EL1 (namely, the ±first-order lights) generated in a case where the number of unit waves included in the ultrasonic standing wave is "2.5". In this case, the number of stripes included in the interference fringe IS is "5". For example, a figure in a fifth row of FIG. 8 (in the below-described description, it is referred to as "FIG. 8-5") illustrates the intensities of the two processing lights EL1 (namely, the ±first-order lights) generated in a case where the number of unit waves included in the ultrasonic standing wave is "3". In this case, the number of stripes included in the interference fringe IS is "6".

Here, as illustrated in FIG. 8-3 to FIG. 8-5, at a part P1 of the acousto-optical medium 11131 that is distant from one end of the ultrasonic propagation path R by 1/2 of a length L of the ultrasonic propagation path R, phases of the two processing lights EL1 are changed by "π" when the number of unit waves included in the ultrasonic standing wave is changed by 1/2. Therefore, in a case where the processing light EL0 enters the ultrasonic light modulator 1113 so that the processing light EL0 enters only the part P1 with respect to the acousto-optical medium 11131, the processing optical system 111 can change the phases of the two processing lights EL1 by "π" by changing the number of unit waves included in the ultrasonic standing wave by 1/2. As a result, the processing optical system 111 can change the phases of the interference fringe IS by "π".

Moreover, as illustrated in FIG. 8-3 to FIG. 8-5, at a part P2 of the acousto-optical medium 11131 that is distant from one end of the ultrasonic propagation path R by 1/3 of a length L of the ultrasonic propagation path R, the phases of the two processing lights EL1 are changed by "2π/3" when the number of unit waves included in the ultrasonic standing wave is changed by 1/2. Therefore, in a case where the processing light EL0 enters the ultrasonic light modulator 1113 so that the processing light EL0 enters only the part P2 with respect to the acousto-optical medium 11131, the processing optical system 111 can change the phases of the two processing lights EL1 by "2π/3" by changing the number of unit waves included in the ultrasonic standing wave by 1/2. As a result, the processing optical system 111 can change the phases of the interference fringe IS by "2π/3".

In the first example embodiment, the processing optical system 111 moves the interference fringe IS by using a fact that the phase of the interference fringe IS is changeable by changing the characteristics (for example, the above described phases) of the two processing lights EL1 in a case where an incident area of the acousto-optical medium 11131 which the processing light EL0 enters is set to a predetermined part. Specifically, the phases (namely, one of the characteristic) of the two processing lights EL1 depends on the number of unit waves included in the ultrasonic standing wave. The number of unit waves included in the ultrasonic standing wave depends on a wavelength of the ultrasonic standing wave. The wavelength of the ultrasonic standing wave depends on the frequency of the AC voltage applied by the high frequency AC electric power source 1118 to the pair of electrodes 11136. Therefore, in the first example embodiment, in order to move the interference fringe IS, the processing optical system 111 (especially, the high frequency AC electric power source 1118) changes the frequency of the AC voltage applied to the pair of electrodes 11136. When the frequency of the AC voltage applied to the pair of electrodes 11136 is changed, the wavelength of the ultrasonic standing wave is changed. When the wavelength of the ultrasonic standing wave is changed, the number of unit waves included in the ultrasonic standing wave is changed. When the number of unit waves included in the ultrasonic standing wave is changed, the phases of the two processing lights EL1 are changed. When the phases of the two processing lights EL1 are changed, the phase of the interference fringe IS is changed. When the phase of the interference fringe IS is changed, the bright part IL and the dark part ID included in the interference fringe IS move in the interference area IA. Thus, the processing optical system 111 can move the interference fringe IS.

Alternatively, in order to move the interference fringe IS, the processing optical system 111 (especially, the high frequency AC electric power source 1118) may change the wavelength of one of the two processing lights EL and may not change the wavelength of the other of the two processing lights EL by changing the frequency of the AC voltage applied to the pair of electrodes 11136 . Even in this case, when the phase of at least one processing light EL1 is changed, the phase of the interference fringe IS is still changed. Incidentally, changing the wavelength of one of the two processing lights EL without changing the wavelength of the other of the two processing lights EL may be considered to be equivalent to changing a difference in phase between the two processing lights EL. In this case, the processing optical system 111 (especially, the high frequency AC electric power source 1118) may be considered to change the difference in phase between the two processing lights EL by changing the frequency of the AC voltage applied to the pair of electrodes 11136 in order to move the interference fringe IS.

Incidentally, the ultrasonic light modulator 1113 that moves the interference fringe IS by changing the characteristic (the phase) of the interference fringe IS may be referred to as an interference fringe movement apparatus, a movement optical system, or an optical characteristic changing apparatus. Similarly, the high frequency AC electric power source 1118 that applies, to the ultrasonic light modulator 1113, the AC voltage that can move the interference fringe IS by changing the characteristic (the phase) of the interference fringe IS may be referred to as the interference fringe movement or the optical characteristic change apparatus.

Here, as one specific example, an example in which the phase of the interference fringe IS is changed in n (wherein, n is a variable number representing an integer that is equal to or large than 2) ways (namely, the number of times of switching the phase of the interference fringe IS and the number of moving steps of the interference fringe IS is n) and the phase of the interference fringe IS is changed by 2π/n each time. In this case, the processing optical system 111 makes the processing light EL0 enter the ultrasonic light modulator 1113 so that the processing light EL0 enters a partial area of the acousto-optical medium 11131 that is distant from one end of the ultrasonic propagation path R by m/n of the length L of the ultrasonic propagation path R. Namely, the processing optical system 111 makes the processing light EL0 enter the ultrasonic light modulator 1113 so that the processing light EL0 passes through the partial area of the acousto-optical medium 11131 that is distant from one end of the ultrasonic propagation path R by m/n of the length L of the ultrasonic propagation path R. Specifically, as illustrated in FIG. 7, a distance D from a center of a spot S of the processing light EL0 entering the ultrasonic propagation path R to one end of the ultrasonic propagation path R is set to m/n times of the length L of the ultrasonic propagation path R in the propagation direction. Note that m is a variable number representing an integer number that is equal to or larger than 0. Then, the high frequency AC electric power source 1118 changes the wavelength of the ultrasonic standing wave in a predetermined wavelength pattern by changing the frequency of the AC voltage applied to the pair of electrodes 11136 in a predetermined frequency pattern, thereby moving the interference fringe IS by a desired amount. Specifically, the high frequency AC electric power source 1118 changes the phase of the interference fringe IS in n different ways by changing the frequency of the AC voltage applied to the pair of electrodes 11136 between n different frequencies f₁, f₂, ..., and fₙ.

Here, in a case where the variable number n is 3 (namely, the number of times of switching the phase of the interference fringe IS is 3), it is actually preferable that the distance D from the center of the spot S of the processing light EL0 to one end of the ultrasonic propagation path R be set to 1/3 or 2/3 times of the length L of the ultrasonic propagation path R. This is because the acousto-optical medium 11131 is not irradiated with a half of the light beam of the processing light EL0 in a case where the distance D is set to 0/3 or 3/3 times of the length L of the ultrasonic propagation path R. in a case where the variable number n is 4 (namely, the number of times of switching the phase of the interference fringe IS is 4), it is actually preferable that the distance D from the center of the spot S of the processing light EL0 to one end of the ultrasonic propagation path R be set to 1/4 or 3/4 times of the length L of the ultrasonic propagation path R. The reason why the distance D is not set to 0/4 or 4/4 times of the length L of the ultrasonic propagation path R is the same as the reason why the distance D is not set to 0/3 or 3/3 times of the length L of the ultrasonic propagation path R. Moreover, the reason why the distance D is not set to 2/4 times (= 1/2 times) of the length L of the ultrasonic propagation path R is that the phase of the interference fringe IS can be changed by only "π" (namely, the phase of the interference fringe IS can be changed in only two ways at the part P1 at which the distance D is 1/2 times of the length L of the ultrasonic propagation path R as illustrated in FIG. 8. Considering these examples, a position of the acousto-optical medium 11131 that is irradiated with the processing light EL0 may satisfy a below-described position condition. Firstly, in a case where the variable number m is a prime number, the position condition may include a condition that the position of the acousto-optical medium 11131 that is irradiated with the processing light EL0 is set at a part of the acousto-optical medium 11131 that is distant from one end of the ultrasonic propagation path R by m/n of the length L of the ultrasonic propagation path R, and the variable number m is different from zero and the variable number n. Namely, the position condition may include a condition that the distance D is set to m/n times of the length L of the ultrasonic propagation path R, and the variable number m is different from zero and the variable number n. In a case where the variable m is not a prime number, the position condition may include a condition that the position of the acousto-optical medium 11131 that is irradiated with the processing light EL0 is set at a part of the acousto-optical medium 11131 that is distant from one end of the ultrasonic propagation path R by m/n of the length L of the ultrasonic propagation path R, and the variable number m is different from zero, the variable number n, and the prime factor of the variable number n.. Namely, the position condition may include a condition that the distance D is set to m/n times of the length L of the ultrasonic propagation path R, and the variable number m is different from zero, the variable number n, and the prime factor of the variable number n.

### (1-3) Technical Effect of Processing System SYSa

As described above, the processing system SYSa is configured to move the interference fringe IS by using the ultrasonic light modulator 1113 to change the phase of the interference fringe IS. Therefore, the processing system SYSa can move the interference fringe IS in a state in which a positional relationship between the optical elements of the processing optical system 111 and the workpiece W is fixed. In other words, the processing system SYSa can move the interference fringe IS without changing the positional relationship between the optical elements of the processing optical system 111 and the workpiece W. For example, the processing system SYSa can move the interference fringe IS in a state in which the positional relationship between the workpiece W and each of the lens 1116 and the enlargement lens 1117, which are configured to serve as the interference optical system, is fixed. Therefore, the processing system SYSa can change the phase of the interference fringe IS at a higher speed, compared to a case where the phase of the interference fringe IS is changed by changing the positional relationship between the optical elements and the workpiece W. As a result, the processing system SYSa can move the interference fringe IS at a high speed.

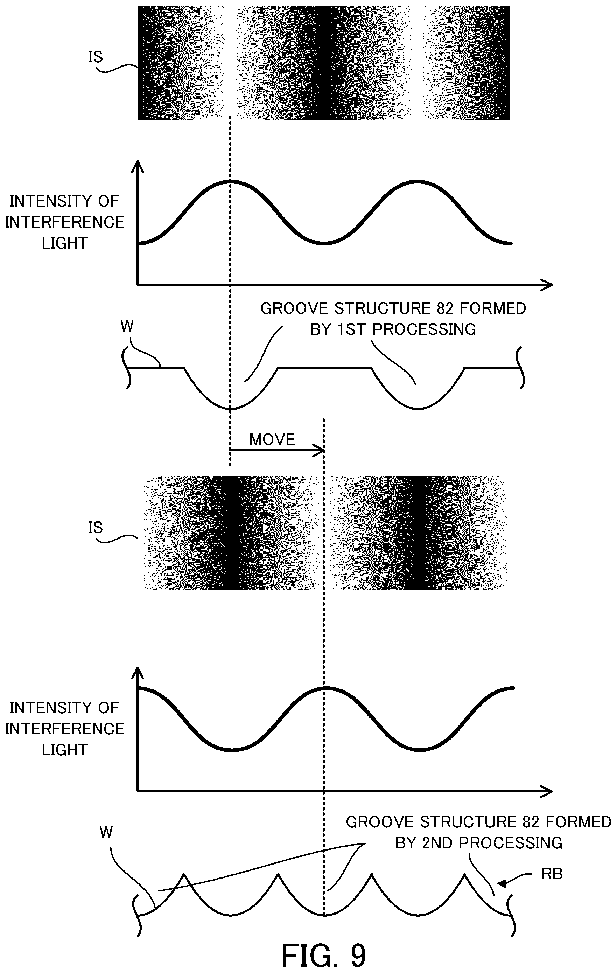

Moreover, the processing system SYSa can efficiently form the above-described riblet structure RB by moving the interference fringe IS at a high speed. For example, in a case where the riblet structure RB is formed by performing a multi-patterning that forms, in the same area on the workpiece W, a plurality of interference fringes IS whose phases are changed as described in US2020/139488A1, the processing system SYSa can efficiently form the above-described riblet structure RB by moving the interference fringe IS at a high speed. Specifically, as illustrated in FIG. 9, the processing system SYSa may form the riblet structure RB by forming the interference fringe IS, whose cycle is twice a cycle of the riblet structure RB, two number of times on a certain area of the workpiece W. In this case, the processing system SYSa may move the interference fringe IS so that a difference in phase between the phase of the interference fringe IS for performing a first processing and the phase of the interference fringe IS for performing a second processing is half the cycle of the riblet structure RB. For example, the processing system SYSa may set the wavelength of the ultrasonic standing wave to a first wavelength by setting the frequency of the AC voltage applied to the pair of electrodes 1136 to a first frequency in order to perform the first processing. Then, the processing system SYSa may set the wavelength of the ultrasonic standing wave to a second wavelength, which is different from the first wavelength, by setting the frequency of the AC voltage applied to the pair of electrodes 1136 to a second frequency, which is different from the first frequency, in order to perform the second processing. In this case, since the processing system SYSa can move the interference fringe IS at a high speed as described above, and therefore a time required to start the second processing after completing the first processing is reduced. As a result, the processing system SYSa can increase a throughput for forming the riblet structure RB.

### (1-4) Modified Example of Processing System SYSa

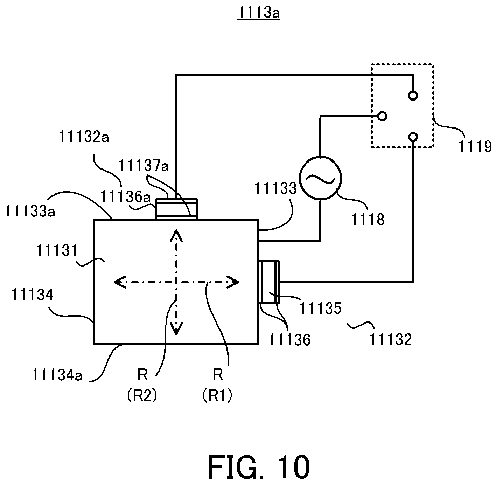

In the above-described description, the single ultrasonic propagation path R extending in a single direction is formed in the ultrasonic light modulator 1113. On the other hand, in an ultrasonic light modulator 1113a that is a modified example of the ultrasonic light modulator 1113, a plurality of ultrasonic propagation paths R extending in different directions, respectively, may be formed. Specifically, as illustrated in FIG. 10 that is a cross-sectional view illustrating a configuration of the ultrasonic light modulator 1113a, the ultrasonic light modulator 1113a may be different from the ultrasonic light modulator 1113 in that it further includes a transducer 1132a. Other feature of the ultrasonic light modulator 1113a may be the same as other feature of the ultrasonic light modulator 1113.

The transducer 11132a is bonded to a third side surface 11133a of the acousto-optical medium 11131. In this case, the third side surface 11133a of the acousto-optical medium 11131 is polished with sufficient precision. Moreover, a fourth side surface 11134a of the acousto-optical medium 11131 opposite to the third side surface 11133a (namely, a side surface on which the transducer 11132a is not positioned) is also polished with sufficient precision.

The transducer 11132a is an ultrasonic transducer, for example. Specifically, the transducer 11132a includes a piezoelectric element 11135a and a pair of electrodes 11136a individually formed on upper and lower surfaces of the piezoelectric element 11135a. The transducer 11132a is bonded to the third side surface 11133a of the acousto-optical medium 11131 through one electrode 11136a.

The high frequency AC voltage is applied between the pair of electrodes 11136a of the transducer 11132a by the high frequency AC electric power source 1118 under the control of the control apparatus 3. When the high frequency AC voltage is applied between the pair of electrodes 11136a, the piezoelectric element 11135a vibrates in a thickness direction. As a result, a planar ultrasonic wave propagates from the third side surface 11133a of the acousto-optical medium 11131, to which the transducer 11132a is bonded, to the fourth side surface 11134a of the acousto-optical medium 11131, which is opposite to the third side surface 11133a. Namely, the ultrasonic propagation path R is formed in the acousto-optical medium 11131. Thus, in the modified example, the ultrasonic propagation path R1 extending along a first direction that is directed from the first side surface 11133 to the second side surface 11134 and the ultrasonic propagation path R2 extending along a second direction that is directed from the third side surface 11133a to the fourth side surface 11134a and that is different from the first direction are formed in the acousto-optical medium 11131.

In this case, a state of the high frequency AC electric power source 1118 is switched by a switch unit 1119, which is operable under the control of the control apparatus 3, between a first state in which the high frequency AC electric power source 1118 applies the AC voltage to the pair of electrodes 11136 and a second state in which the high frequency AC electric power source 1118 applies the AC voltage to the pair of electrodes 11136a. As a result, the high frequency AC electric power source 1118 can generate the ultrasonic standing wave in any one of the ultrasonic propagation paths R1 and R2. Namely, the high frequency AC electric power source 1118 can switch the ultrasonic propagation path R generated in the acousto-optical medium 11131 between the ultrasonic propagation paths R1 and R2. As a result, the ultrasonic light modulator 1113a can serve as a phase-type diffraction grating in which a direction of the phase grating is changeable.

Thus, in the modified example of the first example embodiment, it is possible to achieve, in addition to the effect that is achievable in the first embodiment, an effect of being able to change a direction of the cycle of the interference fringe IS formed on the surface of the workpiece W.

### (2) Processing System SYS in Second Example Embodiment

Next, the processing system SYS in a second example embodiment will be described. In the below-described description, the processing system SYS in the second example embodiment is referred to as the "processing system SYSb".

### (2-1) Configuration of Processing System SYSb

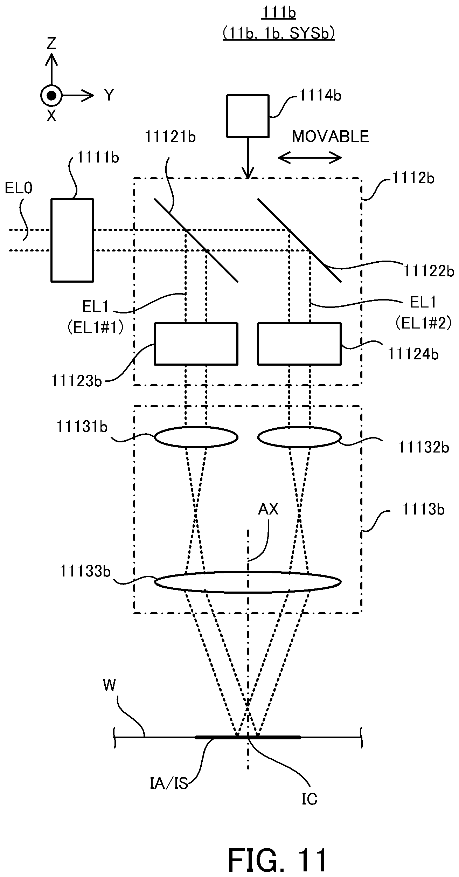

Firstly, a configuration of the processing system SYSb in the second example embodiment will be described. The processing system SYSb in the second embodiment is different from the processing system SYSa in the first embodiment described above in that it includes a processing apparatus 1b instead of the processing apparatus 1. Other feature of the processing system SYSb may be the same as other feature of the processing system SYSa. The processing apparatus 1b is different from the processing apparatus 1 in that it includes a processing head 11b instead of the processing head 11. Other feature of the processing apparatus 1b may be the same as other feature of the processing apparatus 1. The processing head 11b is different from the processing head 11 in that it includes a processing optical system 111b instead of the processing optical system 111. Other feature of the processing head 11b may be the same as other feature of the processing head 11. Therefore, in the below-described description, a configuration of the processing optical system 111b in the second example embodiment will be described with reference to FIG. 11. FIG. 11 is a cross-sectional view that illustrates the configuration of the processing optical system 111b in the second example embodiment.

As illustrated in FIG. 11, the processing optical system 111b includes a beam shaping optical system 1111b, a dividing optical system 1112b, an interference optical system 1113b, and an actuator 1114b.

The processing light EL0 emitted from the processing light source 2 enters the beam shaping optical system 1111b. The beam shaping optical system 1111b shapes a shape of the processing light EL0 so that the shape of the processing light EL0 is a desired shape and a size of the processing light EL0 is a desired size. Specifically, the beam shaping optical system 1111b shapes the shape of the processing light EL0 in a plane intersecting the propagating direction of the processing light EL0 so that the shape and the size of the processing light EL0 in the plane intersecting the propagating direction of the processing light EL0 are the desired shape and the desired size. The beam shaping optical system 1111b emits the shaped processing light EL0 toward the dividing optical system 1112b. Incidentally, depending on the shape and the size of the processing light EL0 emitted from the processing light source 2, the processing optical system 111b may not include the beam shaping optical system 1111b.

The dividing optical system 1112b includes a beam splitter 11121b, a mirror 11122b, a phase adjustment optical system 11123b, and a phase adjustment optical system 11124b. The processing light EL0 emitted from the beam shaping optical system 1111b enters the beam splitter 11121b. A part of the processing light EL0 that has entered the beam splitter 11121b is reflected by the beam splitter 11121b. Another part of the processing light EL0 that has entered the beam splitter 11121b passes through the beam splitter 11121b. Each of the processing light EL0 reflected by the beam splitter 11121b and the processing light EL0 passing through the beam splitter 11121b is used as the processing light EL1. Therefore, the beam splitter 11121b serves as an optical element that generates the plurality of processing lights EL1 by dividing the processing light EL0. Incidentally, in the below-described description, the processing light EL0 that has been reflected by the beam splitter 11121b is referred to as "processing light EL1#1", and the processing light EL0 that has passed through the beam splitter 11121b is referred to as "processing light EL1#2".

The beam splitter 11121b may be an amplitude-dividing-type of beam splitter. Alternatively, the beam splitter 11121b is not limited to the amplitude-dividing-type of beam splitter, but may be a polarization beamsplitter. In a case where the beam splitter 11121b is the polarization beam splitter, a polarization control member such as a wave plate may be positioned in at least one of the optical paths of the plurality of processing lights EL1 divided by the polarizing beam splitter.

The processing light EL1#1 that has been reflected by the beam splitter 11121b enters the phase adjustment optical system 11123b. Therefore, the phase adjustment optical system 11123b is positioned in an optical path of the processing light EL1#1. The phase adjustment optical system 11123b is configured to adjust (in other words, change) a phase of the processing light EL1#1. For example, the phase adjustment optical system 11123b may be configured to adjust the phase of the processing light EL1#1 by adjusting an optical path length of the processing light EL1#1. Incidentally, the phase adjustment optical system 11123b may be referred to as an optical characteristic change apparatus because it is configured to adjust (change) the phase that is one example of the characteristic of the processing light EL1#1.

The processing light EL1#2 that has passed through the beam splitter 11121b enters the phase adjustment optical system 11124b through the mirror 11122b. Therefore, the phase adjustment optical system 11124b is positioned in an optical path of the processing light EL1#2. The phase adjustment optical system 11124b is configured to adjust (in other words, change) a phase of the processing light EL1#2. For example, the phase adjustment optical system 11124b may be configured to adjust the phase of the processing light EL1#2 by adjusting an optical path length of the processing light EL1#2. Incidentally, the phase adjustment optical system 11124b may be referred to as an optical characteristic change apparatus because it is configured to adjust (change) the phase that is one example of the characteristic of the processing light EL1#2.

Each of the processing light EL1#1 whose phase has been adjusted by the phase adjustment optical system 11123b and the processing light EL1#2 whose phase has been adjusted by the phase adjustment optical system 11124b enters the interference optical system 1113b. Specifically, the interference optical system 1113b includes a fsinθ lens 11131b, a fsinθ lens 11132b, and a fsinθ lens 11133b. Incidentally, other type of lens (for example, a fθ lens) may be used instead of the fsinθ lens 11131b. Other type of lens (for example, a fθ lens) may be used instead of the fsinθ lens 11132b. Other type of lens (for example, a fθ lens) may be used instead of the fsinθ lens 11133b.

Here, positions of the fsinθ lenses 11131b, 11132b, and 11133b are determined so that each of a rear focal position of the fsinθ lens 11131b and a rear focal position of the fsinθ lens 11132b is located on a front focal plane of the fsinθ lens 11133b. An optical axis of the fsinθ lens 11131b and an optical axis of the fsinθ lens 11132b are parallel to an optical axis AX of the fsinθ lens 11133b and are distant from the optical axis AX by the same distance. However, the rear focal position of the fsinθ lens 11131b and the rear focal position of the fsinθ lens 11132b may not be located on a front focal plane of the fsinθ lens 11133b. The optical axis of the fsinθ lens 11131b and the optical axis of the fsinθ lens 11132b may be non-parallel to the optical axis AX of the fsinθ lens 11133b. A distance between the optical axis of the optical axis of the fsinθ lens 11131b and the optical axis AX of the fsinθ lens 11133b may not be equal to a distance between the optical axis of the optical axis of the fsinθ lens 11132b and the optical axis AX of the fsinθ lens 11133b.

The processing light EL1#1 whose phase has been adjusted by the phase adjustment optical system 11123b enters the fsinθ lens 11131b. The processing light EL1#2 whose phase has been adjusted by the phase adjustment optical system 11124b enters the fsinθ lens 11132b. Therefore, the fsinθ lens 11131b is positioned in the optical path of the processing light EL1#1 and the fsinθ lens 11132b is positioned in the optical path of the processing light EL1#2. The fsinθ lens 11131b emits the processing light EL1#1, which has been emitted from the phase adjustment optical system 11123b, toward the fsinθ lens 11133b. The fsinθ lens 11132b emits the processing light EL1#2, which has been emitted from the phase adjustment optical system 11124b, toward the fsinθ lens 11133b. The fsinθ lens 11133b irradiates the workpiece W with the processing light EL1#1 emitted from the fsinθ lens 11131b and the processing light EL1#2 emitted from the phase adjustment optical system 11124b. Specifically, the fsinθ lens 11133b irradiates the workpiece W with the processing lights EL1#1 and EL1#2 from different incident directions, respectively. Especially, the fsinθ lens 11133b condenses the processing lights EL1#1 and EL1#2 so that the processing lights EL1#1 and EL1#2 intersect each other at the surface of the workpiece W or near the surface of the workpiece W. As a result, the interference fringe IS is formed on the workpiece W by interference light generated by an interference between the processing lights EL1#1 and EL1#2.

The actuator 1114b is a driving system that is configured to move the dividing optical system 1112b under the control of the control apparatus 3. Specifically, the actuator 1114b is configured to move the dividing optical system 1112b relative to the interference optical system 1113b.

In the second example embodiment, the processing optical system 111b moves the interference fringe IS by using the actuator 1114b to move the dividing optical system 1112b under the control of the control apparatus 3. Especially, the processing optical system 111b mainly moves the interference area IA along the pitch direction of the interference fringe IS on the workpiece W by moving the dividing optical system 1112b relative to the interference optical system 1113b under the control of the control apparatus 3. Namely, in the second example embodiment, the processing optical system 111b mainly moves the interference fringe IS in the manner illustrated in above-described FIG. 5A. Incidentally, in the second example embodiment, the processing optical system 111b may move or may not move the bright part IL and the dark part ID included in the interference fringe IS in the interference area IA, in addition to moving the interference area IA on the workpiece W. Namely, the processing optical system 111b may further move or may not move the interference fringe IS in the manner illustrated in above-described FIG. 5B.

### (2-2) Specific Method for Moving Interference Area IA along Pitch Direction of Interference Fringe IS on Workpiece W

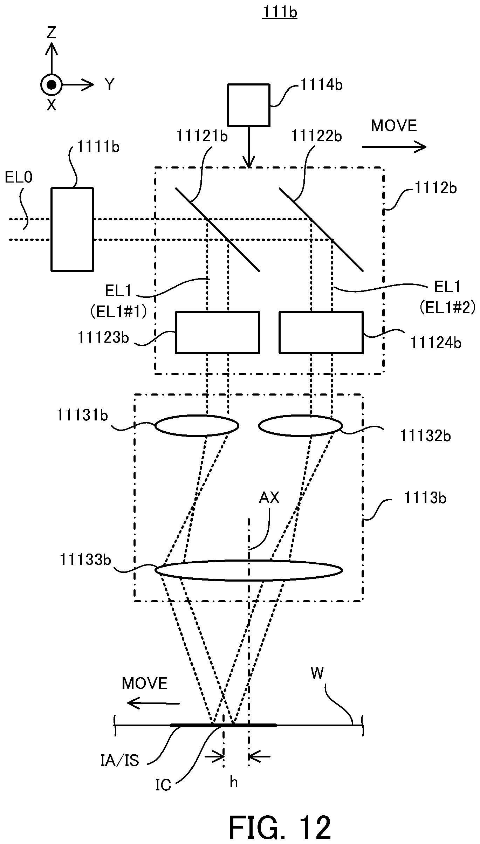

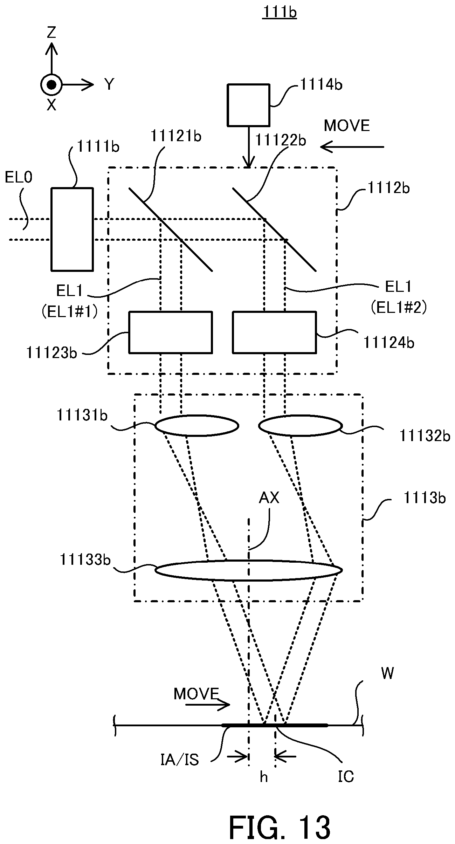

Next, with reference to FIG. 12 to FIG. 13 in addition to FIG. 11, a specific method of moving the interference area IA along the pitch direction of the interference fringe IS on the workpiece W will be described. Each of FIG. 12 and FIG. 13 is a cross-sectional view that illustrates the processing optical system 111b that moves the interference area IA along the pitch direction of the interference fringe IS on the workpiece W.

As illustrated in FIG. 12 and FIG. 13, in order to move the interference area IA along the pitch direction of the interference fringe IS on the workpiece W, the actuator 1114b moves the dividing optical system 1112b along the pitch direction of the interference fringe IS. In an example illustrated in FIG. 12 and FIG. 13, the actuator 1114b moves the dividing optical system 1112b along the Y-axis direction because the pitch direction of the interference fringe IS is the Y-axis direction. Incidentally, FIG. 12 illustrates an example in which the dividing optical system 1112b moves toward the +Y side along the Y-axis direction, and FIG. 13 illustrates an example in which the dividing optical system 1112b moves toward the -Y side along the Y-axis direction.

Incidentally, the pitch direction of the interference fringe IS is a direction that intersects the optical axis AX of the interference optical system 1113b. Therefore, an operation for moving the dividing optical system 1112b along the pitch direction of the interference fringe IS may be regarded as one example of an operation for moving the dividing optical system 1112b along the direction intersecting the optical axis AX of the interference optical system 1113b. incidentally, the optical axis AX of the interference optical system 1113b may be the optical axis of the fsinθ lens 11133b that is a terminal optical element of the interference optical system 1113b. Incidentally, in a case where an optical system that bends the optical path is positioned between the dividing optical system 1112b and the workpiece W, a movement direction of the dividing optical system 1112b may be determined with considering a direction of bending the optical path by that optical system.

When the dividing optical system 1112b moves along the pitch direction of the interference fringe IS, an incident position at which the processing light EL1#1 enters the fsinθ lens 11131b is changed along the pitch direction of the interference fringe IS. Similarly, when the dividing optical system 1112b moves along the pitch direction of the interference fringe IS, an incident position at which the processing light EL1#2 enters the fsinθ lens 11132b is changed along the pitch direction of the interference fringe IS. For example, when the dividing optical system 1112b moves toward the +Y side as illustrated in FIG. 12, each of the incident position at which the processing light EL1#1 enters the fsinθ lens 11131b and the incident position at which the processing light EL1#2 enters the fsinθ lens 11132b also moves toward the +Y side. For example, when the dividing optical system 1112b moves toward the -Y side as illustrated in FIG. 13, each of the incident position at which the processing light EL1#1 enters the fsinθ lens 11131b and the incident position at which the processing light EL1#2 enters the fsinθ lens 11132b also moves toward the -Y side. Namely, in the example of the processing optical system 111b illustrated in FIG. 11 to FIG. 13, each of the incident position at which the processing light EL1#1 enters the fsinθ lens 11131b and the incident position at which the processing light EL1#2 enters the fsinθ lens 11132b moves toward a direction that is same as a direction toward which the dividing optical system 1112b moves.

When the incident position at which the processing light EL1#1 enters the fsinθ lens 11131b is changed along the pitch direction of the interference fringe IS, an incident position at which the processing light EL1#1 enters the fsinθ lens 11133b is also changed along the pitch direction of the interference fringe IS. Similarly, when the incident position at which the processing light EL1#2 enters the fsinθ lens 11132b is changed along the pitch direction of the interference fringe IS, an incident position at which the processing light EL1#2 enters the fsinθ lens 11133b is also changed along the pitch direction of the interference fringe IS. For example, when the dividing optical system 1112b moves toward the +Y side as illustrated in FIG. 12, each of the incidence position at which the processing light EL1#1 enters the fsinθ lens 11133b and the incidence position at which the processing light EL1#2 enters the fsinθ lens 11133b moves toward the -Y side. For example, when the dividing optical system 1112b moves toward the -Y side as illustrated in FIG. 13, each of the incidence position at which the processing light EL1#1 enters the fsinθ lens 11133b and the incidence position at which the processing light EL1#2 enters the fsinθ lens 11133b moves toward the +Y side. Namely, in the example of the processing optical system 111b illustrated in FIG. 11 to FIG. 13, each of the incident position at which the processing light EL1#1 enters the fsinθ lens 11133b and the incident position at which the processing light EL1#2 enters the fsinθ lens 11133b moves toward a direction that is opposite to a direction toward which the dividing optical system 1112b moves.

When the incident position at which the processing light EL1#1 enters the fsinθ lens 11133b is changed along the pitch direction of the interference fringe IS, an exit position at which the processing light EL1#1 is emitted from the fsinθ lens 11133b is also changed along the pitch direction of the interference fringe IS. Namely, the exit position of the processing light EL1#1, which propagates from the fsinθ lens 11133b toward the workpiece W, from the fsinθ lens 11133b is changed along the pitch direction of the interference fringe IS. Similarly, when the incident position at which the processing light EL1#2 enters the fsinθ lens 11133b is changed along the pitch direction of the interference fringe IS, an exit position at which the processing light EL1#2 is emitted from the fsinθ lens 11133b is also changed along the pitch direction of the interference fringe IS. Namely, the exit position of the processing light EL1#2, which propagates from the fsinθ lens 11133b toward the workpiece W, from the fsinθ lens 11133b is changed along the pitch direction of the interference fringe IS. For example, when the dividing optical system 1112b moves toward the +Y side as illustrated in FIG. 12, each of the exit position at which the processing light EL1#1 is emitted from the fsinθ lens 11133b and the exit position at which the processing light EL1#2 is emitted from the fsinθ lens 11133b moves toward the -Y side. For example, when the dividing optical system 1112b moves toward the -Y side as illustrated in FIG. 13, each of the exit position at which the processing light EL1#1 is emitted from the fsinθ lens 11133b and the exit position at which the processing light EL1#2 is emitted from the fsinθ lens 11133b moves toward the +Y side. Namely, in the example of the processing optical system 111b illustrated in FIG. 11 to FIG. 13, each of the exit position at which the processing light EL1#1 is emitted from the fsinθ lens 11133b and the exit position at which the processing light EL1#2 is emitted from the fsinθ lens 11133b moves toward a direction that is opposite to the direction toward which the dividing optical system 1112b moves.

When the exit position at which the processing light EL1#1 is emitted from the fsinθ lens 11133b is changed along the pitch direction of the interference fringe IS, the processing light EL1#1 emitted from the fsinθ lens 11133b moves along the pitch direction of the interference fringe IS relative to the fsinθ lens 11133b. Similarly, when the exit position at which the processing light EL1#2 is emitted from the fsinθ lens 11133b is changed along the pitch direction of the interference fringe IS, the processing light EL1#2 emitted from the fsinθ lens 11133b moves along the pitch direction of the interference fringe IS relative to the fsinθ lens 11133b.

When the processing light EL1#1 moves along the pitch direction of the interference fringe IS relative to the fsinθ lens 11133b, an area that is irradiated with the processing light EL1#1 on the workpiece W moves along the pitch direction of the interference fringe IS. Similarly, when the processing light EL1#2 moves along the pitch direction of the interference fringe IS relative to the fsinθ lens 11133b, an area that is irradiated with the processing light EL1#2 on the workpiece W moves along the pitch direction of the interference fringe IS. As a result, the interference area IA, in which the interference fringe IS is formed by the interference between the processing lights EL1#1 and EL1#2 on the workpiece W, moves along the pitch direction of the interference fringe IS. For example, when the dividing optical system 1112b moves toward the +Y side as illustrated in FIG. 12, the interference area IA moves toward the -Y side. For example, when the dividing optical system 1112b moves toward the -Y side as illustrated in FIG. 13, the interference area IA moves toward the +Y side. Namely, in the example of processing optical system 111b illustrated in FIG. 11 to FIG. 13, the interference fringe IS moves toward a direction that is opposite to the direction toward which the dividing optical system 1112b moves.

Thus, the processing optical system 111b can move the interference area IA along the pitch direction of the interference fringe IS on the workpiece W by moving the dividing optical system 1112b in the pitch direction of the interference fringe IS by using the actuator 1114b. Incidentally, the actuator 1114b may be referred to as a movement apparatus because the actuator 1114b may move the processing light EL1 relative to the fsinθ lens 11133b by moving the dividing optical system 1112b.

### (2-3) Phase of Brightness and Darkness of Interference Fringe IS

By the way, as described by using FIG. 5A, the phase of the brightness and darkness in the interference area IA1 (see FIG. 5A), which is the interference area IA before it moves, and the phase of the brightness and darkness in the interference area IA2 (see FIG. 5A), which is the interference area IA after it has moved, may not be aligned with each other as described above in a case where the interference area IS is moved along the pitch direction of the interference fringe IS on the workpiece W. On the other hand, if the phase of the brightness and darkness in the interference area IA1 and the phase of the brightness and darkness in the interference area IA2 are not aligned with each other, there is a possibility that a continuity between the riblet structure RB formed in a first area in which the interference area IA1 is set on the surface of the workpiece W and the riblet structure RB formed in a second area in which the interference area IA2 is set on the surface of the workpiece W is not ensured. For example, there is a possibility that the riblet structure RB having a first cycle is formed in the first area of the surface of the workpiece W while the riblet structure RB having a second cycle, which is different from the first cycle, is formed in the second area of the surface of the workpiece W in which the riblet structure RB having the first cycle should be formed. For example, there is a possibility that the riblet structure RB in which the positions of the convex structure 81 and the groove structure 82 are deviated from ideal positions is formed.

Therefore, in the second example embodiment, the processing optical system 111b may align the phase of the brightness and darkness in the interference area IA1 with the phase of the brightness and darkness in the interference area IA2. Incidentally, since the specific example of the state in which the phase of the brightness and darkness in the interference area IA1 and the phase of the brightness and darkness in the interference area IA2 are aligned with each other is already described in the first example embodiment, a detailed description thereof is omitted here.

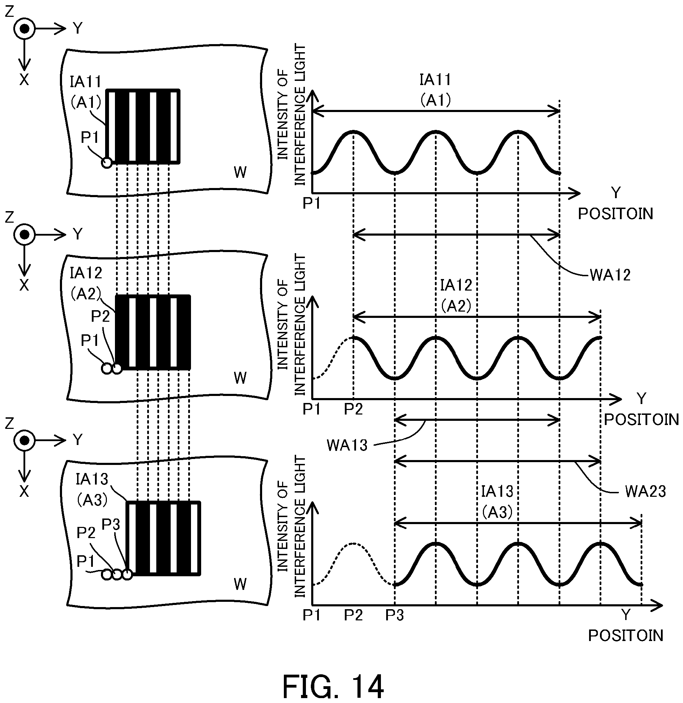

For example, FIG. 14 illustrates the interference area IA that moves from a workpiece area A1 spreading from a coordinate P1 on the surface of the workpiece W to a workpiece area A3 spreading from a coordinate P3 on the surface of the workpiece W through a workpiece area A2 spreading from a coordinate P2 on the surface of the workpiece W, together with the brightness and darkness of the interference fringe IS formed in the interference area IA. Incidentally, for simplification of the drawing, the brightness and darkness of the interference fringe IS is illustrated by using the intensity of the interference light that forms the interference fringe IS in FIG. 14. An area in which the intensity of the interference light is relatively high corresponds to the bright part IL of the interference fringe IS, and an area in which the intensity of the interference light is relatively low corresponds to the dark part ID of the interference fringe IS.

As illustrated in FIG. 14, the processing optical system 111b aligns the phase of the brightness and darkness (a phase of the intensity of the interference light, the same is applied in the below-described description) in the interference area IA formed in the workpiece area A1 (it is referred to as an interference area IA11) with the phase of the brightness and darkness in the interference area IA formed in the workpiece area A2 (it is referred to as an interference area IA12). The processing optical system 111b aligns the phase of the brightness and darkness in the interference area IA12 formed in the workpiece area A2 with the phase of the brightness and darkness in the interference area IA formed in the workpiece area A3 (it is referred to as an interference area IA13). The processing optical system 111b aligns the phase of the brightness and darkness in the interference area IA11 formed in the workpiece area A1 with the phase of the brightness and darkness in the interference area IA13 formed in the workpiece area A2.

As a result, a continuity among the riblet structure RB formed in workpiece area WA1 in which the interference area IA11 is set, the riblet structure RB formed in workpiece area WA2 in which the interference area IA12 is set, and the riblet structure RB formed in workpiece area WA3 in which the interference area IA13 is set is ensured. Namely, the continuity between the riblet structure RB formed in the first area on which the interference area IA1 is set on the surface of the workpiece W and the riblet structure RB formed in the second area in which the interference area IA2 is set on the surface of the workpiece W is ensured. Therefore, the processing system SYSb can form the riblet structure RB having the appropriate shape.

Incidentally, in the example illustrated in FIG. 14, the workpiece area A1 partially overlaps with each of the workpiece areas A2 and A3, the workpiece area A2 partially overlaps with each of the workpiece areas A1 and A3, and the workpiece area A3 partially overlaps with each of the workpiece areas A1 and A2. In this case, as described above, the state in which the phase of the brightness and darkness of the interference fringe IS in the workpiece area A1 (the interference area IA11) and the phase of the brightness and darkness of the interference fringe IS in the workpiece area A2 (the interference area IA12) are aligned with each other may include a state in which the positions of the bright part IL and the dark part ID formed in the interference area IA11 are the same as the positions of the bright part IL and the dark part ID formed in the interference area IA12, respectively, in an overlapping area WA12 in which the interference area IA11 and the interference area IA12 overlaps with each other at least partially. Similarly, the state in which the phase of the brightness and darkness of the interference fringe IS in the workpiece area A2 (the interference area IA12) and the phase of the brightness and darkness of the interference fringe IS in the workpiece area A3 (the interference area IA13) are aligned with each other may include a state in which the positions of the bright part IL and the dark part ID formed in the interference area IA12 are the same as the positions of the bright part IL and the dark part ID formed in the interference area IA13, respectively, in an overlapping area WA23 in which the interference area IA12 and the interference area IA13 overlaps with each other at least partially. Similarly, the state in which the phase of the brightness and darkness of the interference fringe IS in the workpiece area A1 (the interference area IA11) and the phase of the brightness and darkness of the interference fringe IS in the workpiece area A3 (the interference area IA13) are aligned with each other may include a state in which the positions of the bright part IL and the dark part ID formed in the interference area IA11 are the same as the positions of the bright part IL and the dark part ID formed in the interference area IA13, respectively, in an overlapping area WA13 in which the interference area IA11 and the interference area IA13 overlaps with each other at least partially.

However, the workpiece area A1 may not overlap with at least one of the workpiece areas A2 and A3. The workpiece area A2 may not overlap at least one of the workpiece areas A1 and A3. The workpiece area A3 may not overlap with at least one of the workpiece areas A1 and A2. The workpiece area A1 may be adjacent to at least one of the workpiece areas A2 and A3 along the pitch direction of the interference fringe IS. The workpiece area A2 may be adjacent to at least one of the workpiece areas A1 and A3 along the pitch direction of the interference fringe IS. The workpiece area A3 may be adjacent to at least one of the workpiece areas A1 and A2 along the pitch direction of the interference fringe IS.

Namely, the first area on the surface of the workpiece W in which the interference area IA1 before it moves is set and the second area on the surface of the workpiece W in which the interference area IA2 after it has moved is set may overlap with each other or may not overlap with each other. The first area on the surface of the workpiece W in which the interference area IA1 before it moves is set and the second area on the surface of the workpiece W in which the interference area IA2 after it has moved is set may be adjacent each other along the pitch direction of the interference fringe IS.

In order to align the phase of the brightness and darkness in the interference area IA1 with the phase of the brightness and darkness in the interference area IA2, the processing optical system 111b may change the characteristic of at least one of the processing lights EL1#1 and EL1#2 for forming the interference fringe IS under the control of the control apparatus 3. For example, the processing optical system 111b may change the characteristic of at least one of the processing lights EL1#1 and EL1#2 in accordance with the movement of the interference area IA (namely, in accordance with the movement of the dividing optical system 1112b and the processing light EL#1 to EL#2). In this case, the processing optical system 111b may include an optical characteristic change apparatus that is configured to change the characteristic of at least one of the processing light EL1#1 and EL1#2.

As described above, the processing optical system 111b includes the phase adjustment optical systems 11123b and 11124b as one example of the optical characteristic change apparatus. In this case, at least one of the phase adjustment optical systems 11123b and 11124b may change (namely, adjust) the phase of at least one of the processing light EL1#1 and EL1#2 under the control of the control apparatus 3 in order to align the phase of the brightness and darkness in the interference area IA1 with the phase of the brightness and darkness in the interference area IA2.

In a case where the phase of at least one of the processing lights EL1#1 and EL1#2 is changed, at least one of the phase adjustment optical systems 11123b and 11124b may change a difference in phase between the processing lights EL1#1 and EL1#2. Namely, at least one of the phase adjustment optical systems 11123b and 11124b may change the difference in phase between the processing lights EL1#1 and EL1#2 so that the difference in phase between the processing lights EL1#1 and EL1#2 is set to a desired value that allows the phase of the brightness and darkness in the interference area IA1 to be aligned with the phase of the brightness and darkness in the interference area IA2.

As one example, the difference in phase between the processing lights EL1#1 and EL1#2 varies depending on a distance h (see FIG. 11 to FIG. 12) in the pitch direction of the interference fringe IS between the optical axis AX of the fsinθ lens 11133b and a center of the interference area IA in the pitch direction of the interference fringe IS. Therefore, if the difference in phase between the processing lights EL1#1 and EL1#2 is not actively changed in accordance with the movement of the interference area IA, there is a possibility that the difference in phase between the processing lights EL1#1 and EL1#2 is a value that is different from the desired value that allows the phase of the brightness and darkness in the interference area IA1 to be aligned with the phase of the brightness and darkness in the interference area IA2. Therefore, at least one of the phase adjustment optical systems 11123b and 11124b may change the difference in phase between the processing light EL1#1 and EL1#2 based on the distance h between the optical axis AX and the center of the interference area IA. Specifically, at least one of the phase adjustment optical systems 11123b and 11124b may set, based on the distance h, the difference in phase between the processing light EL1#1 and EL1#2 to be the desired value that allows the phase of the brightness and darkness in the interference area IA1 to be aligned with the phase of the brightness and darkness in the interference area IA2.

Incidentally, the distance h between the optical axis AX and the center of the interference area IA varies depending on a position at which the interference fringe IS is formed on the workpiece W. Therefore, an operation for changing the difference in phase between the processing lights EL1#1 and EL1#2 based on the distance h may be considered to be equivalent to an operation for changing the difference in phase between the processing lights EL1#1 and EL1#2 based on the position at which the interference fringe IS is formed on the workpiece W.

In a case where the difference in phase between the processing lights EL1#1 and EL1#2 is changed based on the distance h, at least one of the phase adjustment optical systems 11123b and 11124b may change the difference in phase between the processing lights EL1#1 and EL1#2 so as to satisfy an equation 1 of "Δα = -2πh/P". "Δα" in the equation 1 represents the difference in phase between the processing lights EL1#1 and EL1#2 at a focal point (a focal plane) of the interference optical system 1113b, and "P" represents a pitch of the interference fringe IS. The pitch of the interference fringe IS may be the pitch of the bright part IL (namely, the interval between two adjacent bright parts IL). The pitch of interference fringe IS may be the pitch of dark parts ID (namely, the interval between two adjacent dark parts ID). The pitch of interference fringe IS may be the interval between adjacent bright part IL and dark part ID.

The equation 1 indicates an optical condition that is necessary to align the phase of the brightness and darkness in the interference area IA1 with the phase of the brightness and darkness in the interference area IA2. Therefore, when the difference in phase between the processing lights EL1#1 and EL1#2 is changed so as to satisfy the equation 1, the phase of the brightness and darkness in the interference area IA1 is aligned with the phase of the brightness and darkness in the interference area IA2.

As one example, in a case where the distance between the optical axis AX and the center of the interference area IA is a distance h1, the phase adjustment optical system 11123b may set the phase of the processing light EL1#1 to a value α11 that realizes a state in which the difference Δα in phase between the processing light EL1#1 and EL1#2 is "-2π × h1/P". In addition to or instead of the phase adjustment optical system 11123b setting the phase of the processing light EL1#1, the phase adjustment optical system 11124b may set the phase of the processing light EL1#2 to a value α12 that realizes a state in which the difference Δα in phase between the processing light EL1#1 and EL1#2 is "-2π × h1/P". As a result, the interference area IA is irradiated with the processing light EL1#1 whose phase is set to be the value α11 and / or the processing light EL1#2 whose phase is set to be the value α12. Furthermore, in a case where the distance between the optical axis AX and the center of the interference area IA is changed from the distance h1 to a distance h2 due to the movement of the interference area IA, the phase adjustment optical system 11123b may set the phase of the processing light EL1#1 to a value α21 (typically, a value that is different from the above-described value α11) that realizes a state in which the difference Δα in phase between the processing light EL1#1 and EL1#2 is "-2π × h2/P". In addition to or instead of the phase adjustment optical system 11123b setting the phase of the processing light EL1#1, the phase adjustment optical system 11124b may set the phase of the processing light EL1#2 to a value α22 (typically, a value that is different from the above-described value α12) that realizes a state in which the difference Δα in phase between the processing light EL1#1 and EL1#2 is "-2π × h2/P". As a result, the interference area IA is irradiated with the processing light EL1#1 whose phase is set to be the value α21 and / or the processing light EL1#2 whose phase is set to be the value α22. As a result, the phase of the brightness and darkness in the interference area IA before it moves is aligned with the phase of the brightness and darkness in the interference area IA after it has moved.

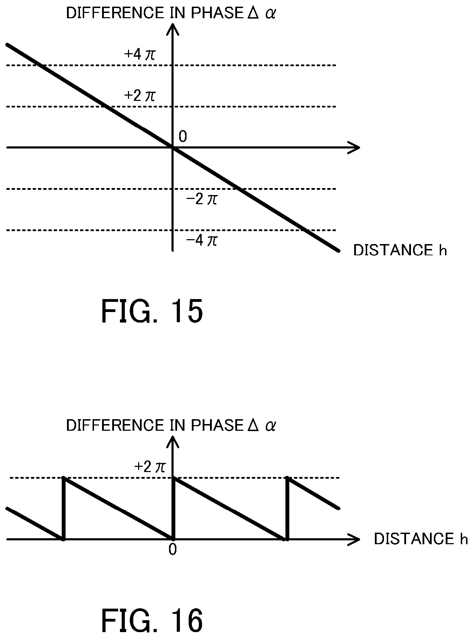

Here, in a case where the difference in phase between the processing lights EL1#1 and EL1#2 is changed so as to satisfy the above-described equation 1, there is a possibility that the difference in phase between the processing lights EL1#1 and EL1#2 is larger than 2π or is smaller than -2π as the distance h is changed. Specifically, as illustrated in FIG. 15 that is a graph illustrating a relationship between the distance h and the difference Δα in phase represented by the equation 1, the difference in phase between processing lights EL1#1 and EL1#2 is larger than 2π or is smaller than -2π in a case where the absolute value of the distance h us larger than a certain value,. On the other hand, a state in which the difference in phase between the processing lights EL1#1 and EL1#2 is a certain value α is equivalent to a state in which the difference in phase between the processing lights EL1#1 and EL1#2 is a value obtained by adding an integral multiple of 2π to the certain value α. Therefore, at least one of the phase adjustment optical systems 11123b and 11124b may change the difference in phase between the processing lights EL1#1 and EL1#2 so that the above-described equation 1 is satisfied and the difference Δα in phase is within a phase range from 0 to 2π, as illustrated in FIG. 16. For example, at least one of the phase adjustment optical systems 11123b and 11124b may change the difference in phase between the processing lights EL1#1 and EL1#2 so that it is within a phase range from 0 to 2π by subtracting 2π from the difference Δα in phase every time the difference Δα in phase reaches 2π or adding 2π to the difference Δα in phase every time the difference Δα in phase reaches 0 (namely, resetting the difference Δα in phase). As a result, the configurations of the phase adjustment optical systems 11123b and 11124b for adjusting the phase difference Δα can be simplified.

Incidentally, in a case where the phase of the brightness and darkness in the interference area IA1 before it moves is aligned with the phase of the brightness and darkness in the interference area IA2 after it has moved, the processing optical system 111b may be considered to substantially move, in the interference area IA, the bright part IL and the dark part ID included in the interference fringe IS, as can be seen in FIG. 14. Namely, the processing optical system 111b may be considered to move the interference fringe IS in the manner illustrated in the above-described FIG. 5B.

### (2-4) Technical Effect of Processing System SYSb

As described above, the processing system SYSb is configured to move the interference fringe IS along the pitch direction of the interference fringe IS by moving the dividing optical system 1112b along the pitch direction of the interference fringe IS. Therefore, the processing system SYSb can move the interference fringe IS without moving the processing head 11 by using the head driving system 12 and without moving the stage 13 by using the stage driving system 14. Therefore, the processing system SYSb can move the interference fringe IS at a higher speed, compared to a case where the interference fringe IS is moved by moving the processing head 11 by using the head driving system 12 and / or moving the stage 13 by using the stage driving system 14. As a result, the processing system SYSb can efficiently form the above-described riblet structure RB by moving the interference fringe IS at a high speed, as with the above-described processing system SYSa. For example, in a case where the multi-patterning that forms, in the same area on the workpiece W, the plurality of interference fringes IS is performed, the processing system SYSb can reduce the time quired to start the second processing after completing the first processing. As a result, the processing system SYSb can increase the throughput for forming the riblet structure RB.

### (2-5) Modified Example of Processing System SYSb

As described above, the processing optical system 111b is configured to move the interference area IA on the workpiece W by moving the dividing optical system 1112b. The processing optical system 111b is configured to move the interference area IA on the workpiece W without moving the interference optical system 1113b (especially, the fsinθ lens 11133b that is the terminal optical element). Therefore, the processing optical system 111b may not move the interference optical system 1113b (especially, the fsinθ lens 11133b) in moving the interference area IA by moving the dividing optical system 1112b. In other words, the processing optical system 111b may not change a relative positional relationship between the interference optical system 1113b (especially, the fsinθ lens 11133b) and the workpiece W in moving the interference area IA by moving the dividing optical system 1112b. However, the processing optical system 111b may move the interference optical system 1113b (especially, the fsinθ lens 11133b) in moving the interference area IA by moving the dividing optical system 1112b. In other words, the processing optical system 111b may change the relative positional relationship between the interference optical system 1113b (especially, the fsinθ lens 11133b) and the workpiece W in moving the interference area IA by moving the dividing optical system 1112b.

In the above-described description, in order to move the interference area IA, the processing system SYSb moves the exit position at which the processing light EL1#1 is emitted from the fsinθ lens 11133b and the exit position at which the processing light EL1#2 is emitted from the fsinθ lens 11133b by moving the dividing optical system 1112b. However, the processing system SYSb may change an exit direction in addition to or instead of moving the exit position by moving the dividing optical system 1112b. Specifically, the processing system SYSb may change an exit direction along which the processing light EL1#1 is emitted from the fsinθ lens 11133b. Namely, the processing system SYSb may change the exit direction of the processing light EL1#1, which propagates from the fsinθ lens 11133b toward the workpiece W, from the fsinθ lens 11133b. Similarly, the processing system SYSb may change an exit direction along which the processing light EL1#2 is emitted from the fsinθ lens 11133b. Namely, the processing system SYSb may change the exit direction of the processing light EL1#2, which propagates from the fsinθ lens 11133b toward the workpiece W, from the fsinθ lens 11133b. When the exit direction of the processing light EL1#1 from the fsinθ lens 11133b is changed, the area that is irradiated with the processing light EL1#1 on the workpiece W moves. Similarly, when the exit direction of the processing light EL1#2 from the fsinθ lens 11133b is changed, the area that is irradiated with the processing light EL1#2 on the workpiece W moves. As a result, the interference area IA, in which the interference fringe IS is formed by the interference between the processing lights EL1#1 and EL1#2 on the workpiece W, moves. Therefore, the processing system SYSb can move the interference area IA by changing the exit direction in addition to or instead of the exit position.

In order to change the exit direction along which the processing light EL1#1 is emitted from the fsinθ lens 11133b, the processing optical system 111b may include a Galvano mirror that is configured to deflect the processing light EL1#1. Incidentally, the Galvano mirror that is configured to deflect the processing light EL1#1 is configured to change the exit position at which the processing light EL1#1 is emitted from the fsinθ lens 11133b in addition to changing the exit direction along which the processing light EL1#1 is emitted from the fsinθ lens 11133b. Therefore, the processing system SYSb may change the exit position at which the processing light EL1#1 is emitted from the fsinθ lens 11133b by deflecting the processing light EL1#1 by using Galvano mirror in addition to or instead of moving the dividing optical system 1112b.

Similarly, in order to change the exit direction along which the processing light EL1#2 is emitted from the fsinθ lens 11133b, the processing optical system 111b may include a Galvano mirror that is configured to deflect the processing light EL1#1. Incidentally, the Galvano mirror that is configured to deflect the processing light EL1#2 is configured to change the exit position at which the processing light EL1#2 is emitted from the fsinθ lens 11133b in addition to changing the exit direction along which the processing light EL1#2 is emitted from the fsinθ lens 11133b. Therefore, the processing system SYSb may change the exit position at which the processing light EL1#2 is emitted from the fsinθ lens 11133b by deflecting the processing light EL1#2 by using Galvano mirror in addition to or instead of moving the dividing optical system 1112b.

### (3) Processing System SYS in Third Example Embodiment

Next, the processing system SYS in a third example embodiment will be described. In the below-described description, the processing system SYS in the third example embodiment is referred to as the "processing system SYSc".

### (3-1) Configuration of Processing System SYSc

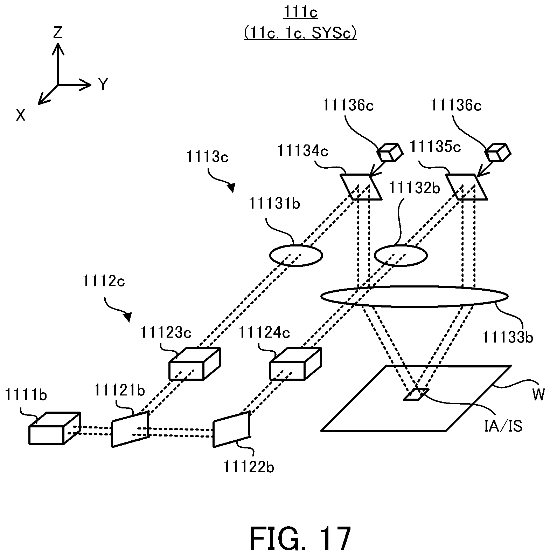

Firstly, a configuration of the processing system SYSb in the third example embodiment is described. The processing system SYSc in the third embodiment is different from the processing system SYSb in the second embodiment described above in that it includes a processing apparatus 1c instead of the processing apparatus 1b. Other feature of the processing system SYSc may be the same as other feature of the processing system SYSb. The processing apparatus 1c is different from the processing apparatus 1b in that it includes a processing head 11c instead of the processing head 11b. Other feature of the processing apparatus 1c may be the same as other feature of the processing apparatus 1b. The processing head 11c is different from the processing head 11b in that it includes a processing optical system 111c instead of the processing optical system 111b. Other feature of the processing head 11c may be the same as other feature of the processing head 11b. Therefore, in the below-described description, a configuration of the processing optical system 111c in the third example embodiment will be described with reference to FIG. 17. FIG. 17 is a cross-sectional view that illustrates the configuration of the processing optical system 111c in the third example embodiment.

As illustrated in FIG. 17, the processing optical system 111c in the third embodiment is different from the above-described processing optical system 111b in the second embodiment in that it has a dividing optical system 1112c and an interference optical system 1113c instead of the dividing optical system 1112b and the interference optical system 1113b. Furthermore, the processing optical system 111c is different from the processing optical system 111b in that it may not include the actuator 1114b. Other feature of the processing optical system 111c may be the same as other feature of the processing optical system 111b.

The dividing optical system 1112c is different from the dividing optical system 1112b in that it includes optical characteristic change apparatuses 11123c and 11124c instead of the phase adjustment optical systems 11123b and 11124b. Other feature of the dividing optical system 1112c may be the same as other feature of the dividing optical system 1112b. The interference optical system 1113c is different from the interference optical system 1113b in that it includes a mirror 11134c, a mirror 11135c, an actuator 11136c, and an actuator 11137c. Other feature of the interference optical system 1113c may be the same as other feature of the interference optical system 1113b.

The processing light EL1#1 reflected by the beam splitter 11121b enters the optical characteristic change apparatus 11123c. Therefore, the optical characteristic change apparatus 11123c is positioned in the optical path of the processing light EL1#1. The optical characteristic change apparatus 11123c is configured to change the characteristic of the processing light EL1#1. For example, the optical characteristic change apparatus 11123c is configured to change the intensity of the processing light EL1#1.

The processing light EL1#2 that has passed through the beam splitter 11121b enters the optical characteristic change apparatus 11124c. Therefore, the optical characteristic change apparatus 11124c is positioned in the optical path of the processing light EL1#2. The optical characteristic change apparatus 11124c is configured to change the characteristic of the processing light EL1#2. For example, the optical characteristic change apparatus 11124c is configured to change the intensity of the processing light EL1#2.

The processing light EL1#1 whose characteristic has been changed by the optical characteristic change apparatus 11123c enters the mirror 11134c through the fsinθ lens 11131b. The mirror 11134c reflects the processing light EL1#1 toward the fsinθ lens 11133b. Namely, the mirror 11134c deflects the processing light EL1#1 so that the processing light EL1#1 enters the fsinθ lens 11133b. Incidentally, the mirror 11134c may be referred to as a deflection optical system or a deflection member.

The processing light EL1#2 whose characteristic has been changed by the optical characteristic change apparatus 11124c enters the mirror 11135c through the fsinθ lens 11132b. The mirror 11135c reflects the processing light EL1#2 toward the fsinθ lens 11133b. Namely, the mirror 11135c deflects the processing light EL1#2 so that the processing light EL1#2 enters the fsinθ lens 11133b. Incidentally, the mirror 11135c may be referred to as a deflection optical system or a deflection member.

The fsinθ lens 11133b irradiates the workpiece W with the processing light EL1#1 reflected by the mirror 11134c and the processing light EL1#2 reflected by the mirror 11135c. Specifically, the fsinθ lens 11133b condenses the processing lights EL1#1 and EL1#2 so that the processing lights EL1#1 and EL1#2 intersect each other at the surface of the workpiece W or near the surface of the workpiece W. As a result, the interference fringe IS is formed on the workpiece W by the interference light generated by the interference between the processing lights EL1#1 and EL1#2. Incidentally, the fsinθ lens 11133b may be referred to as an intersecting optical system.

The actuator 11136c moves the mirror 11134c under the control of the control apparatus 3. For example, the actuator 11136c may move the mirror 11134c along at least one of the X-axis direction, the Y-axis direction, and the Z-axis direction. For example, the actuator 11136c may rotationally move the mirror 11134c along at least one of the θX direction, the θY direction, and the θZ direction. Namely, for example, the actuator 11136c may rotate the mirror 11134c around at least one of a rotational axis along the X-axis, a rotational axis along the Y-axis, and a rotational axis along the Z-axis.

The actuator 11137c moves the mirror 11135c under the control of the control apparatus 3. For example, the actuator 11137c may move the mirror 11135c along at least one of the X-axis direction, the Y-axis direction, and the Z-axis direction. For example, the actuator 11137c may rotationally move the mirror 11135c along at least one of the θX direction, the θY direction, and the θZ direction. Namely, for example, the actuator 11137c may rotate the mirror 11135c around at least one of a rotational axis along the X-axis, a rotational axis along the Y-axis, and a rotational axis along the Z-axis. Incidentally, both of a linear movement along a linear axis and a rotational movement around a predetermined point may be referred to as a movement.

In the third example embodiment, the processing optical system 111c moves the interference fringe IS by moving the mirrors 11134c and 11135c by using at least one of the actuators 11136c and 11137c under the control of the control apparatus 3. Especially, the processing optical system 111c mainly moves the interference area IA along the extending direction of the interference fringe IS on the workpiece W by moving the mirrors 11134c and 11135c under the control of the control apparatus 3. Namely, in the third example embodiment, the processing optical system 111c mainly moves the interference fringe IS in the manner illustrated in above described FIG. 5A Incidentally, in the third example embodiment, the processing optical system 111c may move or may not move the bright part IL and the dark part ID included in the interference fringe IS in the interference area IA, in addition to moving the interference area IA on the workpiece W. Namely, the processing optical system 111c may further move or may not move the interference fringe IS in the manner illustrated in above-described FIG. 5B.

### (3-2) Specific Method for Moving Interference Area IA along Extending Direction of Interference Fringe IS on Workpiece W

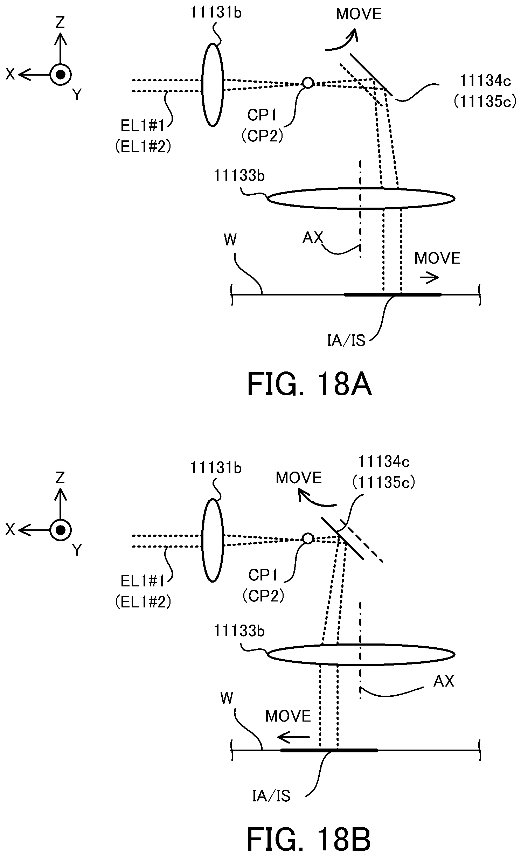

Next, with reference to FIG. 18A and FIG. 18B in addition to FIG. 17, a specific method of moving the interference area IA along the extending direction of the interference fringe IS on the workpiece W will be described. Each of FIG. 18A and FIG. 18B is a cross-sectional view that illustrates the processing optical system 111c that moves the interference area IA along the extending direction of the interference fringe IS on the workpiece W. Incidentally, the extending direction of the interference fringe IS may be referred to as a direction that intersects the pitch direction of the interference fringe IS or a direction that is orthogonal to the pitch direction of the interference fringe IS.

As illustrated in FIG. 18A and FIG. 18B, in order to move the interference area IA along the extending direction of the interference fringe IS on the workpiece W, the actuator 11136c may move the mirror 11134c along a rotational direction that includes an extending direction of the interference fringe IS as its component. Furthermore, in order to move the interference area IA along the extending direction of the interference fringe IS on the workpiece W, the actuator 11137c may move the mirror 11135c along the rotational direction that includes the extending direction of the interference fringe IS as its component, in addition to or instead of moving the mirror 11134c. In the example illustrated in FIG. 18A and FIG. 18B, the extending direction of the interference fringe IS is the X-axis direction. Therefore, the actuators 11136c and 11137c move the mirrors 11134c and 11135c along the X-axis direction, respectively. Incidentally, FIG. 18A illustrates the mirrors 11134c and 11135c moving toward the -X side along the X-axis direction, and FIG. 18b illustrates the mirrors 11134c and 11135c moving toward the +X side along the X-axis direction. Incidentally, in a case where an optical system that bends the optical path is positioned between the mirrors 11134c and 11135c and the workpiece W, movement directions of the mirrors 11134c and 11135c may be determined based on an effect of the directional change by its optical system.

Incidentally, the extending direction of the interference fringe IS is the direction that intersects the optical axis AX of the interference optical system 1113b. Therefore, an operation for moving the mirrors 11134c and 11135c along the rotational direction including the extending direction of the interference fringe IS as its component may be regarded as one example of an operation for moving the mirrors 11134c and 11135c along the rotational direction including the direction intersecting the optical axis AX of the interference optical system 1113b as its component.

When the mirror 11134c moves along the rotational direction including the extending direction of the interference fringe IS as its component, the incident position at which the processing light EL1#1 enters the fsinθ lens 11133b is changed along the extending direction of the interference fringe IS. Similarly, when the mirror 11135c moves along the extending direction of the interference fringe IS, the incident position at which the processing light EL1#2 enters the fsinθ lens 11133b is changed along the extending direction of the interference fringe IS. At this time, an incident angle at which the processing light EL1#1 enters the fsinθ lens 11133b and an incident angle at which the processing light EL1#2 enters the fsinθ lens 11133b are also changed. For example, in a case where the mirror 11134c moves along the rotational direction including the -X-axis direction as its component as illustrated in FIG. 18A, the incident position at which the processing light EL1#1 enters the fsinθ lens 11133b also moves toward the -X direction side. For example, in a case where the mirror 11134c moves along the rotational direction including the +X-axis direction as its component as illustrated in FIG. 18B, the incident position at which the processing light EL1#1 enters the fsinθ lens 11133b also moves toward the +X direction side. Namely, in the example illustrated in FIG. 18A and FIG. 18B, the incident position at which the processing light EL1#1 enters the fsinθ lens 11133b moves toward a direction that is the same as a direction that includes a component parallel to the extending direction of the interference fringe IS. Similarly, for example, in a case where the mirror 11135c moves toward the -X side as illustrated in FIG. 18A, the incident position at which the processing light EL1#2 enters the fsinθ lens 11133b also moves toward the -X direction side. For example, in a case where the mirror 11135c moves along the rotational direction including the +X-axis direction as its component as illustrated in FIG. 18B, the incident position at which the processing light EL1#2 enters the fsinθ lens 11133b also moves toward the +X direction side. Namely, in the example illustrated in FIG. 18A and FIG. 18B, the incident position at which the processing light EL1#2 enters the fsinθ lens 11133b moves toward a direction that is the same as a direction that includes a component parallel to the extending direction of the interference fringe IS.

When the incident angle at which the processing light EL1#1 enters the fsinθ lens 11133b is changed in a plane including the axis in the extending direction of the interference fringe IS and the optical axis, the exit position at which the processing light EL1#1 is emitted from the fsinθ lens 11133b is also changed along the extending direction of the interference fringe IS. Similarly, when the incident angle at which the processing light EL1#2 enters the fsinθ lens 11133b is changed in a plane including the axis in the extending direction of the interference fringe IS and the optical axis, the exit position at which the processing light EL1#2 is emitted from the fsinθ lens 11133b is also changed along the extending direction of the interference fringe IS. For example, when the mirror 11134c moves along the rotational direction (-θY direction) including the -X-axis direction as its component as illustrated in FIG. 18A, the exit position at which the processing light EL1#1 is emitted from the fsinθ lens 11133b also moves toward the -X side. For example, when the mirror 11134c moves along the rotational direction (+θY direction) including the +X-axis direction as its component as illustrated in FIG. 18B, the exit position at which the processing light EL1#1 is emitted from the fsinθ lens 11133b also moves toward the +X side. Namely, in the example illustrated in FIG. 18A and FIG. 18B, the movement direction of the exit position at which the processing light EL1#1 is emitted from the fsinθ lens 11133b is the same as a linear direction component included in the movement direction of the mirror 11134c. Similarly, for example, when the mirror 11135c moves along the rotational direction (-θY direction) including the -X-axis direction as its component as illustrated in FIG. 18A, the exit position at which the processing light EL1#2 is emitted from the fsinθ lens 11133b also moves toward the -X side. For example, when the mirror 11135c moves along the rotational direction (+θY direction) including the +X-axis direction as its component as illustrated in FIG. 18B, the exit position at which the processing light EL1#2 is emitted from the fsinθ lens 11133b also moves toward the +X side. Namely, in the example illustrated in FIG. 18A and FIG. 18B, the movement direction of the exit position at which the processing light EL1#2 is emitted from the fsinθ lens 11133b is the same as a linear direction component included in the movement direction of the mirror 11135c.

When the exit position at which the processing light EL1#1 is emitted from the fsinθ lens 11133b is changed along the extending direction of the interference fringe IS, the processing light EL1#1 emitted from the fsinθ lens 11133b moves along the extending direction of the interference fringe IS relative to the fsinθ lens 11133b. Similarly, when the exit position at which the processing light EL1#2 is emitted from the fsinθ lens 11133b is changed along the extending direction of the interference fringe IS, the processing light EL1#2 emitted from the fsinθ lens 11133b moves along the extending direction of the interference fringe IS relative to the fsinθ lens 11133b.

When the processing light EL1#1 moves along the extending direction of the interference fringe IS relative to the fsinθ lens 11133b, the area that is irradiated with the processing light EL1#1 on the workpiece W moves along the extending direction of the interference fringe IS. Similarly, when the processing light EL1#2 moves along the extending direction of the interference fringe IS relative to the fsinθ lens 11133b, the area that is irradiated with the processing light EL1#2 on the workpiece W moves along the extending direction of the interference fringe IS. As a result, the interference area IA, in which the interference fringe IS is formed by the interference between the processing lights EL1#1 and EL1#2 on the workpiece W, moves along the extending direction of the interference fringe IS. For example, when the mirrors 11134c and 11135c move toward the -X side as illustrated in FIG. 18A, the interference area IA moves toward the -X side. For example, when the mirrors 11134c and 11135c move toward the +X side as illustrated in FIG. 18B, the interference area IA moves toward the +X side. Namely, in the example of processing optical system 111c illustrated in FIG. 18A and FIG. 18B, the interference fringe IS moves toward a direction that is the same as a direction toward which the mirrors 11134c and 11135c move.

Thus, the processing optical system 111c can move the interference area IA on the workpiece W along the extending direction of the interference fringe IS by moving the mirrors 11134c and 11135c along the rotational direction including the extending direction of the interference fringe IS by using at least one of the actuators 11136c and 11137c. Incidentally, since the actuators 11136c and 11137c are configured to move the processing lights EL1#1 and EL1#2 relative to fsinθ lens 11133b by moving the mirrors 11134c and 11135c, respectively, each of the actuators 11136c and 11137c may be referred to as a movement apparatus.

The actuator 11136c may move the mirror 11134c so that a converged position CP1 of the processing light EL1#1 does not move. For example, the actuator 11136c may move the mirror 11134c so that a distance (especially, a distance along the optical path of the processing light EL1#1) between the converged position CP1 of the processing light EL1#1 and the fsinθ lens 11133b does not change. The processing light EL1#1 is converged at the focal position of the fsinθ lens 11133b. Therefore, the actuator 11136c may move the mirror 11134c so that the focal position of the fsinθ lens 11133b does not move.

Similarly, the actuator 11137c may move the mirror 11135c so that a converged position CP2 of the processing light EL1#2 does not move. For example, the actuator 11137c may move the mirror 11135c so that a distance (especially, a distance along the optical path of the processing light EL1#2) between the converged position CP2 of the processing light EL1#2 and the fsinθ lens 11133b does not change. The processing light EL1#2 is converged at the focal position of the fsinθ lens 11133b. Therefore, the actuator 11137c may move the mirror 11135c so that the focal position of the fsinθ lens 11133b does not move. As a result, even in a case where the mirrors 11134c and 11135c move, the processing system SYSc can form the appropriate interference fringe IS on the surface of the workpiece W.

In a case where the exit position at which the processing light EL1#1 is emitted from the fsinθ lens 11133b is changed by moving the mirror 11134c, there is a possibility that the intensity of the processing light EL1#1 on the workpiece W changes depending on the exit position. This is because there is a possibility that a three-dimensional exit angle of the processing light EL1#1 from the fsinθ lens 11133b is different from a three-dimensional angle that can uniform an illumination intensity of the processing light EL1#1 on the workpiece W. Therefore, the optical characteristic change apparatus 11123c may change the intensity of the processing light EL1#1 in accordance with the movement of the mirror 11134c. For example, the optical characteristic change apparatus 11123c may change the intensity of the processing light EL1#1 so that the intensity of the processing light EL1#1 on the surface of the workpiece W is maintained at a desired intensity or the illumination intensity of the processing light EL1#1 on the surface of the workpiece W is uniform, even in a case where the mirror 11134c moves. Similarly, in a case where the exit position at which the processing light EL1#2 is emitted from the fsinθ lens 11133b is changed by moving the mirror 11135c, there is a possibility that the intensity of the processing light EL1#2 changes depending on the exit position. Therefore, the optical characteristic change apparatus 11124c may change the intensity of the processing light EL1#2 in accordance with the movement of the mirror 11135c. For example, the optical characteristic change apparatus 11124c may change the intensity of the processing light EL1#2 so that the intensity of the processing light EL1#2 on the surface of the workpiece W is maintained at a desired intensity or the illumination intensity of the processing light EL1#2 on the surface of the workpiece W is uniform, even in a case where the mirror 11135c moves. As a result, even in a case where the mirrors 11134c and 11135c move, the processing system SYSc can form the appropriate interference fringe IS on the surface of the workpiece W.

### (3-3) Technical Effect of Processing System SYSc

As described above, the processing system SYSc is configured to move the interference fringe IS along the extending direction of the interference fringe IS by moving at least one of the mirrors 11134c and 11135c along the extending direction of the interference fringe IS. Therefore, the processing system SYSc can move the interference fringe IS without moving the processing head 11 by using the head driving system 12 and without moving the stage 13 by using the stage driving system 14. Therefore, the processing system SYSc can move the interference fringe IS at a higher speed, compared to a case where the interference fringe IS is moved by moving the processing head 11 by using the head driving system 12 and / or moving the stage 13 by using the stage driving system 14. As a result, the processing system SYSc can efficiently form the above-described riblet structure RB by moving the interference fringe IS at a high speed, as with the above-described processing system SYSb. For example, in a case where the multi-patterning that forms, in the same area on the workpiece W, the plurality of interference fringes IS is performed, the processing system SYSc can reduce the time quired to start the second processing after completing the first processing. As a result, the processing system SYSc can increase the throughput for forming the riblet structure RB.

### (3-4) Modified Example of Processing System SYSc

As described above, the processing optical system 111c is configured to move the interference area IA on the workpiece W by moving at least one of the mirrors 11134c and 11135c. The processing optical system 111c is configured to move the interference area IA on the workpiece W without moving the fsinθ lens 11133b. Therefore, the processing optical system 111c may not move the fsinθ lens 11133b in moving the interference area IA by moving at least one of the mirrors 11134c and 11135c. In other words, the processing optical system 111c may not change a relative positional relationship between the fsinθ lens 11133b and the workpiece W in moving the interference area IA by moving at least one of the mirrors 11134c and 11135c. However, the processing optical system 111c may move the fsinθ lens 11133b in moving the interference area IA by moving at least one of the mirrors 11134c and 11135c. In other words, the processing optical system 111c may change the relative positional relationship between the fsinθ lens 11133b and the workpiece W in moving the interference area IA by moving at least one of the mirrors 11134c and 11135c.

In the above-described description, in order to move the interference area IA, the processing system SYSc moves at least one of the exit position at which the processing light EL1#1 is emitted from the fsinθ lens 11133b and the exit position at which the processing light EL1#2 is emitted from the fsinθ lens 11133b by moving at least one of the mirrors 11134c and 11135c. However, the processing system SYSc may change the exit direction in addition to or instead of moving the exit position by moving at least one of the mirrors 11134c and 11135c, as with the above-described processing system SYSb. Specifically, the processing system SYSc may change at least one of the exit direction along which the processing light EL1#1 is emitted from the fsinθ lens 11133b and the exit direction along which the processing light EL1#2 is emitted from the fsinθ lens 11133b. As a result, the processing system SYSb can move the interference area IA by changing the exit direction in addition to or instead of moving the exit position, as with the processing system SYSb. Incidentally, the processing optical system 111c may include a Galvano mirror that is configured to deflect the processing light EL1#1 in order to change the exit direction along which the processing light EL1#1 is emitted from the fsinθ lens 11133b, as with the above-described processing optical system 111b. Similarly, the processing optical system 111c may include a Galvano mirror that is configured to deflect the processing light EL1#2 in order to change the exit direction along which the processing light EL1#2 is emitted from the fsinθ lens 11133b, as with the above-described processing optical system 111b.

In a case where the fsinθ lens 11133b is an optical system in which there is no difference in refractive power between a vertical direction and a horizontal direction, the actuator 11136c may move the mirror 11134c so as to change the incident angle at which the processing light EL1#1 enters the fsinθ lens 11133b. In order to change the incident angle, the actuator 11136c may typically rotate the mirror 11134c around at least one of the rotational axis along the X-axis, the rotational axis along the Y-axis, and the rotational axis along the Z-axis. Similarly, in a case where the fsinθ lens 11133b is the optical system in which there is no difference in refractive power between a vertical direction and a horizontal direction, the actuator 11137c may move the mirror 11135c so as to change the incident angle at which the processing light EL1#2 enters the fsinθ lens 11133b. In order to change the incident angle, the actuator 11137c may typically rotate the mirror 11135c around at least one of the rotational axis along the X-axis, the rotational axis along the Y-axis, and the rotational axis along the Z-axis. In this case, the processing system SYSc can form the appropriate interference fringe IS on the surface of the workpiece W even in a case where the fsinθ lens 11133b is the optical system in which there is no difference in refractive power between a vertical direction and a horizontal direction.

### (4) Processing System SYS in Fourth Example Embodiment

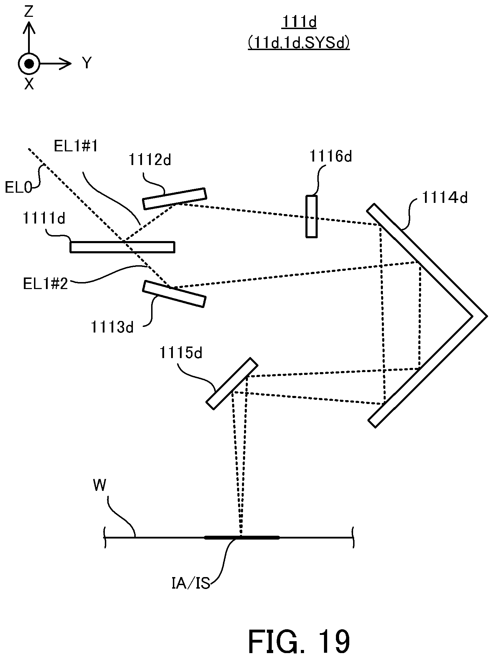

Next, the processing system SYS in a fourth example embodiment will be described. In the below-described description, the processing system SYS in the fourth example embodiment is referred to as the "processing system SYSd". The processing system SYSd in the fourth embodiment is different from the processing system SYSa in the first embodiment described above in that it includes a processing apparatus 1d instead of the processing apparatus 1. Other feature of the processing system SYSd may be the same as other feature of the processing system SYSa. The processing apparatus 1d is different from the processing apparatus 1 in that it includes a processing head 11d instead of the processing head 11. Other feature of the processing apparatus 1d may be the same as other feature of the processing apparatus 1. The processing head 11d is different from the processing head 11 in that it includes a processing optical system 111d instead of the processing optical system 111. Other feature of the processing head 11d may be the same as other feature of the processing head 11. Therefore, in the below-described description, a configuration of the processing optical system 111d in the fourth example embodiment will be described with reference to FIG. 19. FIG. 19 is a cross-sectional view that illustrates the configuration of the processing optical system 111d in the fourth example embodiment.

As illustrated in FIG. 19, the processing optical system 111d includes a beam splitter 1111d, a mirror 1112d, a mirror 1113d, a retroreflective mirror 1114d, a mirror 1115d, and a phase adjustment optical system 1116d.

The processing light EL0 emitted from the processing light source 2 enters the beam splitter 1111d. The beam splitter 1111d may have the same configuration as the above-described beam splitter 11121b. Therefore, a part of the processing light EL0 that has entered the beam splitter 1111d is reflected by the beam splitter 1111d as the processing light EL1#1. Another part of the processing light EL0 that has entered the beam splitter 1111d passes through the beam splitter 1111d as the processing light EL1#2.

The processing light EL1#1 that has been reflected by the beam splitter 1111d enters the mirror 1112d. The mirror 1112d reflects the processing light EL1#1 toward the retroreflective mirror 1114d through the phase adjustment optical system 1116d. The processing light EL1#2 that has passed through the beam splitter 1111d enters the mirror 1113d. The mirror 1113d reflects the processing light EL1#2 toward the retroreflective mirror 1114d.

The retroreflective mirror 1114d reflects each of the processing lights EL1#1 and EL1#2 toward the mirror 1115d. The mirror 1115d reflects each of the processing lights EL1#1 and EL1#2 toward the workpiece W. Especially, the mirror 1115d reflects the processing lights EL1#1 and EL1#2 so that the processing lights EL1#1 and EL1#2 intersect each other at the surface of the workpiece W or near the surface of the workpiece W. As a result, the interference fringe IS is formed on the workpiece W by interference light generated by an interference between the processing lights EL1#1 and EL1#2.

In the fourth example embodiment, the retroreflective mirror 1114d is positioned so that the optical path of each of the processing lights EL1#1 and EL1#2 entering the retroreflective mirror 1114d is the optical path along the pitch direction of the interference fringe IS. As a result, the retroreflective mirror 1114d reflects the processing lights EL1#1 and EL1#2 so that the optical path of the processing lights EL1#1 and EL1#2 that have been reflected by the retroreflective mirror 1114d is also the optical path along the pitch direction of the interference fringe IS.

In addition, in the fourth example embodiment, the processing optical system 111d moves the interference fringe IS by moving the retroreflective mirror 1114d and the mirror 1115d by using a non-illustrated actuator under the control of the control apparatus 3. Especially, the processing optical system 111d mainly moves the interference area IA along the pitch direction of the interference fringe IS on the workpiece W by moving the retroreflective mirror 1114d and the mirror 1115d under the control of the control apparatus 3. Namely, in the fourth embodiment, the processing optical system 111d moves the interference fringe IS in the same manner as the processing optical system 111b in the second embodiment.

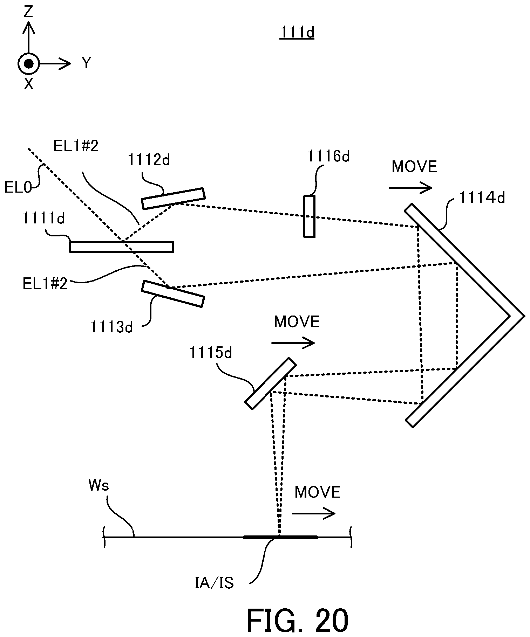

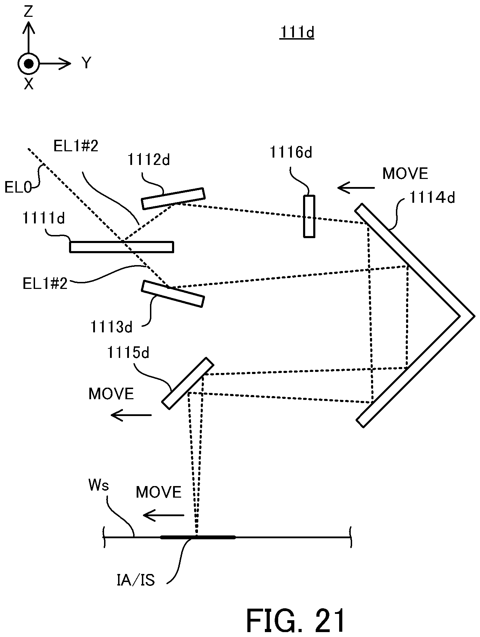

Specifically, as illustrated in FIG. 20 and FIG. 21 that are cross-sectional views illustrating the processing optical system 111d that moves the interference area IA along the pitch direction of the interference fringe IS on the workpiece W, the processing optical system 111d moves the retroreflective mirror 1114d and the mirror 1115d along the pitch direction of the interference fringe IS in order to move the interference area IA along the pitch direction of the interference fringe IS. In the example illustrated in FIG. 20 and FIG. 21, the pitch direction of the interference fringe IS is the Y-axis direction, so the processing optical system 111d moves the retroreflective mirror 1114d and the mirror 1115d along the Y-axis direction. Especially, the processing optical system 111d moves the retroreflective mirror 1114d and the mirror 1115d along the pitch direction of the interference fringe IS toward the same direction. Note that FIG. 20 illustrates an example in which the retroreflective mirror 1114d moves toward the +Y side along the Y-axis direction, and FIG. 21 illustrates an example in which the retroreflective mirror 1114d and mirror 1115d move toward the -Y side along the Y-axis direction.

The processing optical system 111d may move the retroreflective mirror 1114d and the mirror 1115d so that a length of the optical path of the processing lights EL1#1 and EL1#2 (for example, a length of the optical path between the beam splitter 1111d and the workpiece W) is fixed. Specifically, the processing optical system 111d may move the retroreflective mirror 1114d and the mirror 1115d so that a moving distance of the mirror 1115d is twice a moving distance of the retroreflective mirror 1114d. For example, in a case where the retroreflective mirror 1114d is moved by a first moving distance toward the +Y side, the processing optical system 111d may move the mirror 1115d by a second moving distance that is twice the first moving distance toward the +Y side. For example, in a case where the retroreflective mirror 1114d is moved by a third moving distance toward the +Y side, the processing optical system 111d may move the mirror 1115d by a fourth moving distance that is twice the third moving distance toward the -Y side. As a result, even in a case where the retroreflective mirror 1114d and the mirror 1115d move, the length of the optical paths of the processing lights EL1#1 and EL1#2 do not change.

When the retroreflective mirror 1114d and the mirror 1115d move, the area that is irradiated with the processing lights EL1#1 and EL1#2 on the workpiece W moves along the pitch direction of the interference fringe IS. As a result, the interference area IA, in which the interference fringe IS is formed by the interference between the processing lights EL1#1 and EL1#2 on the workpiece W, moves along the pitch direction of the interference fringe IS. For example, in a case where the retroreflective mirror 1114d and the mirror 1115d move toward the +Y side as illustrated in FIG. 20, the interference area IA moves toward the +Y side. For example, in a case where the retroreflective mirror 1114d and the mirror 1115d move toward the -Y side as illustrated in FIG. 21, the interference area IA moves toward the -Y side. Namely, in the example of processing optical system 111d illustrated in FIG. 19 to FIG. 21, the interference fringe IS moves toward a direction that is the same as a direction toward which the retroreflective mirror 1114d and the mirror 1115d move.

Furthermore, the processing optical system 111d may align the phase of the brightness and darkness in the interference area IA1 with the phase of the brightness and darkness in the interference area IA2 in a case where the interference area IA is moved, as with the above described processing optical system 111b in the second example embodiment. For example, the processing optical system 111d may align the phase of the brightness and darkness in the interference area IA1 with the phase of the brightness and darkness in the interference area IA2 by adjusting the phase of the processing light EL1#1 by using the phase adjustment optical system 1116d. Incidentally, the processing optical system 111d may include a phase adjustment optical system that is configured to adjust the phase of the processing light EL1#1 in addition to or instead of the phase adjustment optical system 1116d. In this case, the processing optical system 111d may align the phase of the brightness and darkness in the interference area IA1 with the phase of the brightness and darkness in the interference area IA2 by adjusting the phase of the processing light EL1#2 in addition to or instead of adjusting the phase of the processing light EL1#1.

Thus, the processing optical system 111d is configured to move the interference area IA along the pitch direction of the interference fringe IS on the workpiece W by moving the retroreflective mirror 1114d and the mirror 1115D in the pitch direction of the interference fringe IS. Therefore, the processing system SYSd in the fourth embodiment can achieve an effect that is same as an effect achievable by the above-described processing system SYSb in the second embodiment. In addition, the processing optical system 111d in the fourth example embodiment may not include a refractive optical system such as a lens. Therefore, a size of the processing optical system 111d can be reduced, compared to a processing optical system that needs to include the refractive optical system such as the lens.

### (5) Processing System SYS in Fifth Example Embodiment

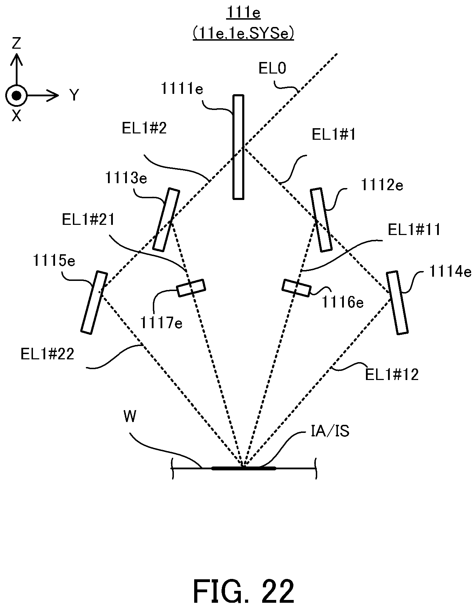

Next, the processing system SYS in a fifth example embodiment will be described. In the below-described description, the processing system SYS in the fifth example embodiment is referred to as the "processing system SYSe". The processing system SYSe in the fifth embodiment is different from the processing system SYSa in the first embodiment described above in that it includes a processing apparatus 1e instead of the processing apparatus 1. Other feature of the processing system SYSe may be the same as other feature of the processing system SYSa. The processing apparatus 1e is different from the processing apparatus 1 in that it includes a processing head 11e instead of the processing head 11. Other feature of the processing apparatus 1e may be the same as other feature of the processing apparatus 1. The processing head 11e is different from the processing head 11 in that it includes a processing optical system 111e instead of the processing optical system 111. Other feature of the processing head 11e may be the same as other feature of the processing head 11. Therefore, in the below-described description, a configuration of the processing optical system 111e in the fifth example embodiment will be described with reference to FIG. 22. FIG. 22 is a cross-sectional view that illustrates the configuration of the processing optical system 111e in the fifth example embodiment.

As illustrated in FIG. 22, the processing optical system 111e includes a beam splitter 1111e, a beam splitter 1112e, a beam splitter 1113e, a mirror 1114e, a mirror 1115e, a phase adjustment optical system 1116e, and a phase adjustment optical system 1117e.

The processing light EL0 emitted from the processing light source 2 enters the beam splitter 1111e. The beam splitter 1111e may have the same configuration as the above-described beam splitter 1111d. Therefore, a part of the processing light EL0 that has entered the beam splitter 1111e is reflected by the beam splitter 1111e as the processing light EL1#1. Another part of the processing light EL0 that has entered the beam splitter 1111e passes through the beam splitter 1111e as the processing light EL1#2.

The processing light EL1#1 that has been reflected by the beam splitter 1111e enters the beam splitter 1112e. The beam splitter 1112e may have the same configuration as the beam splitter 1111e. Therefore, a part of the processing light EL1#1 that has entered the beam splitter 1112e is reflected by the beam splitter 1112e as the processing light EL1#11. Another part of the processing light EL1#1 that has entered the beam splitter 1112e passes through the beam splitter 1112e as the processing light EL1#12. The workpiece W is irradiated with the processing light EL1#11 that has been reflected by the beam splitter 1112e through the phase adjustment optical system 1116e. The processing light EL1#12 that has passed through the beam splitter 1112e enters the mirror 1114e. The mirror 1114e reflects the processing light EL1#12 toward the workpiece W.

The processing light EL1#2 that has passed through the beam splitter 1111e enters the beam splitter 1113e. The beam splitter 1113e may have the same configuration as the beam splitter 1111e. Therefore, a part of the processing light EL1#2 that has entered the beam splitter 1113e is reflected by the beam splitter 1113e as the processing light EL1#21. Another part of the processing light EL1#2 that has entered the beam splitter 1113e passes through the beam splitter 1113e as the processing light EL1#22. The workpiece W is irradiated with the processing light EL1#21 that has been reflected by the beam splitter 1113e through the phase adjustment optical system 1117e. The processing light EL1#22 that has passed through the beam splitter 1113e enters the mirror 1115e. The mirror 1115e reflects the processing light EL1#22 toward the workpiece W.

The processing lights EL1#11, EL1#12, EL1#21 and EL1#22 enter the workpiece W so that the processing lights EL1#11, EL1#12, EL1#21 and EL1#22 intersect at the surface of the workpiece W or near the surface of the workpiece W. As a result, the interference fringe IS is formed on the workpiece W by the interference light generated by the interference among the processing lights EL1#11, EL1#12, EL1#21 and EL1#22.

The phase adjustment optical system 1116e is configured to adjust the phase of the processing light EL1#11. For example, the phase adjustment optical system 1116e may adjust the phase of the processing light EL1#11 so that a difference in phase between the processing lights EL1#11 and EL1#12 is a desired value. For example, the phase adjustment optical system 1116e may adjust the phase of the processing light EL1#11 so that the phase of the processing light EL1#11 and the phase of the processing light EL1#12 are aligned with each other.

The phase adjustment optical system 1117e is configured to adjust the phase of the processing light EL1#21. For example, the phase adjustment optical system 1117e may adjust the phase of the processing light EL1#21 so that a difference in phase between the processing lights EL1#21 and EL1#22 is a desired value. For example, the phase adjustment optical system 1117e may adjust the phase of the processing light EL1#21 so that the phase of the processing light EL1#21 and the phase of the processing light EL1#22 are aligned with each other.

Thus, the processing system SYSe in the fifth example embodiment can properly form the interference fringe IS on the workpiece W. Therefore, the processing system SYSe can properly form the riblet structure RB on the workpiece W.

### (6) Processing System SYS in Sixth Example Embodiment

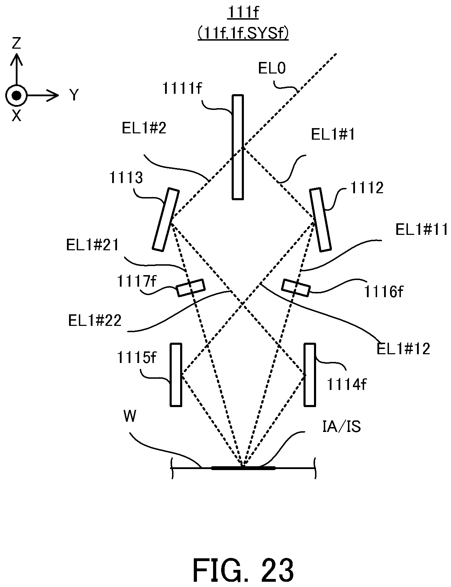

Next, the processing system SYS in a sixth example embodiment will be described. In the below-described description, the processing system SYS in the sixth example embodiment is referred to as the "processing system SYSf'. The processing system SYSf in the sixth embodiment is different from the processing system SYSa in the first embodiment described above in that it includes a processing apparatus 1f instead of the processing apparatus 1. Other feature of the processing system SYSf may be the same as other feature of the processing system SYSa. The processing apparatus 1f is different from the processing apparatus 1 in that it includes a processing head 11f instead of the processing head 11. Other feature of the processing apparatus 1f may be the same as other feature of the processing apparatus 1. The processing head 11f is different from the processing head 11 in that it includes a processing optical system 111f instead of the processing optical system 111. Other feature of the processing head 11f may be the same as other feature of the processing head 11. Therefore, in the below-described description, a configuration of the processing optical system 111f in the sixth example embodiment will be described with reference to FIG. 23. FIG. 23 is a cross-sectional view that illustrates the configuration of the processing optical system 111f in the sixth example embodiment.

As illustrated in FIG. 23, the processing optical system 111f includes a beam splitter 1111f, a reflective diffraction optical element (DOE) 1112f, a reflective diffraction optical element 1113f, a mirror 1114f, a mirror 1115f, a phase adjustment optical system 1116f, and a phase adjustment optical system 1117f.

The processing light EL0 emitted from the processing light source 2 enters the beam splitter 1111f. The beam splitter 1111f may be the same as the above-described beam splitter 1111d. Therefore, a part of the processing light EL0 that has entered the beam splitter 1111f is reflected by the beam splitter 1111f as the processing light EL1#1. Another part of the processing light EL0 that has entered the beam splitter 1111f passes through the beam splitter 1111f as the processing light EL1#2.

The processing light EL1#1 that has been reflected the beam splitter 1111f enters the reflective diffraction optical element 1112f. The reflective diffraction optical element 1112f divides the processing light EL1#1 into diffracted lights of various orders. The reflective diffraction optical element 1112f reflects the processing light EL1#11, which is either one of zeroth-order diffracted light or first-order diffracted light, toward the workpiece W through the phase adjustment optical system 1116f. The reflective diffraction optical element 1112f reflects the processing light EL1#12, which is the other one of the zeroth-order diffracted light or the first-order diffracted light, toward the mirror 1115f. The mirror 1115f reflects the processing light EL1#12 toward the workpiece W.

The processing light EL1#2 that has passed through the beam splitter 1111f enters the reflective diffraction optical element 1113f. The reflective diffraction optical element 1113f divides the processing light EL1#2 into diffracted lights of various orders. The reflective diffraction optical element 1113f reflects the processing light EL1#21, which is either one of zeroth-order diffracted light or first-order diffracted light, toward the workpiece W through the phase adjustment optical system 1117f. The reflective diffraction optical element 1113f reflects the processing light EL1#22, which is the other one of the zeroth-order diffracted light or the first-order diffracted light, toward the mirror 1114f. The mirror 1114f reflects the processing light EL1#22 toward the workpiece W.

The processing lights EL1#11, FL1#12, FL1#21 and FL1#22 enter the workpiece W so that the processing lights EL1#11, FL1#12, FL1#21 and FL1#22 intersect at the surface of the workpiece W or near the surface of the workpiece W. As a result, the interference fringe IS is formed on the workpiece W by the interference light generated by the interference among the processing lights EL1#11, FL1#12, FL1#21 and FL1#22.

The phase adjustment optical system 1116f is configured to adjust the phase of the processing light EL1#11. For example, the phase adjustment optical system 1116f may adjust the phase of the processing light EL1#11 so that a difference in phase between the processing lights EL1#11 and EL1#12 is a desired value. For example, the phase adjustment optical system 1116f may adjust the phase of the processing light EL1#11 so that the phase of the processing light EL1#11 and the phase of the processing light EL1#12 are aligned with each other.

The phase adjustment optical system 1117f is configured to adjust the phase of the processing light EL1#21. For example, the phase adjustment optical system 1117f may adjust the phase of the processing light EL1#21 so that a difference in phase between the processing lights EL1#21 and EL1#22 is a desired value. For example, the phase adjustment optical system 1117f may adjust the phase of the processing light EL1#21 so that the phase of the processing light EL1#21 and the phase of the processing light EL1#22 are aligned with each other.

Incidentally, the reflective diffraction optical element 1113f is used in the sixth example embodiment, however, a transmissive diffraction optical element may be used.

Thus, the processing system SYSf in the sixth example embodiment can appropriately form the interference fringe IS on the workpiece W. Therefore, the processing system SYSf can properly form the riblet structure RB on the workpiece W. In addition, a size of the processing optical system 111f in the sixth example embodiment is smaller than a size of the above-described processing optical system 111e in the fifth embodiment. Namely, the processing system SYSf in the sixth embodiment can form the interference fringe IS by using the processing optical system 111f whose size is relatively small.

### (7) Processing System SYS in Seventh Example Embodiment

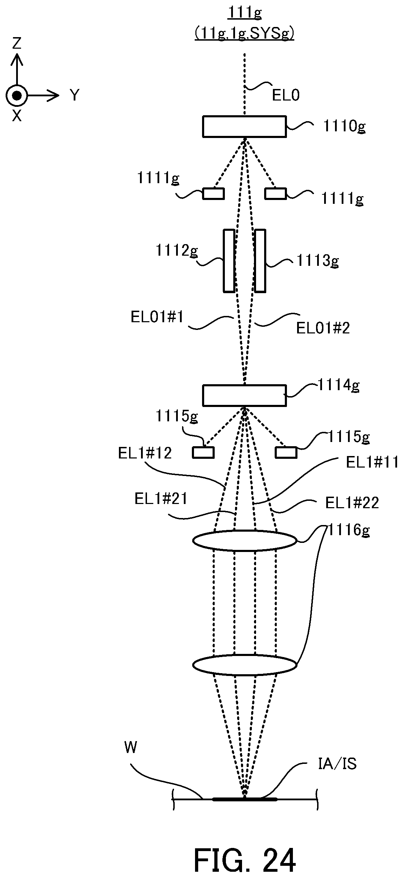

Next, the processing system SYS in a seventh example embodiment will be described. In the below-described description, the processing system SYS in the seventh example embodiment is referred to as the "processing system SYSg". The processing system SYSg in the seventh embodiment is different from the processing system SYSa in the first embodiment described above in that it includes a processing apparatus 1g instead of the processing apparatus 1. Other feature of the processing system SYSg may be the same as other feature of the processing system SYSa. The processing apparatus 1g is different from the processing apparatus 1 in that it includes a processing head 11g instead of the processing head 11. Other feature of the processing apparatus 1g may be the same as other feature of the processing apparatus 1. The processing head 11g is different from the processing head 11 in that it includes a processing optical system 111g instead of the processing optical system 111. Other feature of the processing head 11g may be the same as other feature of the processing head 11. Therefore, in the below-described description, a configuration of the processing optical system 111g in the seventh example embodiment will be described with reference to FIG. 24. FIG. 24 is a cross-sectional view that illustrates the configuration of the processing optical system 111g in the seventh example embodiment.

As illustrated in FIG. 24, the processing optical system 111g includes a transmissive diffraction optical element 1110g, a cut mask 1111g, a mirror 1112g, a mirror 1113g, an ultrasonic light modulator 1114g, a cut mask 1115g, and a condensing optical system 1116g.

The processing light EL0 emitted from the processing light source 2 enters the transmissive diffraction optical element 1110g. The transmissive diffraction optical element 1110g divides the processing light EL0 into diffracted lights of various orders.

Zeroth-order diffracted light and high-order diffracted light that is second-order or higher-order among the diffracted lights of various orders emitted from the transmissive diffraction optical element 1110g are shielded by the cut mask 1111g. ±First-order lights emitted from the transmissive diffraction optical element 1110g enters the mirrors 1112g and 1113g as processing light EL01#1 and EL01#2, respectively. The mirror 1112g reflects the processing light EL01#1 toward the ultrasonic light modulator 1114g. The mirror 1113g reflects the processing light EL01#2 toward the ultrasonic light modulator 1114g.

The ultrasonic light modulator 1114g may have the same configuration as the above-described ultrasonic light modulator 1113. Therefore, the ultrasonic light modulator 1114g serves as an acousto-optics element (AOM: Acousto-Optics Modulator) for the processing lights EL01#1 and EL01#2 entering the ultrasonic light modulator 1114g. Therefore, the ultrasonic light modulator 1113 divides each of the processing lights EL01#1 and EL01#2 into diffracted lights of various orders. Incidentally, each of the transmissive diffraction optical element 1110g and the ultrasonic light modulator 1114g may be referred to as a spatial light modulator (SLM: Spatial Light Modulator).

A cycle of the ultrasonic light modulator 1114g (specifically, a cycle of a refractive index distribution, and a cycle of a diffraction grating) may be set to be a half of a cycle of a diffraction grating of the transmissive diffraction optical element 1110g. Namely, the cycle of the transmissive diffraction optical element 1110g may be set to be twice the cycle of the ultrasonic light modulator 1114g. In this case, the processing lights EL01#1 and EL01#2 (namely, the ±first-order diffracted lights) emitted from the ultrasonic light modulator 1110g enter the ultrasonic light modulator 1114g so as to satisfy an equation 2 "ξ = ±λ/2 × Q". Note that "ξ" in the equation 2 represents an incident direction cosine, "λ" in the equation 2 represents a wavelength of each of the processing lights EL01#1 and EL01#2, and "Q" in the equation 2 represents the cycle of the ultrasonic light modulator 1114g.

Zeroth-order diffracted light and -first-order diffracted light among the diffracted lights of various orders of the processing light EL01#1 emitted from the ultrasonic light modulator 1114g enter the condensing optical system 1116g as the processing light EL01#11 and EL01#12. Furthermore, Zeroth-order diffracted light and +first-order diffracted light among the diffracted lights of various orders of the processing light EL01#2 emitted from the ultrasonic light modulator 1114g enter the condensing optical system 1116g as the processing light EL01#21 and EL01#22. On the other hand, the other diffracted light among the diffracted lights of various orders of the processing light EL01 #1 emitted from the ultrasonic light modulator 1113 is shielded by the cut mask 1115g.

In the condensing optical system 1116g, the processing light EL1#11 corresponding to the zeroth order diffracted light of the processing light EL01#1 and the processing light EL1#21 corresponding to the zeroth order diffracted light of the processing light EL01#2 pass through a position that is closer to an optical axis of the condensing optical system 1116g than the processing light EL1#12 corresponding to the -first-order diffracted light of the processing light EL01#1 and the processing light EL1#22 corresponding to the +first-order diffracted light of the processing light EL01#2 do. Moreover, in a case where the cycle of the ultrasonic light modulator 1114g is set to be a half of the cycle of the ultrasonic light modulator 1110g as described above, the processing light EL1#12 corresponding to the -first-order diffracted light of the processing light EL01#1 and the processing light EL1#22 corresponding to the +first-order diffracted light of the processing light EL01#2 substantially pass through optical paths that are the same as optical paths of ±third-order diffracted lights generated in the ultrasonic light modulator 1110g.

The condensing optical system 1116g irradiates the workpiece W with the processing lights EL1#11, EL1#12, EL1#21, and EL1#22. Specifically, the condensing optical system 1116g condenses the processing lights EL1#11, EL1#12, EL1#21, and EL1#22 so that the processing lights EL1#11, EL1#12, EL1#21, and EL1#22 intersect at the surface of the workpiece W or near the surface of the workpiece W. As a result, the interference fringe IS is formed on the workpiece W by the interference light generated by the interference among the processing lights EL1#11, EL1#12, EL1#21 and EL1#22.

Thus, the processing system SYSg in the seventh example embodiment can appropriately form the interference fringe IS on the workpiece W. Therefore, the processing system SYSg can properly form the riblet structure RB on the workpiece W. In addition, a size of the processing optical system 111g in the seventh example embodiment is smaller than the size of the above-described processing optical system 111e in the fifth embodiment. Namely, the processing system SYSg in the seventh embodiment can form the interference fringe IS by using the processing optical system 111g whose size, typically, a size in a radial direction is relatively small.

The processing optical system 111g may change a tilt angle of the mirror 1112g with respect to the processing light EL01#1 and a tilt angle of the mirror 1113g with respect to the processing light EL01#2. As a result, the processing optical system 111g can change the pitch of the interference fringe IS.

The processing optical system 111g may adjust an amplitude ratio between the processing lights EL1#11 and EL1#21, which correspond to the zeroth-order diffracted lights, and the processing lights EL1#12 and EL1#22, which correspond to the first-order diffracted lights, by using the ultrasonic light modulator 1114g. Moreover, the processing optical system 111g may adjust the processing lights EL1#11, EL1#12, EL1#21, and EL1#22 so that the difference in phase between the processing lights EL1#11 and EL1#21 and the processing lights EL1#12 and EL1#22 is a desired value (for example, π). For example, the processing optical system 111g may adjust the processing lights EL1#11, EL1#12, EL1#21, and EL1#22 by using a ring-shaped phase shifter positioned in the condensing optical system 1116g.

Incidentally, an acousto-optics element (AOM: Acousto-Optics Modulator) such as an ultrasonic light modulator may be used instead of the transmissive diffraction optical element 1110g. Similarly, a diffraction optical element (DOE) may be used instead of the ultrasonic light modulator 1114g. Moreover, the diffraction optical element may be a transmissive type one or a reflective type one.

### (8) Processing System SYS in Eighth Example Embodiment

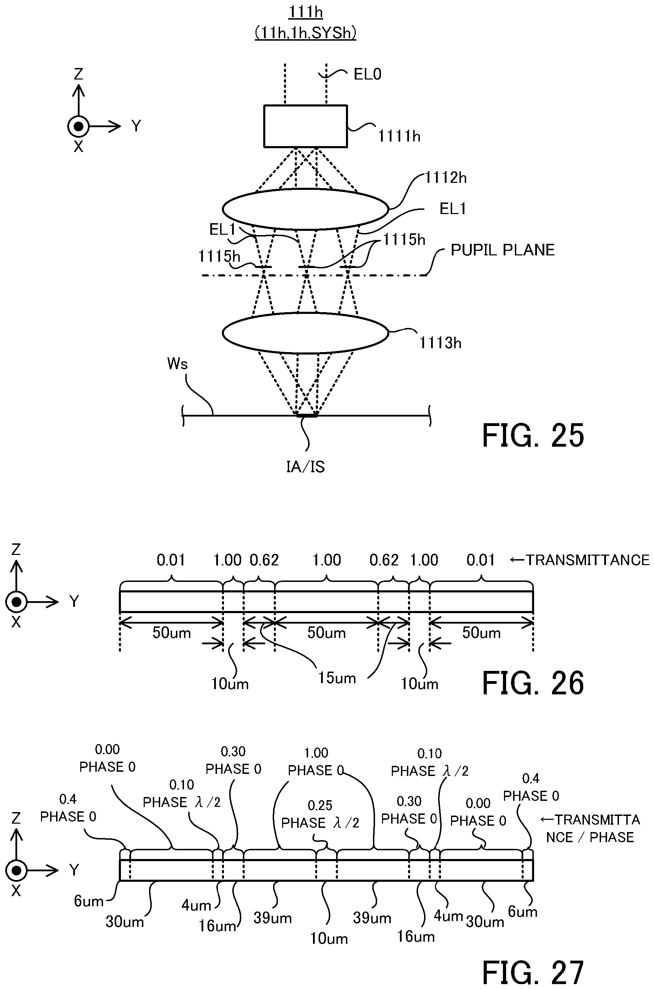

Next, the processing system SYS in an eighth example embodiment will be described. In the below-described description, the processing system SYS in the eighth example embodiment is referred to as the "processing system SYSh". The processing system SYSh in the eighth embodiment is different from the processing system SYSa in the first embodiment described above in that it includes a processing apparatus 1h instead of the processing apparatus 1. Other feature of the processing system SYSh may be the same as other feature of the processing system SYSa. The processing apparatus 1h is different from the processing apparatus 1 in that it includes a processing head 11h instead of the processing head 11. Other feature of the processing apparatus 1h may be the same as other feature of the processing apparatus 1. The processing head 11h is different from the processing head 11 in that it includes a processing optical system 111h instead of the processing optical system 111. Other feature of the processing head 11h may be the same as other feature of the processing head 11. Therefore, in the below-described description, a configuration of the processing optical system 111h in the eighth example embodiment will be described with reference to FIG. 25. FIG. 25 is a cross-sectional view that illustrates the configuration of the processing optical system 111h in the eighth example embodiment.

As illustrated in FIG. 25, the processing optical system 111h includes a mask 1111h, an optical system 1112h, and an optical system 1113h.

The mask 1111h is a mask in which a plurality of aperture patterns are periodically formed through which the processing light EL0 emitted from the processing light source 2 is allowed to pass. The mask 1111h generates a plurality of diffracted lights by diffracting the processing light EL0. Each of the plurality of diffracted lights is used as the processing light EL1. Namely, in the eighth example embodiment, the mask 1111h can serve as a dividing optical system that divides the processing light EL0 into the plurality of processing lights EL1 by diffracting the processing light EL0 to generate the plurality of diffracted lights. For example, the mask 1111h may generate zeroth-order diffracted light and ±first-order diffracted lights as the processing lights EL1. The mask 1111h may generate the zeroth-order diffracted light, the ±first-order diffracted lights, and ±second-order diffracted lights as the processing lights EL1. The mask 1111h may generate the zeroth-order diffracted light, the ±first-order diffracted lights, the ±second-order diffracted lights, and ±third-order diffracted lights as the processing lights EL1. The mask 1111h may generate the zeroth-order diffracted light, the ±first-order diffracted lights, the ±second-order diffracted lights, the ±third-order diffracted light, and ±fourth-order diffracted lights as the processing lights EL1. Incidentally, in the below-described description, an example in which the mask 1111h generates the zeroth-order diffracted light, the ±first-order diffracted lights, the ±second-order diffracted lights, the ±third-order diffracted lights, and the ±fourth-order diffracted lights as the processing lights EL1 will be described. Incidentally, in FIG. 25, the zeroth-order diffracted light and the ±fourth-order diffracted light are illustrated, while the ±first-order diffracted lights, the ±second-order diffracted lights, and the ±third-order diffracted lights are omitted in order to avoid complication of the drawing.

The mask 1111h may be a grayscale mask. The grayscale mask may mean a mask having a formed aperture pattern in which a transmittance relative to the processing light EL0 is locally different. One example of the grayscale mask is illustrated in FIG. 26. FIG. 26 illustrates one aperture pattern formed in the grayscale mask together with a size and the transmittance thereof.

The mask 1111h may be a phase shift mask. The phase shift mask may mean a mask having a formed aperture pattern that can locally change the phase of the processing light EL0. One example of the phase shift mask is illustrated in FIG. 27. FIG. 27 illustrates one aperture pattern formed in the phase shift mask together with a size, a transmittance, and the phase thereof.

The workpiece W is irradiated with the plurality of processing lights EL1 (namely, the diffracted lights of various orders) emitted from the mask 1111h through the optical systems 1112h and 1113h. Especially, the optical system 1113h condenses the plurality of processing lights EL1 so that the plurality of processing lights EL1 intersect at the surface of the workpiece W or near the surface of the workpiece W. As a result, the interference fringe IS is formed on the workpiece W by the interference light generated by the interference among the plurality of processing lights EL1.

Note that all of the plurality of diffracted lights emitted from the mask 1111h may not be used as the plurality of processing lights EL1. Namely, the processing optical system 111h may form the interference fringe IS by using a part of the plurality of diffracted lights emitted from the mask 1111h. As one example, in a case where the phase shift mask illustrated in FIG. 27 is used as the mask 1111h, the processing optical system 111h may form the interference fringe IS by using the zeroth-order diffracted light, the ±first-order diffracted lights, and the ±fourth-order diffracted lights emitted from the mask 1111h, while the ±second-order diffracted lights and the ±third-order diffracted lights may not be used. In this case, the processing optical system 111h may include a cut mask for cutting the diffracted light that is not used to form the interference fringe IS.

The processing optical system 111h may further includes a Galvano mirror 1114h. The Galvano mirror 1114h is positioned in the optical path of the processing light EL1 between the optical systems 1112h and 1113h. The Galvano mirror 1114h is configured to deflect the processing light EL1 entering the Galvano mirror 1114h. For example, the processing optical system 111h may include a plurality of Galvano mirrors 1114h that are configured to deflect the plurality of processing lights EL1, respectively. For example, the processing optical system 111h may include a single Galvano mirror 1114h that is configured to collectively deflect the plurality of processing lights EL1. The Galvano mirror 1114h may deflect the processing light EL1 entering the Galvano mirror 1114h so as to move the interference fringe IS on the workpiece W along the extending direction of the interference fringe IS, in other words, a direction intersecting the pitch direction of the interference fringe IS.

The processing optical system 111h further includes a phase plate 1115h. Specifically, the processing optical system 111h includes a plurality of phase plates 1115h that are allowed to be positioned in the optical paths of the plurality of processing lights EL, respectively. For example, the processing optical system 111h may include a phase plate 1115h that is allowed to be positioned in the optical path of the zeroth-order diffracted light, a phase plate 1115h that is allowed to be positioned in the optical path of the +first-order diffracted light, a phase plate 1115h that is allowed to be positioned in the optical path of the -first-order diffracted light, a phase plate 1115h that is allowed to be positioned in the optical path of the +second-order diffracted light, a phase plate 1115h that is allowed to be positioned in the optical path of -second-order diffracted light, a phase plate 1115h that is allowed to be positioned in the optical path of +third-order diffracted light, a phase plate 1115h that is allowed to be positioned in the optical path of -third-order diffracted light, a phase plate 1115h that is allowed to be positioned in the optical path of +fourth-order diffracted light, and a phase plate 1115h that is allowed to be positioned in the optical path of the -fourth-order diffracted light. Incidentally, the phase plate 1115h may be referred to as a phase adjustment element or a phase change element.

Each phase plate 1115h may be positioned in a pupil plane of at least one of the optical systems 1112h and 1113h. Each phase plate 1115h may be positioned near the pupil plane of at least one of the optical systems 1112h and 1113h. However, the position at which each phase plate 1115h is positioned is not limited to the position described in this paragraph.

Each phase plate 1115h is configured to change the phase of the processing light EL1 passing through each phase plate 1115h. Moreover, each phase plate 1115h may add a difference in phase of each processing light EL1 passing through each phase plate 1115h. Here, the difference in phase may be zero. In the eighth example embodiment, the processing optical system 111h moves the interference fringe IS by using the phase plate 1115h under the control of the control apparatus 3. Especially, the processing optical system 111h mainly moves the bright part IL and the dark part ID included in the interference fringe IS in the interference area IA under the control of the control apparatus 3. Namely, in the eighth example embodiment, the processing optical system 111h moves the interference fringe IS in the manner illustrated in above-described FIG. 5B Incidentally, in the eighth example embodiment, the processing optical system 111h may further move or may not move the interference area IA itself in which the interference fringe IS is formed, on the surface of the workpiece W, in addition to moving the bright part IL and the dark part ID included in the interference fringe IS in the interference area IA. Namely, the processing optical system 111h may further mainly move or may not move the interference fringe IS in the manner illustrated in above-described FIG. 5A.

As a first method of changing the phase of the processing light EL1 by using the phase plate 1115h, the processing optical system 111h may use a method of switching a state of each phase plate 1115h between a state in which each phase plate 1115h is positioned in the optical path of the processing light EL1 corresponding to each phase plate 1115h and a state in which each phase plate 1115h is positioned at a position that is away from the optical path of the processing light EL1 corresponding to each phase plate 1115h. In this case, the processing optical system 111h may include a driving system (for example, an actuator) that is configured to move the phase plate 1115h relative to the optical path of the processing light EL1. When the state of each phase plate 1115h is switched, the phase of each processing light EL1 is changed. As a result, the phase of the interference fringe IS is changed, and therefore the bright part IL and dark part ID included in the interference fringe IS move in the interference area IA.

As a second method of changing the phase of the processing light EL1 by using the phase plate 1115h, the processing optical system 111h may use a method of switching (namely, exchanging) the phase plate 1115h positioned in the optical path of each processing light EL1 between a first phase plate that is configured to change the phase of the processing light EL1 by a first phase amount and a second phase plate that is configured to change the phase of the processing light EL1 by a second phase amount that is different from the first phase amount. In this case, the processing optical system 111h may include a driving system (for example, an actuator) that is configured to move to exchange the phase plate 1115h positioned in the optical path of the processing light EL1. When the phase plate 1115h positioned in the optical path of the processing light EL1 is switched (namely, exchanged), the phase of each processing light EL1 is changed. As a result, the phase of the interference fringe IS is changed, and therefore the bright part IL and dark part ID included in the interference fringe IS move in the interference area IA.

In both of the first to second methods of changing the phase of the processing light EL1, the state of the processing optical system 111h is switched between two different states. Namely, in the first method, the state of the processing optical system 111h is switched between the state in which each phase plate 1115h is positioned in the optical path of the processing light EL1 corresponding to each phase plate 1115h and the state in which each phase plate 1115h is positioned at the position that is away from the optical path of the processing light EL1 corresponding to each phase plate 1115h. In the second method, the state of the processing optical system 111h is switched between the state in which the first phase plate configured to change the phase of the processing light EL1 by the first phase amount is positioned in the optical path of the processing light EL1 and the state in which the second phase plate configured to change the phase of the processing light EL1 by the second phase amount different from the first phase amount is positioned in the optical path of the processing light EL1.

A difference (namely, a phase difference) between the phase of each processing light EL1 in the processing optical system 111h in the first state and the phase of each processing light EL1 in the processing optical system 111h in the second state may be determined based on a diffraction order of the processing light EL1. Conversely, the processing optical system 111h may add a phase difference, which is determined based on the diffraction order of each processing light EL1, to each processing light EL1 by switching the state of the processing optical system 111h by using the phase plate 1115h. As one example, the processing optical system 111h may add the phase difference of 0 to each processing light EL1 by using the phase plate 1115h for the processing light EL1 corresponding to the zeroth-order diffracted light. Namely, the processing optical system 111h may not add the phase difference to the processing light EL1 corresponding to the zeroth-order diffracted light. As another example, the processing optical system 111h may add the phase difference of ±1λ/2 to the processing lights EL1, respectively, by using the phase plate 1115h for the processing lights EL corresponding to the ±first-order diffracted lights. As another example, the processing optical system 111h may add the phase difference of ±2λ/2 to the processing lights EL1, respectively, by using the phase plate 1115h for the processing lights EL corresponding to the ±second-order diffracted lights. As another example, the processing optical system 111h may add the phase difference of ±3λ/2 to the processing lights EL1, respectively, by using the phase plate 1115h for the processing lights EL corresponding to the ±third-order diffracted lights. As another example, the processing optical system 111h may add the phase difference of ±4λ/2 to the processing lights EL1, respectively, by using the phase plate 1115h for the processing lights EL corresponding to the ±fourth-order diffracted lights. Namely, the processing optical system 111h may add the phase difference of ±Nλ/2 to the processing lights EL1, respectively, by using the phase plate 1115h for the processing lights EL corresponding to the ±Nth-order (wherein N is a variable number representing an integer that is equal to or larger than 0) diffracted lights.

Incidentally, an operation for adding the phase difference of ±2λ/2 to the processing light EL1 may be considered to be equivalent to an operation for adding the phase difference of 0 to the processing light EL1 (namely, an operation for not adding the phase difference to the processing light EL1). Similarly, an operation for adding the phase difference of ±4λ/2 to the processing light EL1 may be considered to be equivalent to an operation for adding the phase difference of 0 to the processing light EL1 (namely, the operation for not adding the phase difference to the processing light EL1). In this case, the processing optical system 111h may not include the phase plate 1115h corresponding to the processing light EL1 to which the phase difference is not added. For example, the processing optical system 111h may not include the phase plate 1115h corresponding to the processing light EL1 that is the zeroth-order diffracted light, the phase plates 1115h corresponding to the processing lights EL1 that are the ±second-order diffracted lights, and the phase plates 1115h corresponding to the processing lights EL1 that are the ±fourth-order diffracted lights.

Moreover, an operation for adding the phase difference of ±3λ/2 to the processing light EL1 may be considered to be equivalent to an operation for adding the phase difference of ±1λ/2 to the processing light EL1.

Thus, the processing system SYSh in the eighth example embodiment can move the interference fringe IS appropriately. Therefore, the processing system SYSh can form the riblet structure RB by performing the multi-patterning that forms, in the same area on the workpiece W, the plurality of interference fringes IS whose phases are changed.

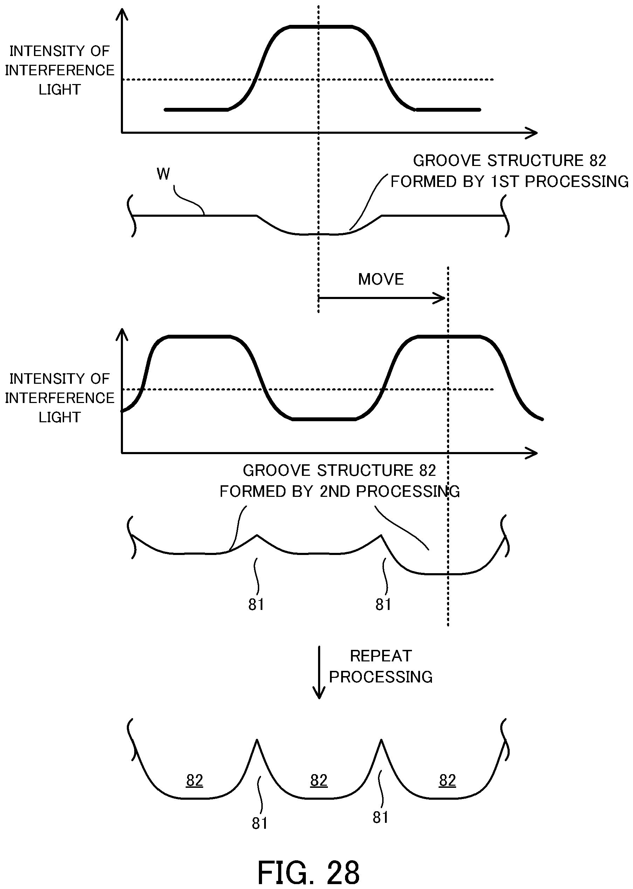

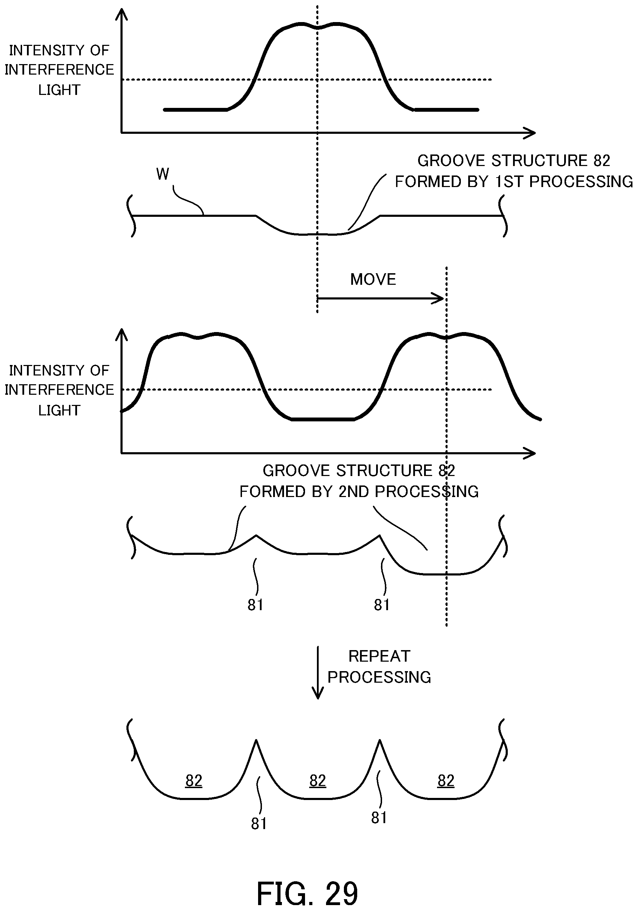

As one example, FIG. 28 illustrates the intensity of the interference light and the groove structure 82 formed by this interference light in a case where the grayscale mask illustrated in FIG. 26 is used as the mask 1111h. Moreover, as another example, FIG. 29 illustrates the intensity of the interference light and the groove structure 82 formed by this interference light in a case where the phase shift mask illustrated in FIG. 27 is used as the mask 1111h. As illustrated in FIG. 28 and FIG. 29, the processing system SYSh can form the riblet structure having the desired shape by the multi-patterning.

Incidentally, each of FIG. 28 and FIG. 29 illustrates an example in which the processing system SYSh forms the riblet structure RB by forming two interference fringes IS, whose cycle is a twice the period of the riblet structure RB and whose phases are different from each other, four times each (namely, performing the processing using the interference fringe IS eight times). Here, as the number of light beams that are interfered with each other to form the interference fringe IS increases and the number of times which the two interference fringes IS with different phases are formed increases, an accumulated value of fluence transferred from the interference light to a tip part of the convex structure 81 of the riblet structure RB becomes smaller. For example, in a case where the number of light beams that are interfered with each other to form the interference fringe IS is 9 and the number of times which the two interference fringes IS with different phases are formed is 4, the accumulated value of the fluence transferred from the interference light to the tip part of the convex structure 81 approximately halved, compared to a case where the number of light beams that are interfered with to form interference fringe IS is 2 and the number of times which the two interference fringes IS with different phases are formed is 1. As a result, there is a lower possibility that the tip part of the convex structure 81 is affected by thermal decomposition. As a result, the shape of the riblet structure RB is closer to an ideal shape that a bottom part of the groove structure 82 of the riblet structure RB is flat and the tip part of the convex structure 81 is sharp. Therefore, the processing system SYSh can form the riblet structure having the shape close to the ideal shape by the multi-patterning.

Incidentally, the processing optical system 111h may change the cycle of the interference fringe IS by exchanging the mask 1111h. Specifically, the processing optical system 111h may change a cycle of the plurality of aperture patterns formed in the mask 1111h (namely, an array cycle of the plurality of aperture patterns, namely, an array pitch) by exchanging the mask 1111h. When the cycle of the plurality of aperture patterns is changed, the cycle of the interference fringe IS is changed. When the cycle of the interference fringe IS is changed, the cycle of the riblet structure RB (for example, the pitch P_rb of the convex structure 81) is changed. Therefore, the processing optical system 111h may change the cycle of the riblet structure RB (for example, the pitch P_rb of the convex structure 81) by exchanging the mask 1111h. However, when the mask 1111h is exchanged, there is a possibility that the optical path of the processing light EL1 moves along a direction that intersects the optical path of the processing light EL1 (specifically, a direction that intersects the optical axes of the optical systems 1112h and 1113h, for example, the Y-axis direction in FIG. 25). Therefore, the processing optical system 111h may move each phase plate 1115h so that each phase plate 1115h is positioned in the optical path of each processing light EL1. Specifically, the processing optical system 111h may move each phase plate 1115h along direction that intersects the optical path of the processing light EL1 (specifically, a direction that intersects the optical axes of the optical systems 1112h and 1113h, for example, the Y-axis direction in FIG. 25) so that each phase plate 1115h is positioned in the optical path of each processing light EL1.

Alternatively, in a case where at least one of the optical systems 1112h and 1113h includes a zoom lens, the processing optical system 111h may change the cycle of the interference fringe IS by changing a magnification of the zoom lens. However, in a case where the optical system 1112h includes the zoom lens, there is a possibility that the optical path of the processing light EL1 moves along a direction that intersects the optical path of the processing light EL1 (specifically, a direction that intersects the optical axes of the optical systems 1112h and 1113h, for example, the Y-axis direction in FIG. 25) due to the change of the magnification of the zoom lens. Therefore, the processing optical system 111h may move each phase plate 1115h so that each phase plate 1115h is positioned in the optical path of each processing light EL1,as with a case where the mask 1111h is exchanged.

The processing optical system 111h may include a light modulator that is configured to change the phase of the processing light EL1 instead of the phase plate 1115h. In this case, the processing optical system 111h may use a method of switching a state of the light modulator between a state in which the phase of the processing light EL1 entering the light modulator is changeable by a first phase amount and a state in which the phase of the processing light EL1 entering the light modulator is changeable by a second phase amount that is different from the first phase amount. When the change amount of the phase by the light modulator is changed, the phase of each processing light EL1 is changed. As a result, the phase of the interference fringe IS is changed, and therefore the bright part IL and dark part ID included in the interference fringe IS move in the interference area IA. Therefore, the processing optical system 111h including the light modulator can also move the interference fringe IS, as with the processing optical system 111h including the phase plate 1115h described above.

As one example, the processing optical system 111h may include an electro-optic modulator described in US6,532,202B as the light modulator. The electro-optic modulator is an apparatus that is configured to electrically change the phase of the processing light EL1 entering the electro-optic modulator. However, in a case where an electro-optic modulator is used, the processing optical system 111h may further include an optical element (for example, a wave plate) that is configured to control a polarization state of the processing light EL1 so that the processing light EL1 entering the electro-optic modulator is a linearly polarized light.

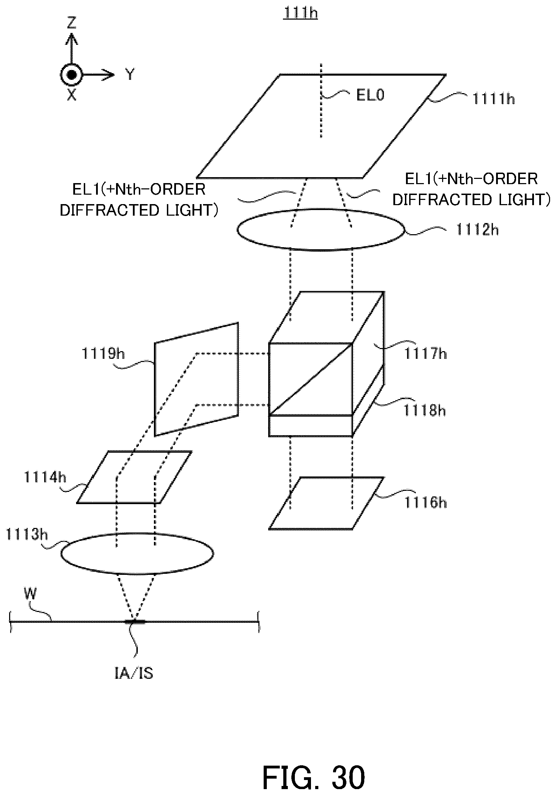

As another example, the processing optical system 111h may include a reflective phase modulator described in US7,876,405B as the light modulator. One example of the processing optical system 111h including the reflective phase modulator is illustrated in FIG. 30. As illustrated in FIG. 30, the processing optical system 111h includes a reflective phase modulator 1116h, a polarization beam splitter 1117h, a 1/4 wave plate 1118h, and a mirror 1119h instead of the phase plate 1115h. The processing light EL1 emitted from the optical system 1112h enters the phase modulator 1116h after passing through the polarization beam splitter 1117h and the 1/4 wave plate 1118h. As a result, the phase of the processing light EL1 is changed by the phase modulator 1116h. The processing light EL1 reflected by the phase modulator 1116h passes through the 1/4 wave plate 1118h, is reflected by the polarization beam splitter 1117h, and enters the mirror 1119h. The mirror 1119h reflects the processing light EL1 reflected by the polarization beam splitter 1117h toward the Galvano mirror 1114h. As a result, the workpiece W is irradiated with the processing light EL1 through the Galvano mirror 1114h and the optical system 1113h.

Moreover, a spatial light modulator (SLM: Spatial Light Modulator) may be used in addition to or instead of the mask 1111h used in the eighth example embodiment. In this case, a phase modulation type of spatial light modulator may be used. A phase modulation type of spatial light modulator may be a spatial light modulator that forms a spatial phase distribution by upwardly and downwardly moving a plurality of mirrors arranged in an array as disclosed in US9,291,814B, a spatial light modulator that forms a spatial phase distribution by tilting a plurality of mirrors arranged in an array as disclosed in US2006/068334A1, and a LCoS (Liquid Crystal on Silicon) type of spatial light modulator disclosed in US8,525,772B, for example.

### (9) Processing System SYS in Ninth Example Embodiment

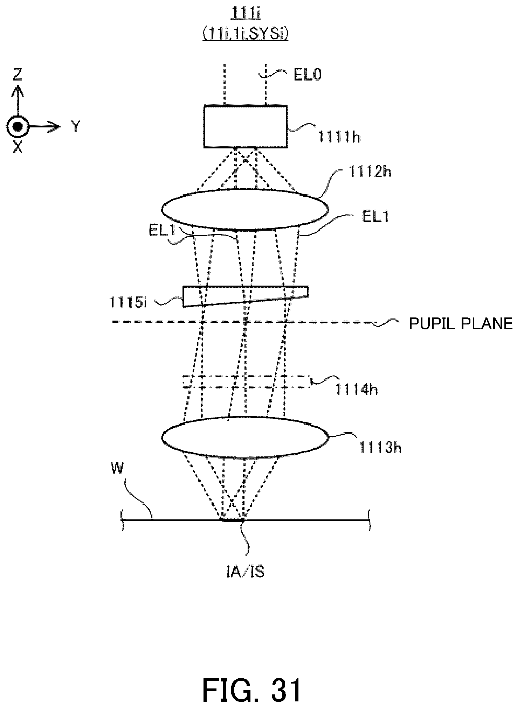

Next, the processing system SYS in a ninth example embodiment will be described. In the below-described description, the processing system SYS the ninth example embodiment is referred to as the "processing system SYSi". The processing system SYSi in the ninth embodiment is different from the processing system SYSh in the eighth embodiment described above in that it includes a processing apparatus 1i instead of the processing apparatus 1h. Other feature of the processing system SYSi may be the same as other feature of the processing system SYSh. The processing apparatus 1i is different from the processing apparatus 1h in that it includes a processing head 111i instead of the processing head 11h. Other feature of the processing apparatus 1i may be the same as other feature of the processing apparatus 1h. The processing head 11i is different from the processing head 11h in that it includes a processing optical system 111i instead of the processing optical system 111h. Other feature of the processing head 111i may be the same as other feature of the processing head 11h. Therefore, in the below-described description, a configuration of the processing optical system 111i in the ninth example embodiment will be described with reference to FIG. 31. FIG. 31 is a cross-sectional view that illustrates the configuration of the processing optical system 111i in the ninth example embodiment.

As illustrated in FIG. 31, the processing optical system 111i in the ninth embodiment is different from the processing optical system 111h in the eighth embodiment in that it includes a wedge-shaped prism 1115i instead of the plurality of phase plates 1115h. Other feature of the processing optical system 111i may be the same as other feature of the processing optical system 111h.

The wedge-shaped prism 1115i is positioned in the optical path of the plurality of processing lights EL. Namely, the wedge-shaped prism 1115i is positioned so that the wedge-shaped prism 1115i intersect the optical paths of the plurality of processing lights EL. The wedge-shaped prism 1115i may be positioned in the pupil plane of at least one of the optical systems 1112h and 1113h. The wedge-shaped prism 1115i may be positioned near the pupil plane of at least one of the optical systems 1112h and 1113h. However, the position at which the wedge-shaped prism 1115i is positioned is not limited to the position described in this paragraph.

The wedge-shaped prism 1115i is configured to change a passing position of the processing light EL1 on the pupil plane of at least one of the optical systems 1112h and 1113h. In the ninth example embodiment, the processing optical system 111i moves the interference fringe IS by using the wedge-shaped prism 1115i under the control of the control apparatus 3. Especially, the processing optical system 111i mainly moves the interference area IA along the pitch direction of the interference fringe IS on the workpiece W under the control of the control apparatus 3. Namely, in the ninth example embodiment, the processing optical system 111i mainly moves the interference fringe IS in the manner illustrated in above-described FIG. 5A. Incidentally, in the ninth example embodiment, the processing optical system 111i may move or may not move the bright part IL and the dark part ID included in the interference fringe IS in the interference area IA, addition to moving the interference area IA on the workpiece W. Namely, the processing optical system 111i may further move or may not move the interference fringe IS in the manner illustrated in above-described FIG. 5B.

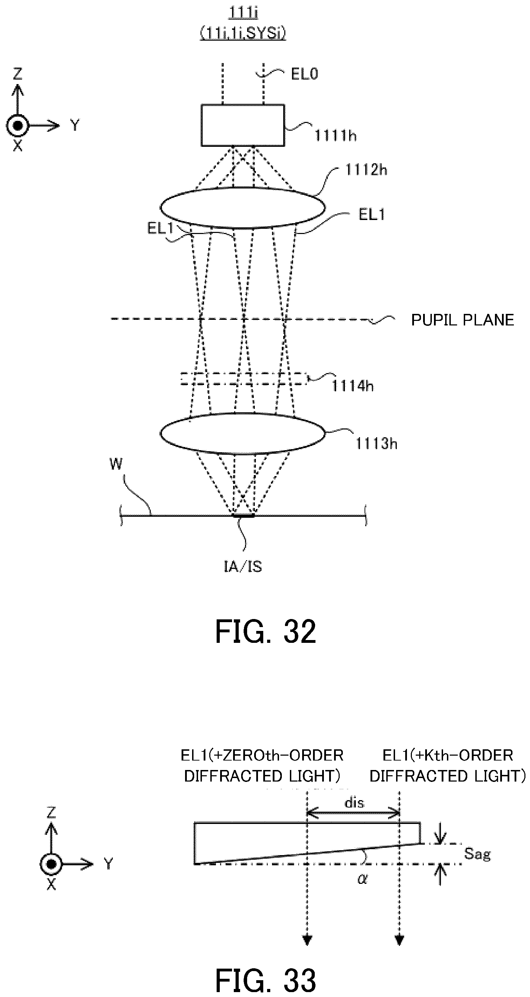

Specifically, the processing optical system 111i may switch a state of the wedge-shaped prism 1115i between a state in which the wedge-shaped prism 1115i is positioned in the optical paths of the plurality of processing lights EL1 and a state in which the wedge-shaped prism 1115i is positioned at a position that is away from the optical paths of the plurality of processing lights EL1. FIG. 31 illustrates the state in which the wedge-shaped prism 1115i is positioned in the optical paths of the plurality of processing lights EL1. On the other hand, FIG. 32 illustrates the state in which the wedge-shaped prism 1115i is positioned at the position that is away from the optical paths of the plurality of processing lights EL1 (namely, the wedge-shaped prism 1115i is not positioned in the optical paths of the plurality of processing lights EL1). As illustrated in FIG. 31 and FIG. 32, in a case where the wedge-shaped prism 1115i is positioned in the optical paths of the plurality of processing lights EL1, the passing position of the processing light EL1 on the pupil plane of at least one of the optical systems 1112h and 1113h is changed, compared to a case where the wedge-shaped prism 1115i is not positioned in the optical paths of the plurality of processing lights EL1. As a result, the irradiation positions of the plurality of processing lights EL1 on the workpiece W changes, and therefore the interference area IA moves on the workpiece W. Namely, the interference fringe IS moves.

A wedge angle α of the wedge-shaped prism 1115i may be determined based on the passing position of the processing light EL1 corresponding to the zeroth-order diffracted light and the passing position of the processing light EL1 corresponding to the highest-order diffracted light (in the ninth example embodiment, Kth-order diffracted light (K is an integer that is equal to or larger than 1)). Specifically, as illustrated in FIG. 33, a distance (so-called a height) dis between the passing position of the processing light EL1 corresponding to the zeroth-order diffracted light on the wedge-shaped prism 1115i and the passing position of the processing light EL1 corresponding to the fourth-order diffracted light on the wedge-shaped prism 1115i is calculated by an equation 3 of "focal length f2 of the optical system 1113h × K ×λ / cycle P of the interference fringe IS". Moreover, since the phase difference added to the processing light EL1 corresponding to the Kth-order diffracted light is Kλ/2 as described above, a sag amount Sag at a position through which the processing light EL1 corresponding to the fourth-order diffracted light passes on the wedge-shaped prism 1115i is calculated by an equation 4 of "Kλ/(2(n-1))". As a result, the wedge angle α may be set to a value determined by an equation 5 of "α = arctan (Sag/dis)".

Thus, the processing system SYSi of the ninth example embodiment can move the interference fringe IS appropriately. Therefore, the processing system SYSi can form the riblet structure RB by performing the multi-patterning that forms, in the same area on the workpiece W, the plurality of interference fringes IS whose phases are changed.

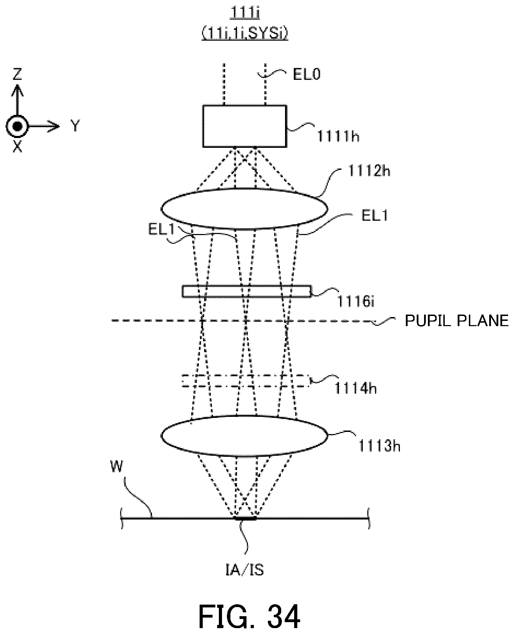

Incidentally, in a case where the wedge-shaped prism 1115i is not positioned in the optical paths of the plurality of processing lights EL1, a parallel plate 1116i may be positioned at a position that is the same as the position at which the wedge-shaped prism 1115i was placed, as illustrated in FIG. 34. In this case, an effect of aberration is reduced.

Moreover, even in ninth example embodiment, the processing optical system 111i may change the cycle of the interference fringe IS by exchanging the mask 1111h, as with the eighth embodiment. However, when the mask 1111h is exchanged, there is a possibility that the optical path of the processing light EL1 moves along a direction that intersects the optical path of the processing light EL1 (specifically, a direction that intersects the optical axes of the optical systems 1112h and 1113h, for example, the Y-axis direction in FIG. 25). As a result, there is a possibility that an optimal value of the wedge angle α of the wedge-shaped prism 1115i described above varies. Therefore, the processing optical system 111i may exchange the wedge-shaped prism 1115i that is positioned in the optical paths of the plurality of processing lights EL1 with the wedge-shaped prisms 1115i having an appropriate wedge angle α in accordance with the exchange of the mask 1111h.

Alternatively, in a case where at least one of the optical systems 1112h and 1113h includes a zoom lens, the processing optical system 111i may change the cycle of the interference fringe IS by changing a magnification of the zoom lens. However, in a case where the optical system 1112h includes the zoom lens, there is a possibility that the optical path of the processing light EL1 moves along a direction that intersects the optical path of the processing light EL1 (specifically, a direction that intersects the optical axes of the optical systems 1112h and 1113h, for example, the Y-axis direction in FIG. 25) due to the change of the magnification of the zoom lens. Therefore, the processing optical system 111i may exchange the wedge-shaped prism 1115i that is positioned in the optical paths of the plurality of processing lights EL1 with the wedge-shaped prisms 1115i having an appropriate wedge angle α in accordance with the change of the magnification of the zoom lens, as with a case where the mask 1111h is exchanged.

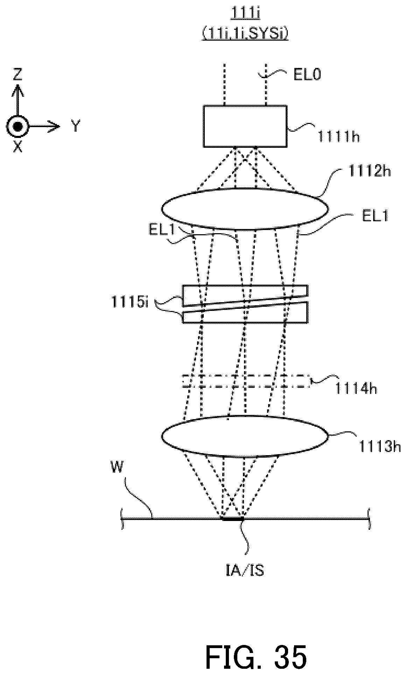

The processing optical system 111i may include a pair of wedge-shaped prisms 1115i, as illustrated in FIG. 35. In this case, the processing optical system 111i may rotate the pair of wedge-shaped prisms 1115i around a rotational axis along an optical axis thereof. The processing optical system 111i may rotate the pair of wedge-shaped prisms 1115i around a rotational axis that is inclined with respect to the optical axis thereof (for example, a rotational axis along a normal line of a surface of the wedge-shaped prisms 1115i that is inclined with respect to the optical axis thereof). Even in this case, the passing position of the processing light EL1 on the pupil plane of at least one of the optical systems 1112h and 1113h is changed due to the rotation of the pair of wedge-shaped prisms 1115i. As a result, the processing optical system 111i can move the interference fringe IS.

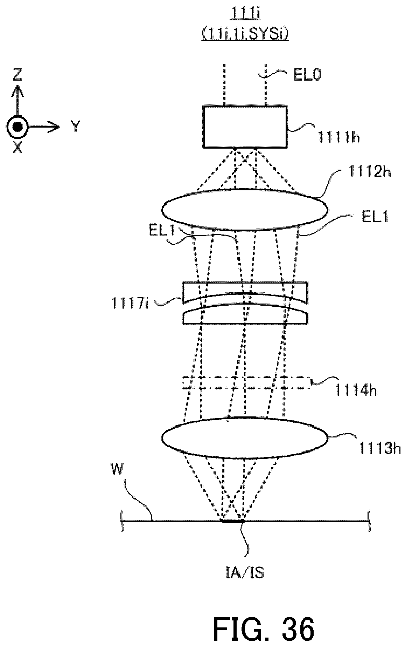

The processing optical system 111i may include an apex angle variable prism 1117i instead of the wedge-shaped prism 1115i, as illustrated in FIG. 36. In this case, the processing optical system 111i may change an apex angle of the apex angle variable prism 1117i. Even in this case, the passing position of the processing light EL1 on the pupil plane of at least one of the optical systems 1112h and 1113h is changed due to the change of the apex angle. As a result, the processing optical system 111i can move the interference fringe IS.

In a case where the optical system 1112h includes a plurality of lenses, the processing optical system 111i may shift the interference fringe IS by decentering at least one of the plurality of lenses of the optical system 1112h. The processing optical system 111i may tilt at least one of the plurality of lenses of optical system 1112h. Even in this case, the passing position of the processing light EL1 on the pupil plane of at least one of the optical systems 1112h and 1113h is changed due to the decentering and / or the tilt of the lens. As a result, the processing optical system 111i can move the interference fringe IS. Incidentally, even in a case where the optical system 1113h includes a plurality of lenses, the processing optical system 111i may decenter and / or tilt at least one of the plurality of lenses of the optical system 1113h,

### (10) Modified Example

### (10-1) First Modified Example

As described above, the head driving system 12 can move the interference area IA on the workpiece W by moving the processing head 11. Similarly, the stage driving system 14 can move the interference area IA on the workpiece W by moving the stage 13. Therefore, , the processing system SYS may move the interference area IA by using at least one of the head driving system 12 and the stage driving system 14 in addition to moving the interference area IA by using the processing optical system 111 (alternatively, the processing optical system 111b, 111c or 111d, the same is applied in the first modified example).

For example, the processing system SYS may move the interference area IA in the pitch direction of the interference fringe IS by using the processing optical system 111 and then moving the interference area IA in the pitch direction of the interference fringe IS by using at least one of the head driving system 12 and the stage driving system 14. For example, the processing system SYS may move the interference area IA in the pitch direction of the interference fringe IS by using the processing optical system 111 and then moving the interference area IA in the extending direction of the interference fringe IS by using at least one of the head driving system 12 and the stage driving system 14. For example, the processing system SYS may move the interference area IA in the extending direction of the interference fringe IS by using the processing optical system 111 and then moving the interference area IA in the pitch direction of the interference fringe IS by using at least one of the head driving system 12 and the stage driving system 14. For example, the processing system SYS may move the interference area IA in the extending direction of the interference fringe IS by using the processing optical system 111 and then moving the interference area IA in the extending direction of the interference fringe IS by using at least one of the head driving system 12 and the stage driving system 14. For example, the processing system SYS may move the interference area IA in the pitch direction of the interference fringe IS by using at least one of the head driving system 12 and the stage driving system 14 and then moving the interference area IA in the pitch direction of the interference fringe IS by using the processing optical system 111. For example, the processing system SYS may move the interference area IA in the pitch direction of the interference fringe IS by using at least one of the head driving system 12 and the stage driving system 14 and then moving the interference area IA in the extending direction of the interference fringe IS by using the processing optical system 111. For example, the processing system SYS may move the interference area IA in the extending direction of the interference fringe IS by using at least one of the head driving system 12 and the stage driving system 14 and then moving the interference area IA in the pitch direction of the interference fringe IS by using the processing optical system 111. For example, the processing system SYS may move the interference area IA in the extending direction of the interference fringe IS by using at least one of the head driving system 12 and the stage driving system 14 and then moving the interference area IA in the extending direction of the interference fringe IS by using the processing optical system 111.

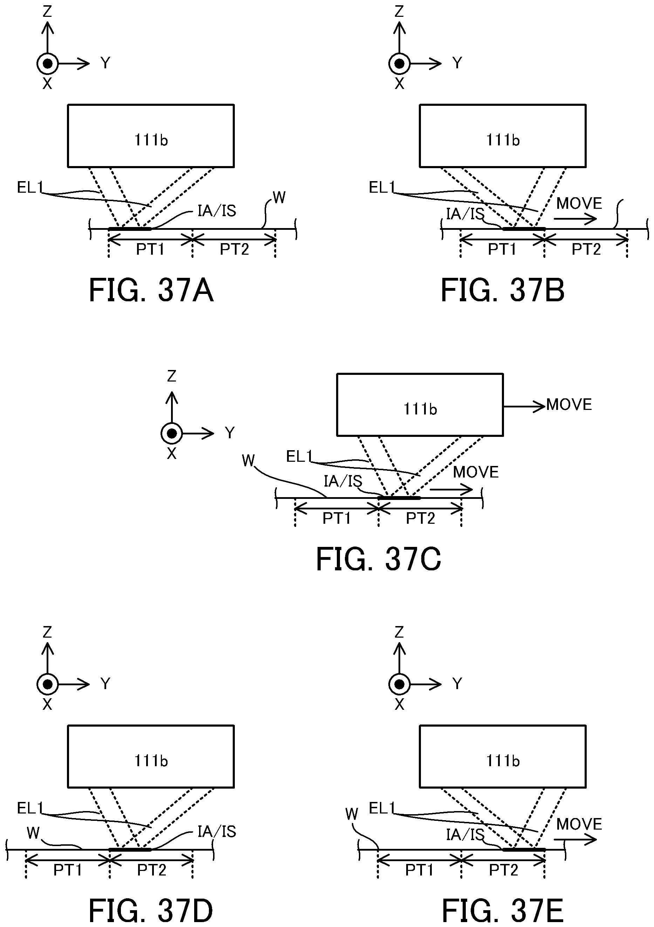

As one specific example, as illustrated in FIG. 37A and FIG. 37B, the processing system SYSb may firstly move the interference area IA in the pitch direction of the interference fringe IS in a first processing target area PT1 on the workpiece W by using the processing optical system 111b. As a result, the riblet structure RB is formed in the first processing target area PT1. Then, as illustrated in FIG. 37C, the processing system SYSb may move the interference area IA from the first processing target area PT1 to a second processing target area PT2 on the workpiece W by using at least one of the head driving system 12 and the stage driving system 14. Note that FIG. 37C illustrates an example in which the processing system SYSb moves the interference area IA by moving the processing head 11b (the processing optical system 111b) by using the head driving system 12. Then, as illustrated in FIG. 37D and Fig. 37E, the processing system SYSb may move the interference area IA in the pitch direction of the interference fringe IS in the second processing target area PT2 on the workpiece W by using the processing optical system 111b. As a result, the riblet structure RB is formed in the second processing target area PT2.

Even in a case where the interference area IA is moved by using at least one of the head driving system 12 and the stage driving system 14, the processing system SYS may allow the phase of the brightness and darkness in the interference area IA before it moves and the phase of the brightness and darkness in the interference area IA after it has moved to be aligned with each other, as with the case where the interference area IA is moved by using the processing optical system 111.

### (10-2) Other Modified Example

A range of a wavelength width of the processing light source 2 (namely, a range of a wavelength width of the processing light EL0 emitted by the processing light source 2) may be a narrow-bandwidth. In this case, the interference area IA in which the processing apparatus 1 forms the interference fringe IS on the workpiece W is larger, compared to a case where the range of the wavelength width of the processing light source 2 is not the narrow-bandwidth.

In the above-described description, the processing apparatus 1 includes the head driving system 12. However, the processing apparatus 1 may not include the head driving system 12. Namely, the processing head 11 may not be movable. Moreover, in the above-described description, the processing apparatus 1 includes the stage driving system 14. However, the processing apparatus 1 may not include the stage driving system 14. Namely, the stage 13 may not be movable. Alternatively, the processing apparatus 1 may not include the stage 13.

In the above-described description, the example in which the processing apparatus 1 forms the riblet structure RB on the metallic workpiece W (namely, the base member) and the example in which the processing apparatus 1 forms the riblet structure RB on a coat coating the surface of the workpiece W are described. However, the processing performed by the processing apparatus 1 is not limited to the examples described above. For example, the processing apparatus 1 may form the riblet structure RB on the surface of the workpiece W, and the surface of the workpiece W on which the riblet structure RB has been formed may be coated with a coat. For example, in a case where the processing apparatus 1 forms the riblet structure RB on the coat coating on the surface of the workpiece W, the coat on which the riblet structure RB has been formed may be further coated with another coat. In both examples, the riblet structure RB may be coated with the coat. In this case, a thickness of the coat may be determined so that the function of the riblet structure RB is not reduced by the coat coating the riblet structure RB. For example, the thickness of the coat may be determined so that the riblet structure RB is not buried in the coat, because there is a possibility that the function of the riblet structure RB is reduced by the coat in a case where the riblet structure RB is buried in the coat. The coat may be formed along the shape of the riblet structure RB (for example, along the convex structure 81 or the groove structure 82) so that the function of the riblet structure RB is not reduced by the coat coating the riblet structure RB.

The processing apparatus 1 may perform an additive manufacturing to add a new structural object to the workpiece W by irradiating the workpiece W with the processing light EL, in addition to or instead of the subtractive manufacturing. In this case, the processing apparatus 1 may form the above-described riblet structure RB on the surface of the workpiece W by performing the additive manufacturing. Alternatively, the processing apparatus 1 may perform a machining-processing for processing the workpiece W by contacting the workpiece W with a tool, in addition to or instead of at least one of the subtractive manufacturing and the additive manufacturing. In this case, the processing apparatus 1 may form the above-described riblet structure RB on the surface of the workpiece W by performing the machining-processing.

In the above-described description, the processing system SYS forms the riblet structure RB that has the function of reducing the resistance of the surface of the workpiece W to the fluid. However, the processing system SYS may form, on the workpiece W, a structure that has a function different from the function of reducing the resistance of the surface of the workpiece W to the fluid. For example, the processing system SYS may form, on the workpiece W, a riblet structure that reduces noise generated when the fluid and the surface of the workpiece W relative move. For example, the processing system SYS may form, on the workpiece W, a riblet structure that generates swirl relative to the flow of the fluid on the surface of the workpiece W. For example, the processing system SYS may form, on the workpiece W, a structure that provides hydrophobic property to the surface of the workpiece W.

In the above described description, the processing system SYS forms the riblet structure RB on the surface of the workpiece W. However, the processing system SYS may form any structure having any shape on the surface of the workpiece W. A structure that generates a swirl relative to a flow of the fluid on the surface of the workpiece W is one example of any structure. A structure that provides hydrophobic property to the surface of the workpiece W is one example of any structure. A fine texture structure (typically, a concave and convex structure including a land structure and a groove structure) that is formed regularly or irregularly in a micro / nanometer order is one example of any structure. The fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improves an adherence to a layer formed on a surface, a concave and convex structure for reducing a friction resistance, and so on. Even in this case, the convex structure included in the concave and convex structure may have a structure that is same as that of the convex structure 81 included in the riblet structure RB described above. The groove structure included in the concave and convex structure may have a structure that is same as that of the groove structure 82 included in the riblet structure RB described above. Note that the fine texture structure may not have any function.

In the above-described description, the processing system SYS forms the riblet structure RB on the surface of the workpiece W. However, the processing system SYS may form a mold for transfer-printing the riblet structure RB to the surface of the workpiece W. In this case, the workpiece W may be a surface of the movable object or may be a film that is allowed to be pasted in the movable object.

In the above described description, the processing system SYS processes the workpiece W by irradiating the workpiece W with the processing lights EL. However, the processing system SYS may process the workpiece W by irradiating the workpiece W with any energy beam that is different from the light. In this case, the processing system SYS may include a beam irradiation apparatus that is configured to emit any energy beam in addition to or instead of the processing light source 2. At least one of a charged particle beam, an electromagnetic wave and the like is one example of any energy beam. A least one of an electron beam, an ion beam and the like is one example of the charged particle beam.

In the above-described description, the processing system SYS that is configured to process the workpiece W by irradiating the workpiece W with the processing light EL is described as one example. However, the above-described example embodiment may be applied to an apparatus that forms a light interference pattern on the workpiece W that is the object, an illumination apparatus as one example. For example, the above-described example embodiment may be applied to at least one of a projection apparatus that forms a projection pattern of a measurement apparatus (a 3D scanner) disclosed in EP3950209A1, a projection part of a three-dimensional shape measurement system disclosed in US2017/0176178A1, and so on.

### (11) Supplementary Note

Regarding the above described example embodiment, below described Supplementary notes are further disclosed.

### [Supplementary Note 1]

A processing apparatus that performs a riblet processing on a surface of an object by using light from a light source, wherein
the processing apparatus includes:
an interference optical system that forms an interference fringe on the surface of the object by irradiating the object with a plurality of processing lights, which are generated by dividing the light from the light source, from different incident directions, respectively;
a movement apparatus that moves the plurality of processing lights, which propagate from a terminal optical element of the interference optical system toward the object, relative to the terminal optical element in a direction intersecting an optical axis of the interference optical system; and
an optical characteristic change apparatus that changes a characteristic of at least one processing light of the plurality of processing lights in accordance with a movement of the plurality of processing lights.

### [Supplementary Note 2]

The processing apparatus according to the Supplementary Note 1, wherein
the movement apparatus moves the plurality of processing lights in a pitch direction of the interference fringe,
the optical characteristic change apparatus changes a difference in phase between two processing lights of the plurality of processing lights.

### [Supplementary Note 3]

The processing apparatus according to the Supplementary Note 2, wherein
the movement apparatus moves the interference fringe formed in a first area on the surface of the object to a second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

### [Supplementary Note 4]

The processing apparatus according to the Supplementary Note 3, wherein
the first area and the second area are adjacent to each other.

### [Supplementary Note 5]

The processing apparatus according to the Supplementary Note 3 or 4, wherein
the first area and the second area are adjacent partially overlaps with each other.

### [Supplementary Note 6]

The processing apparatus according to any one of the Supplementary Notes 3 to 5, wherein
the optical characteristic change apparatus changes the difference in phase based on a distance from the optical axis of the interference optical system to an area in which the interference fringe is formed.

### [Supplementary Note 7]

The processing apparatus according to any one of the Supplementary Notes 3 to 6, wherein
the optical characteristic change apparatus changes the difference in phase within a phase range from 0 to 2π.

### [Supplementary Note 8]

The processing apparatus according to any one of the Supplementary Notes 1 to 7, wherein
the optical characteristic change apparatus includes: a first phase adjustment optical system that is positioned in an optical path of first processing light of the plurality of processing lights and that is configured to adjust a phase of the first processing light; and a second phase adjustment optical system that is positioned in an optical path of second processing light, which is different from the first processing light, of the plurality of processing lights and that is configured to adjust a phase of the second processing light.

### [Supplementary Note 9]

The processing apparatus according to the Supplementary Note 8, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

### [Supplementary Note 10]

The processing apparatus according to the Supplementary Note 9, wherein
the movement apparatus moves the first and second processing lights that propagate from the terminal optical element toward the object by changing incident positions of the first and second processing lights entering the first and second condensing optical systems.

### [Supplementary Note 11]

The processing apparatus according to any one of the Supplementary Notes 1 to 10, wherein
the movement apparatus moves the plurality of processing lights in an intersecting direction that intersect a pitch direction of the interference fringe.

### [Supplementary Note 12]

The processing apparatus according to the Supplementary Note 11, wherein
the optical characteristic change apparatus changes an intensity of at least one processing light of the plurality of processing lights in accordance with a movement of the plurality of processing lights in the intersecting direction.

### [Supplementary Note 13]

The processing apparatus according to the Supplementary Note 12, wherein
the interference optical system includes: an intersecting optical system that allows the plurality of processing lights to intersect each other at the surface of the object or near the surface of the object,
the movement apparatus changes incident positions of the plurality of processing lights entering the intersecting optical system along the intersecting direction.

### [Supplementary Note 14]

The processing apparatus according to the Supplementary Note 13, wherein
the movement apparatus changes incident angles of the plurality of processing lights entering the intersecting optical system by moving a deflection optical system that deflects the plurality of processing lights.

### [Supplementary Note 15]

The processing apparatus according to any one of the Supplementary Notes 1 to 14, wherein
the movement apparatus changes exit position from the terminal optical element of the plurality of processing lights that propagate from the terminal optical element toward the object.

### [Supplementary Note 16]

The processing apparatus according to any one of the Supplementary Notes 1 to 15, wherein
the movement apparatus changes exit direction from the terminal optical element of the plurality of processing lights that propagate from the terminal optical element toward the object.

### [Supplementary Note 17]

A processing apparatus that performs a riblet processing on a surface of an object by using light from a light source, wherein
the processing apparatus includes:
an interference optical system that forms an interference fringe in an irradiated area by irradiating the irradiated area on the surface of the object with a plurality of processing lights, which are generated by dividing the light from the light source;
a movement apparatus that moves the irradiated area in a direction intersecting an optical axis of the interference optical system; and
an optical characteristic change apparatus that changes a characteristic of at least one processing light of the plurality of processing lights in accordance with a movement of the irradiated area.

### [Supplementary Note 18]

The processing apparatus according to the Supplementary Note 17, wherein
the movement apparatus moves the irradiated area in a pitch direction of the interference fringe,
the optical characteristic change apparatus changes a difference in phase between two processing lights of the plurality of processing lights.

### [Supplementary Note 19]

The processing apparatus according to the Supplementary Note 18, wherein
the movement apparatus moves the irradiated area from a first area on the surface of the object to a second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

### [Supplementary Note 20]

The processing apparatus according to the Supplementary Note 19, wherein
the first area and the second area are adjacent to each other.

### [Supplementary Note 21]

The processing apparatus according to the Supplementary Note 19 or 20, wherein
the first area and the second area are adjacent partially overlaps with each other.

### [Supplementary Note 22]

The processing apparatus according to any one of the Supplementary Notes 19 to 21, wherein
the optical characteristic change apparatus changes the difference in phase based on a distance from the optical axis of the interference optical system to the irradiated area.

### [Supplementary Note 23]

The processing apparatus according to any one of the Supplementary Notes 19 to 22, wherein
the optical characteristic change apparatus changes the difference in phase within a phase range from 0 to 2π.

### [Supplementary Note 24]

The processing apparatus according to any one of the Supplementary Notes 17 to 23, wherein
the optical characteristic change apparatus includes: a first phase adjustment optical system that is positioned in an optical path of first processing light of the plurality of processing lights and that is configured to adjust a phase of the first processing light; and a second phase adjustment optical system that is positioned in an optical path of second processing light, which is different from the first processing light, of the plurality of processing lights and that is configured to adjust a phase of the second processing light.

### [Supplementary Note 25]

The processing apparatus according to the Supplementary Note 24, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

### [Supplementary Note 26]

A processing apparatus that performs a riblet processing on a surface of an object by using light from a light source, wherein
the processing apparatus includes:
an interference optical system that forms an interference fringe in an overlapped area by irradiating the overlapped area on the surface of the object with first processing light and second processing light of a plurality of processing lights, which are generated by dividing the light from the light source;
a movement apparatus that moves the overlapped area in a direction intersecting an optical axis of the interference optical system; and
an optical characteristic change apparatus that changes a characteristic of at least one processing light of the plurality of processing lights,
the movement apparatus moves the overlapped area from a first area to a second area on the surface of the object,
the first processing light with which the first area is irradiated has a first characteristic,
the first processing light with which the second area is irradiated has a second characteristic that is different from the first characteristic,
a change of the first processing light from the first characteristic to the second characteristic is performed by the optical characteristic change apparatus.

### [Supplementary Note 27]

The processing apparatus according to the Supplementary Note 26, wherein
the movement apparatus moves the overlapped area in a pitch direction of the interference fringe,
the optical characteristic change apparatus changes a difference in phase between two processing lights of the plurality of processing lights.

### [Supplementary Note 28]

The processing apparatus according to the Supplementary Note 27, wherein
the movement apparatus moves the overlapped area from the first area on the surface of the object to the second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

### [Supplementary Note 29]

The processing apparatus according to the Supplementary Note 28, wherein
the first area and the second area are adjacent to each other.

### [Supplementary Note 30]

The processing apparatus according to the Supplementary Note 28 or 29, wherein
the first area and the second area are adjacent partially overlaps with each other.

### [Supplementary Note 31]

The processing apparatus according to any one of the Supplementary Notes 28 to 30, wherein
the optical characteristic change apparatus changes the difference in phase based on a distance from the optical axis of the interference optical system to the overlapped area.

### [Supplementary Note 32]

The processing apparatus according to any one of the Supplementary Notes 28 to 31, wherein
the optical characteristic change apparatus changes the difference in phase within a phase range from 0 to 2π.

### [Supplementary Note 33]

The processing apparatus according to any one of the Supplementary Notes 26 to 32, wherein
the optical characteristic change apparatus includes: a first phase adjustment optical system that is positioned in an optical path of the first processing light of the plurality of processing lights and that is configured to adjust a phase of the first processing light; and a second phase adjustment optical system that is positioned in an optical path of the second processing light, which is different from the first processing light, of the plurality of processing lights and that is configured to adjust a phase of the second processing light.

### [Supplementary Note 34]

The processing apparatus according to the Supplementary Note 33, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

### [Supplementary Note 35]

The processing apparatus according to any one of the Supplementary Notes 26 to 34, wherein
a movement of the overlapped area from the first area to the second area is performed without changing a relative positional relationship between the object and a terminal optical element of the interference optical system.

### [Supplementary Note 36]

The processing apparatus according to any one of the Supplementary Notes 26 to 35, wherein
the movement apparatus is a first movement apparatus,
the processing apparatus further includes a second movement apparatus that moves the overlapped area on the surface of the object by changing the relative positional relationship between the object and the interference optical system.

### [Supplementary Note 37]

A processing apparatus that performs a riblet processing on a surface of an object by using light from a light source, wherein
the processing apparatus includes:
an interference optical system that forms an interference fringe in an irradiated area by irradiating the irradiated area on the surface of the object with a plurality of processing lights, which are generated by dividing the light from the light source; and
an interference fringe movement apparatus that moves a bright part and a dark part of the interference fringe in the irradiated area by changing a phase of at least one processing light of the plurality of processing lights.

### [Supplementary Note 38]

A processing apparatus that performs a riblet processing on a surface of an object by using light from a light source, wherein
the processing apparatus includes:
an interference optical system that forms an interference fringe in an irradiated area by irradiating the irradiated area on the surface of the object with a plurality of processing lights, which are generated by dividing the light from the light source; and
an optical characteristic change apparatus that changes a phase of at least one processing light of the plurality of processing lights,
a bright part and a dark part of the interference fringe are moved in the irradiated area by using the optical characteristic change apparatus to change the phase of at least one processing light of the plurality of processing lights.

### [Supplementary Note 39]

The processing apparatus according to the Supplementary Note 38 further including an interference fringe movement apparatus that includes the optical characteristic change apparatus and that moves the bright part and the dark part of the interference fringe in the irradiated area by changing the phase of at least one processing light of the plurality of processing lights.

### [Supplementary Note 40]

The processing apparatus according to the Supplementary Note 37 or 39, wherein
the interference fringe movement apparatus includes a light dividing apparatus that divides the light from the light source to generate the plurality of processing lights,
the light dividing apparatus moves the bright part and the dark part of the interference fringe in the irradiated area by changing a difference in phase between two processing lights of the plurality of processing lights.

### [Supplementary Note 41]

The processing apparatus according to the Supplementary Note 37, 39 or 40, wherein
the interference fringe movement apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved in the irradiated area by changing the sonic standing wave by the light modulator.

### [Supplementary Note 42]

The processing apparatus according to the Supplementary Note 41, wherein
the light modulator changes a wavelength of the sonic standing wave generated the sonic propagation path

### [Supplementary Note 43]

The processing apparatus according to the Supplementary Note 42, wherein
the interference fringe is formed in the irradiated area to process the object by setting the wavelength of the sonic standing wave generated in the sonic propagation path to be a first wavelength, and then
the interference fringe is formed in the irradiated area to process the object by setting the wavelength of the sonic standing wave generated in the sonic propagation path to be a second wavelength that is different from the first wavelength.

### [Supplementary Note 44]

The processing apparatus according to any one of the Supplementary Notes 37 and 39 to 43, wherein
the interference fringe movement apparatus includes a phase change element that is allowed to be positioned in an optical path of the at least one processing light and that is configured to change a phase of the at least one processing light,
the interference fringe movement apparatus changes the phase of the at least one processing light (i) by switching a state of the phase change element between a state in which the phaser change element is positioned in the optical path of the at least one processing light and a state in which the phaser change element is positioned at a position that is away from the optical path of the at least one processing light, (ii) by switching the phase change element positioned in the optical path of the at least one processing light between a first phase change element that is configured to change the phase of the at least one processing light by a first phase amount and a second phase change element that is configured to change the phase of the at least one processing light by a second phase amount that is different from the first phase amount, and / or (iii) by switching a state of the phase change element between a state in which the phase of the at least one processing light is changeable by the first phase amount and a state in which the phase of the at least one processing light is changeable by the second phase amount.

### [Supplementary Note 45]

The processing apparatus according to any one of the Supplementary Notes 37 and 39 to 44, wherein
the interference fringe movement apparatus includes a wedge-shaped prism that is allowed to be positioned in an optical path of the at least one processing light,
the interference fringe movement apparatus changes the phase of the at least one processing light (i) by switching a state of the wedge-shaped prism between a state in which the wedge-shaped prism is positioned in the optical path of the at least one processing light and a state in which the wedge-shaped prism is positioned at a position that is away from the optical path of the at least one processing light, and / or (ii) by rotating the wedge-shaped prism.

### [Supplementary Note 46]

The processing apparatus according to any one of the Supplementary Notes 37 and 39 to 45, wherein
the interference fringe movement apparatus includes an apex angle variable prism whose apex angle is changeable,
the interference fringe movement apparatus changes the phase of the at least one processing light by changing the apex angle of the apex angle variable prism.

### [Supplementary Note 47]

The processing apparatus according to any one of the Supplementary Notes 37 to 46 further including a mask that is configured to generate a plurality of diffracted lights as the plurality of processing lights by diffracting the light from the light source.

### [Supplementary Note 48]

The processing apparatus according to the Supplementary Note 47, wherein
the mask includes at least one of a grayscale mask and a phase shift mask.

### [Supplementary Note 49]

A processing apparatus that performs a riblet processing on a surface of an object by using light from a light source, wherein
the processing apparatus includes:
an interference optical system that forms an interference fringe in an irradiated area by irradiating the irradiated area on the surface of the object with a plurality of processing lights, which are generated by dividing the light from the light source; and
an interference fringe movement apparatus that moves a bright part and a dark part of the interference fringe in the irradiated area by changing a characteristic of at least one processing light of the plurality of processing lights.

### [Supplementary Note 50]

A processing apparatus that performs a riblet processing on a surface of an object by using light from a light source, wherein
the processing apparatus includes:
an interference optical system that forms an interference fringe in an irradiated area by irradiating the irradiated area on the surface of the object with a plurality of processing lights, which are generated by dividing the light from the light source; and
an optical characteristic change apparatus that changes a characteristic of at least one processing light of the plurality of processing lights,
a bright part and a dark part of the interference fringe are moved in the irradiated area by using the optical characteristic change apparatus to change the characteristic of at least one processing light of the plurality of processing lights.

### [Supplementary Note 51]

The processing apparatus according to the Supplementary Note 49, wherein
the interference fringe movement apparatus includes a light dividing apparatus that divides the light from the light source to generate the plurality of processing lights,
the light dividing apparatus moves the bright part and the dark part of the interference fringe in the irradiated area by changing a difference in phase between two processing lights of the plurality of processing lights.

### [Supplementary Note 52]

The processing apparatus according to the Supplementary Note 50, wherein
the optical characteristic change apparatus includes a light dividing apparatus that divides the light from the light source to generate the plurality of processing lights,
the light dividing apparatus moves the bright part and the dark part of the interference fringe in the irradiated area by changing a difference in phase between two processing lights of the plurality of processing lights.

### [Supplementary Note 53]

The processing apparatus according to the Supplementary Note 49 or 51, wherein
the interference fringe movement apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved in the irradiated area by changing the sonic standing wave by the light modulator.

### [Supplementary Note 54]

The processing apparatus according to the Supplementary Note 50 or 52, wherein
the optical characteristic change apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved in the irradiated area by changing the sonic standing wave by the light modulator.

### [Supplementary Note 55]

The processing apparatus according to the Supplementary Note 53 or 54, wherein
the light modulator changes a wavelength of the sonic standing wave generated the sonic propagation path

### [Supplementary Note 56]

The processing apparatus according to the Supplementary Note 55, wherein
the interference fringe is formed in the irradiated area to process the object by setting the wavelength of the sonic standing wave generated in the sonic propagation path to be a first wavelength, and then
the interference fringe is formed in the irradiated area to process the object by setting the wavelength of the sonic standing wave generated in the sonic propagation path to be a second wavelength that is different from the first wavelength.

### [Supplementary Note 57]

A processing apparatus that performs a riblet processing on a surface of an object by using light from a light source, wherein
the processing apparatus includes:
an interference optical system that forms an interference fringe including a bright part and a dark part on the surface of the object by irradiating the object with a plurality of processing lights, which are generated by dividing the light from the light source, from different incident directions, respectively; and
an interference fringe movement apparatus that moves the bright part and the dark part of the interference fringe by changing a characteristic of at least one processing light of the plurality of processing lights.

### [Supplementary Note 58]

A processing apparatus that performs a riblet processing on a surface of an object by using light from a light source, wherein
the processing apparatus includes:
an interference optical system that forms an interference fringe including a bright part and a dark part on the surface of the object by irradiating the object with a plurality of processing lights, which are generated by dividing the light from the light source, from different incident directions, respectively; and
an optical characteristic change apparatus that changes a characteristic of at least one processing light of the plurality of processing lights,
the bright part and the dark part of the interference fringe are moved by using the optical characteristic change apparatus to change the characteristic of at least one processing light of the plurality of processing lights.

### [Supplementary Note 59]

The processing apparatus according to the Supplementary Note 57, wherein
the interference fringe movement apparatus includes a light dividing apparatus that divides the light from the light source to generate the plurality of processing lights,
the light dividing apparatus moves the bright part and the dark part of the interference fringe by changing a difference in phase between two processing lights of the plurality of processing lights.

### [Supplementary Note 60]

The processing apparatus according to the Supplementary Note 58, wherein
the optical characteristic change apparatus includes a light dividing apparatus that divides the light from the light source to generate the plurality of processing lights,
the light dividing apparatus moves the bright part and the dark part of the interference fringe by changing a difference in phase between two processing lights of the plurality of processing lights.

### [Supplementary Note 61]

The processing apparatus according to the Supplementary Note 57 or 59, wherein
the interference fringe movement apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved by changing the sonic standing wave by the light modulator.

### [Supplementary Note 62]

The processing apparatus according to the Supplementary Note 58 or 60, wherein
the optical characteristic change apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved by changing the sonic standing wave by the light modulator.

### [Supplementary Note 63]

The processing apparatus according to the Supplementary Note 61 or 62, wherein
the light modulator changes a wavelength of the sonic standing wave generated the sonic propagation path

### [Supplementary Note 64]

The processing apparatus according to the Supplementary Note 63, wherein
the interference fringe is formed in the irradiated area to process the object by setting the wavelength of the sonic standing wave generated in the sonic propagation path to be a first wavelength, and then
the interference fringe is formed in the irradiated area to process the object by setting the wavelength of the sonic standing wave generated in the sonic propagation path to be a second wavelength that is different from the first wavelength.

### [Supplementary Note 65]

An illumination apparatus comprising:
a light modulator that is positioned in a light beam from a light source and in which a sonic propagation path is formed in a direction intersecting the light beam;
a sonic standing wave generation member that generates a sonic standing wave in the sonic propagation path by supplying, to the light modulator, a driving signal for vibrating a medium of the sonic propagation path; and
an interference optical system that forms an interference fringe on an object by allowing diffracted components, which are different from each other, of the light beam passing through the sonic propagation path,
wherein
the sonic standing wave generation member changes a wavelength of the sonic standing wave in a predetermined pattern to change a shape of the interference fringe,
a position at which the sonic propagation path is irradiated with the light beam includes a position that is determined based on a length of the sonic propagation path × any integer (wherein, except the number of times of switching) / the number of times of switching, in a case where the number of times of changing the phase is a prime number.

### [Supplementary Note 66]

The illumination apparatus according to the Supplementary Note 65, wherein
the position at which the sonic propagation path is irradiated with the light beam includes a position that is determined based on the length of the sonic propagation path × a number not including a prime factor of the number of times of switching / the number of times of switching, in a case where the number of times of changing the phase is not a prime number.

### [Supplementary Note 67]

The illumination apparatus according to the Supplementary Note 65 or 66, wherein
the light beam that is effective to contribute the interference fringe passes through a predetermined partial area that is away from both end pars of the sonic propagation path,
the phase of the interference fringe is changed by changing the wavelength of the sonic standing wave.

### [Supplementary Note 68]

The illumination apparatus according to any one of the Supplementary Notes 65 to 67, wherein
the light modulator includes a plurality of sonic propagation paths extending in directions that are different from each other,
the sonic standing wave generation member generates the sonic standing wave in one of the plurality of sonic propagation paths,
the sonic propagation path in which the sonic standing wave is generates is switched between the plurality of sonic propagation paths.

### [Supplementary Note 69]

A processing apparatus that processes a surface of an object by using light from a light source, wherein
the processing apparatus includes:
an interference optical system that forms an interference fringe on a surface of an object by irradiating the object with first and second processing lights, which are generated by dividing the light from the light source, from different incident directions, respectively; and
a movement optical system that moves the interference fringe on the surface of the object.

### [Supplementary Note 70]

The processing apparatus according to the Supplementary Note 69, wherein
the movement optical system moves the interference fringe in a state where a positional relationship between the object and the interference optical system is fixed.

### [Supplementary Note 71]

The processing apparatus according to the Supplementary Note 69 or 70, wherein
the movement optical system includes a dividing optical system that divided the light from the light source to generate the first and second processing lights.

### [Supplementary Note 72]

The processing apparatus according to the Supplementary Note 71, wherein
the dividing optical system includes a light modulator that is positioned in an optical path of the light from the light source and in which a sonic propagation path for generating a sonic standing wave is arranged in a direction intersecting the optical path,
the light modulator moves the interference fringe by changing the generated sonic standing wave.

### [Supplementary Note 73]

The processing apparatus according to the Supplementary Note 72, wherein
the light modulator moves the interference fringe by changing a wavelength of the generated sonic standing wave.

### [Supplementary Note 74]

A processing apparatus that processes a surface of an object by using light from a light source, wherein
the processing apparatus includes:
an interference optical system that forms an interference fringe on a surface of an object by irradiating the object with first and second processing lights, which are generated by dividing the light from the light source, from different incident directions, respectively;
a movement apparatus that moves the interference fringe on the surface of the object; and
a control apparatus that controls a characteristic of at least one of the first and second processing lights in accordance with a movement of the interference fringe.

### [Supplementary Note 75]

The processing apparatus according to the Supplementary Note 74, wherein
the movement apparatus moves the interference fringe along an intersecting direction that intersect an extending direction along which the interference fringe extends.

### [Supplementary Note 76]

The processing apparatus according to the Supplementary Note 75, wherein
the movement apparatus moves the interference fringe formed in a first area on the surface of the object to a second area on the surface of the object that is positioned at a position different from the first area along the extending direction and that partially overlaps with the first area,
the control apparatus controls the characteristic so that a bright part is formed in the second area at a position at which the bright part of the interference fringe has been formed in the first area.

### [Supplementary Note 77]

The processing apparatus according to the Supplementary Note 75 or 76, wherein
the control apparatus controls the characteristic so that a dark part is formed in the second area at a position at which the dark part of the interference fringe has been formed in the first area.

### [Supplementary Note 78]

The processing apparatus according to any one of the Supplementary Notes 75 to 77, wherein
the characteristic includes a phase.

### [Supplementary Note 79]

The processing apparatus according to the Supplementary Note 78, wherein
the control apparatus controls the phase of at least one of the first and second processing lights based on a position at which the interference fringe is formed on the surface of the object.

### [Supplementary Note 80]

The processing apparatus according to the Supplementary Note 79, wherein
the control apparatus controls the phase of at least one of the first and second processing lights so that a difference in phase between the first and second processing lights is a desired value that is set based on the position at which the interference fringe is formed on the surface of the object.

### [Supplementary Note 81]

The processing apparatus according to the Supplementary Note 80, wherein
the control apparatus controls the phase of at least one of the first and second divided lights so that the difference in phase is within a phase range from 0 to 2π.

### [Supplementary Note 82]

The processing apparatus according to any one of the Supplementary Notes 75 to 81, wherein
the control apparatus includes: a first phase adjustment optical system that is positioned in an optical path of first processing light of the plurality of processing lights and that is configured to adjust a phase of the first processing light; and a second phase adjustment optical system that is positioned in an optical path of second processing light, which is different from the first processing light, of the plurality of processing lights and that is configured to adjust a phase of the second processing light,
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system on the object.

### [Supplementary Note 83]

The processing apparatus according to any one of the Supplementary Notes 74 to 82, wherein
the movement apparatus moves the interference fringe along an extending direction along which the interference fringe extends.

### [Supplementary Note 84]

The processing apparatus according to the Supplementary Note 83, wherein
the characteristic includes a converged position.

### [Supplementary Note 85]

The processing apparatus according to the Supplementary Note 84, wherein
the control apparatus controls the converged position of at least one of the first and second processing lights so that the converged position of each of the first and second processing lights is fixed even in a case where the interference fringe moves.

### [Supplementary Note 86]

The processing apparatus according to any one of the Supplementary Notes 83 to 85, wherein
the movement apparatus includes a deflection member that deflects the first and second processing lights.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing apparatus, which involves such changes, is also intended to be within the technical scope of the present invention.

### Description of Reference Codes

SYS processing system
1 processing apparatus
11 processing head
111, 111b, 111c processing optical system
1111 homogenizer
1112 aperture
1113 ultrasonic light modulator
1114 lens
1115 zeroth-order light cut mask
1116 lens
1117 enlargement lens
1111b beam shaping optical system
1112b, 1112c dividing optical system
11123b, 11124b phase adjustment optical system
1113b, 1113c interference optical system
11133b fθ lens
11134c, 11135c mirror
W workpiece
IA interference area
IS interference fringe
IL bright part
ID dark part

## Claims

1. A processing apparatus that performs a riblet processing on a surface of an object by using light from a light source, wherein
the processing apparatus comprises:
an interference optical system that forms an interference fringe on the surface of the object by irradiating the object with a plurality of processing lights, which are generated by dividing the light from the light source, from different incident directions, respectively;
a movement apparatus that moves the plurality of processing lights, which propagate from a terminal optical element of the interference optical system toward the object, relative to the terminal optical element in a direction intersecting an optical axis of the interference optical system; and
an optical characteristic change apparatus that changes a characteristic of at least one processing light of the plurality of processing lights in accordance with a movement of the plurality of processing lights.

2. The processing apparatus according to claim 1, wherein
the movement apparatus moves the plurality of processing lights in a pitch direction of the interference fringe,
the optical characteristic change apparatus changes a difference in phase between two processing lights of the plurality of processing lights.

3. The processing apparatus according to claim 2, wherein
the movement apparatus moves the interference fringe formed in a first area on the surface of the object to a second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

4. The processing apparatus according to claim 3, wherein
the first area and the second area are adjacent to each other.

5. The processing apparatus according to claim 3 or 4, wherein
the first area and the second area are adjacent partially overlaps with each other.

6. The processing apparatus according to any one of claims 3 to 5, wherein
the optical characteristic change apparatus changes the difference in phase based on a distance from the optical axis of the interference optical system to an area in which the interference fringe is formed.

7. The processing apparatus according to any one of claims 3 to 6, wherein
the optical characteristic change apparatus changes the difference in phase within a phase range from 0 to 2π.

8. The processing apparatus according to any one of claims 1 to 7, wherein
the optical characteristic change apparatus includes: a first phase adjustment optical system that is positioned in an optical path of first processing light of the plurality of processing lights and that is configured to adjust a phase of the first processing light; and a second phase adjustment optical system that is positioned in an optical path of second processing light, which is different from the first processing light, of the plurality of processing lights and that is configured to adjust a phase of the second processing light.

9. The processing apparatus according to claim 8, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

10. The processing apparatus according to claim 9, wherein
the movement apparatus moves the first and second processing lights that propagate from the terminal optical element toward the object by changing incident positions of the first and second processing lights entering the first and second condensing optical systems.

11. The processing apparatus according to any one of claims 1 to 10, wherein
the movement apparatus moves the plurality of processing lights in an intersecting direction that intersect a pitch direction of the interference fringe.

12. The processing apparatus according to claim 11, wherein
the optical characteristic change apparatus changes an intensity of at least one processing light of the plurality of processing lights in accordance with a movement of the plurality of processing lights in the intersecting direction.

13. The processing apparatus according to claim 12, wherein
the interference optical system includes: an intersecting optical system that allows the plurality of processing lights to intersect each other at the surface of the object or near the surface of the object,
the movement apparatus changes incident positions of the plurality of processing lights entering the intersecting optical system along the intersecting direction.

14. The processing apparatus according to claim 13, wherein
the movement apparatus changes incident angles of the plurality of processing lights entering the intersecting optical system by moving a deflection optical system that deflects the plurality of processing lights.

15. The processing apparatus according to any one of claims 1 to 14, wherein
the movement apparatus changes exit position from the terminal optical element of the plurality of processing lights that propagate from the terminal optical element toward the object.

16. The processing apparatus according to any one of claims 1 to 15, wherein
the movement apparatus changes exit direction from the terminal optical element of the plurality of processing lights that propagate from the terminal optical element toward the object.

17. A processing apparatus that performs a riblet processing on a surface of an object by using light from a light source, wherein
the processing apparatus comprises:
an interference optical system that forms an interference fringe in an irradiated area by irradiating the irradiated area on the surface of the object with a plurality of processing lights, which are generated by dividing the light from the light source;
a movement apparatus that moves the irradiated area in a direction intersecting an optical axis of the interference optical system; and
an optical characteristic change apparatus that changes a characteristic of at least one processing light of the plurality of processing lights in accordance with a movement of the irradiated area.

18. The processing apparatus according to claim 17, wherein
the movement apparatus moves the irradiated area in a pitch direction of the interference fringe,
the optical characteristic change apparatus changes a difference in phase between two processing lights of the plurality of processing lights.

19. The processing apparatus according to claim 18, wherein
the movement apparatus moves the irradiated area from a first area on the surface of the object to a second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

20. The processing apparatus according to claim 19, wherein
the first area and the second area are adjacent to each other.

21. The processing apparatus according to claim 19 or 20, wherein
the first area and the second area are adjacent partially overlaps with each other.

22. The processing apparatus according to any one of claims 19 to 21, wherein
the optical characteristic change apparatus changes the difference in phase based on a distance from the optical axis of the interference optical system to the irradiated area.

23. The processing apparatus according to any one of claims 19 to 22, wherein
the optical characteristic change apparatus changes the difference in phase within a phase range from 0 to 2π.

24. The processing apparatus according to any one of claims 17 to 23, wherein
the optical characteristic change apparatus includes: a first phase adjustment optical system that is positioned in an optical path of first processing light of the plurality of processing lights and that is configured to adjust a phase of the first processing light; and a second phase adjustment optical system that is positioned in an optical path of second processing light, which is different from the first processing light, of the plurality of processing lights and that is configured to adjust a phase of the second processing light.

25. The processing apparatus according to claim 24, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

26. A processing apparatus that performs a riblet processing on a surface of an object by using light from a light source, wherein
the processing apparatus comprises:
an interference optical system that forms an interference fringe in an overlapped area by irradiating the overlapped area on the surface of the object with first processing light and second processing light of a plurality of processing lights, which are generated by dividing the light from the light source;
a movement apparatus that moves the overlapped area in a direction intersecting an optical axis of the interference optical system; and
an optical characteristic change apparatus that changes a characteristic of at least one processing light of the plurality of processing lights,
the movement apparatus moves the overlapped area from a first area to a second area on the surface of the object,
the first processing light with which the first area is irradiated has a first characteristic,
the first processing light with which the second area is irradiated has a second characteristic that is different from the first characteristic,
a change of the first processing light from the first characteristic to the second characteristic is performed by the optical characteristic change apparatus.

27. The processing apparatus according to claim 26, wherein
the movement apparatus moves the overlapped area in a pitch direction of the interference fringe,
the optical characteristic change apparatus changes a difference in phase between two processing lights of the plurality of processing lights.

28. The processing apparatus according to claim 27, wherein
the movement apparatus moves the overlapped area from the first area on the surface of the object to the second area on the surface of the object that is positioned at a position different from the first area along the pitch direction,
the optical characteristic change apparatus changes the difference in phase so that a phase of a brightness and darkness of the interference fringe formed in the first area and a phase of a brightness and darkness of the interference fringe formed in the second area are aligned with each other.

29. The processing apparatus according to claim 28, wherein
the first area and the second area are adjacent to each other.

30. The processing apparatus according to claim 28 or 29, wherein
the first area and the second area are adjacent partially overlaps with each other.

31. The processing apparatus according to any one of claims 28 to 30, wherein
the optical characteristic change apparatus changes the difference in phase based on a distance from the optical axis of the interference optical system to the overlapped area.

32. The processing apparatus according to any one of claims 28 to 31, wherein
the optical characteristic change apparatus changes the difference in phase within a phase range from 0 to 2π.

33. The processing apparatus according to any one of claims 26 to 32, wherein
the optical characteristic change apparatus includes: a first phase adjustment optical system that is positioned in an optical path of the first processing light of the plurality of processing lights and that is configured to adjust a phase of the first processing light; and a second phase adjustment optical system that is positioned in an optical path of the second processing light, which is different from the first processing light, of the plurality of processing lights and that is configured to adjust a phase of the second processing light.

34. The processing apparatus according to claim 33, wherein
the interference optical system includes: a first condensing optical system that is positioned in an optical path of the first processing light from the first phase adjustment optical system; a second condensing optical system that is positioned in an optical path of the second processing light from the second phase adjustment optical system; and a third condensing optical system that condenses the first processing light from the first phase adjustment optical system and the second processing light from the second phase adjustment optical system so that they intersect each other at the surface of the object or near the surface of the object.

35. The processing apparatus according to any one of claims 26 to 34, wherein
a movement of the overlapped area from the first area to the second area is performed without changing a relative positional relationship between the object and a terminal optical element of the interference optical system.

36. The processing apparatus according to any one of claims 26 to 35, wherein
the movement apparatus is a first movement apparatus,
the processing apparatus further comprises a second movement apparatus that moves the overlapped area on the surface of the object by changing the relative positional relationship between the object and the interference optical system.

37. A processing apparatus that performs a riblet processing on a surface of an object by using light from a light source, wherein
the processing apparatus comprises:
an interference optical system that forms an interference fringe in an irradiated area by irradiating the irradiated area on the surface of the object with a plurality of processing lights, which are generated by dividing the light from the light source; and
an interference fringe movement apparatus that moves a bright part and a dark part of the interference fringe in the irradiated area by changing a phase of at least one processing light of the plurality of processing lights.

38. A processing apparatus that performs a riblet processing on a surface of an object by using light from a light source, wherein
the processing apparatus comprises:
an interference optical system that forms an interference fringe in an irradiated area by irradiating the irradiated area on the surface of the object with a plurality of processing lights, which are generated by dividing the light from the light source; and
an optical characteristic change apparatus that changes a phase of at least one processing light of the plurality of processing lights,
a bright part and a dark part of the interference fringe are moved in the irradiated area by using the optical characteristic change apparatus to change the phase of at least one processing light of the plurality of processing lights.

39. The processing apparatus according to claim 38 further comprising an interference fringe movement apparatus that includes the optical characteristic change apparatus and that moves the bright part and the dark part of the interference fringe in the irradiated area by changing the phase of at least one processing light of the plurality of processing lights.

40. The processing apparatus according to claim 37 or 39, wherein
the interference fringe movement apparatus includes a light dividing apparatus that divides the light from the light source to generate the plurality of processing lights,
the light dividing apparatus moves the bright part and the dark part of the interference fringe in the irradiated area by changing a difference in phase between two processing lights of the plurality of processing lights.

41. The processing apparatus according to claim 37, 39 or 40, wherein
the interference fringe movement apparatus includes a light dividing apparatus that divides the light from the light source to generate the plurality of processing lights,
the light dividing apparatus includes a light modulator that is positioned in an optical path of the light from the light source and that generates a sonic standing wave in a sonic propagation path along a direction intersecting the optical path,
the bright part and the dark part of the interference fringe are moved in the irradiated area by changing the sonic standing wave by the light modulator.

42. The processing apparatus according to claim 41, wherein
the light modulator changes a wavelength of the sonic standing wave generated the sonic propagation path

43. The processing apparatus according to claim 42, wherein
the interference fringe is formed in the irradiated area to process the object by setting the wavelength of the sonic standing wave generated in the sonic propagation path to be a first wavelength, and then
the interference fringe is formed in the irradiated area to process the object by setting the wavelength of the sonic standing wave generated in the sonic propagation path to be a second wavelength that is different from the first wavelength.

44. The processing apparatus according to any one of claims 37 and 39 to 43, wherein
the interference fringe movement apparatus includes a phase change element that is allowed to be positioned in an optical path of the at least one processing light and that is configured to change a phase of the at least one processing light,
the interference fringe movement apparatus changes the phase of the at least one processing light (i) by switching a state of the phase change element between a state in which the phaser change element is positioned in the optical path of the at least one processing light and a state in which the phaser change element is positioned at a position that is away from the optical path of the at least one processing light, (ii) by switching the phase change element positioned in the optical path of the at least one processing light between a first phase change element that is configured to change the phase of the at least one processing light by a first phase amount and a second phase change element that is configured to change the phase of the at least one processing light by a second phase amount that is different from the first phase amount, and / or (iii) by switching a state of the phase change element between a state in which the phase of the at least one processing light is changeable by the first phase amount and a state in which the phase of the at least one processing light is changeable by the second phase amount.

45. The processing apparatus according to any one of claims 37 and 39 to 44, wherein
the interference fringe movement apparatus includes a wedge-shaped prism that is allowed to be positioned in an optical path of the at least one processing light,
the interference fringe movement apparatus changes the phase of the at least one processing light (i) by switching a state of the wedge-shaped prism between a state in which the wedge-shaped prism is positioned in the optical path of the at least one processing light and a state in which the wedge-shaped prism is positioned at a position that is away from the optical path of the at least one processing light, and / or (ii) by rotating the wedge-shaped prism.

46. The processing apparatus according to any one of claims 37 and 39 to 45, wherein
the interference fringe movement apparatus includes an apex angle variable prism whose apex angle is changeable,
the interference fringe movement apparatus changes the phase of the at least one processing light by changing the apex angle of the apex angle variable prism.

47. The processing apparatus according to any one of claims 37 to 46 further comprising a mask that is configured to generate a plurality of diffracted lights as the plurality of processing lights by diffracting the light from the light source.

48. The processing apparatus according to claim 47, wherein
the mask includes at least one of a grayscale mask and a phase shift mask.
